# EUROPEAN PATENT APPLICATION

(11) **EP 4 142 398 A1**
(43) Date of publication of application: **01.03.2023**
(21) Application number: 21803300.9
(22) Date of filing: 14.05.2021
(51) Int. Cl.: H04W 72/04

(54) **COMMUNICATION METHOD AND COMMUNICATION APPARATUS**

(30) Priority: 15.05.2020 CN 202010416970
(71) Applicant: Huawei Technologies Co., Ltd., Shenzhen, Guangdong 518129 (CN)
(72) Inventor: WEN, Ronghui, Shenzhen, Guangdong 518129 (CN); YU, Zheng, Shenzhen, Guangdong 518129 (CN)
(74) Representative: Pfenning, Meinig & Partner mbB
(86) International application number: PCT/CN2021/093923
(87) International publication number: WO 2021/228247

(57) **Abstract**

Embodiments of this application disclose a communication method and apparatus, so that a terminal device monitors a control channel on a corresponding resource applicable to a terminal device of a first capability type. This can implement communication between a network device and the terminal device of the first capability type. The network device can send a control channel for a first terminal device, and the first terminal device is distinguished from a second terminal device. This can meet requirements of different types of terminal devices for control channels. For example, the first terminal device and the second terminal device share a first control resource set. This can ensure reliability of the first terminal device while minimizing impact on an optional resource of the second terminal device.

## Description

This application claims priority to Chinese Patent Application No. 202010416970.5, filed with the China National Intellectual Property Administration on May 15, 2020 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

To cope with explosive growth of mobile data traffic in the future, massive device connections of mobile communication, and various new emerging services and application scenarios, a 5th generation (fifth generation, 5G) mobile communication system emerges. For example, three types of application scenarios are defined in the 5G mobile communication system: an enhanced mobile broadband (enhanced mobile broadband, eMBB) scenario, an ultra-reliable and low-latency communication (ultra reliable and low latency communications, URLLC) scenario, and a massive machine-type communications (massive machine-type communications, mMTC) scenario.

For example, the eMBB scenario includes ultra high-definition video, augmented reality (augmented reality, AR), virtual reality (virtual reality, VR), and the like. These services mainly feature a large data transmission amount and a high transmission rate. The URLLC scenario includes tactile interactive applications such as wireless control in industrial manufacturing or production processes, motion control and remote repair of self-driving vehicles and uncrewed aerial vehicles, and remote surgery. These services mainly require ultra-high reliability and low latency of transmission, and feature a small data transmission amount and bursty data traffic. The mMTC scenario includes smart grid power distribution automation, wearable device communication, a smart city, and the like. These services mainly feature a large quantity of networked devices and a small data transmission amount. A terminal device in the mMTC scenario needs to meet requirements for low costs and long standby duration.

In the foregoing different types of application scenarios, a terminal device may have different requirements for a mobile communication system. The terminal device in the mMTC scenario may be a reduced capability (reduced capability, REDCAP) terminal device. Especially, there is no corresponding solution applicable to how the RADCAP terminal device obtains a control channel.

### SUMMARY

Embodiments of this application provide a communication method and apparatus, so that a terminal device monitors a control channel on a corresponding resource applicable to a terminal device of a first capability type. This can implement communication between a network device and the terminal device of the first capability type.

To resolve the foregoing technical problem, embodiments of this application provide the following technical solutions.

According to a first aspect, an embodiment of this application provides a communication method, including: A first terminal device receives first information from a network device, where the first information indicates a first control resource set, a quantity of resource blocks in the first control resource set is N, a quantity of resource element group bundles REG bundles in the first control resource set is W, a bandwidth supported by the first terminal device is less than a bandwidth corresponding to the N resource blocks, the bandwidth supported by the first terminal device is less than a bandwidth supported by a second terminal device, N and W are positive integers; and an aggregation level AL supported by the first terminal device includes X, and an AL supported by the second terminal device does not include X, and/or a quantity of candidate control channels supported by the first terminal device in a first search space SS set is Y1, a quantity of candidate control channels supported by the second terminal device in the first search space set is Z, and Y1 is less than or equal to Z. The first terminal device monitors a first control channel on M REG bundles in the W REG bundles or on M control channel element CCE resources corresponding to the M REG bundles, where M is less than W. In this embodiment of this application, the network device can send a control channel for the first terminal device, and the first terminal device is distinguished from the second terminal device. This can meet requirements of different types of terminal devices for control channels. For example, the first terminal device and the second terminal device share the first control resource set. This can ensure reliability of the first terminal device while minimizing impact on an optional resource of the second terminal device.

According to a second aspect, an embodiment of this application further provides a communication method, including: A network device determines a first control resource set for a first terminal device, where a quantity of resource blocks in the first control resource set is N, a quantity of resource element group bundles REG bundles in the first control resource set is W, a bandwidth supported by the first terminal device is less than a bandwidth corresponding to the N resource blocks, the bandwidth supported by the first terminal device is less than a bandwidth supported by a second terminal device, N and W are positive integers; and an aggregation level AL supported by the first terminal device includes X, and an AL supported by the second terminal device does not include X, and/or a quantity of candidate control channels supported by the first terminal device in a first search space SS set is Y, a quantity of candidate control channels supported by the second terminal device in the first search space set is Z, and Y is less than or equal to Z. The network device sends first information to the first terminal device, where the first information indicates the first control resource set. The network device sends a first control channel on M REG bundles in the W REG bundles or on M control channel element CCE resources corresponding to the M REG bundles, where M is less than W. In this embodiment of this application, the network device can send a control channel for the first terminal device, and the first terminal device is distinguished from the second terminal device. This can meet requirements of different types of terminal devices for control channels. For example, the first terminal device and the second terminal device share the first control resource set. This can ensure reliability of the first terminal device while minimizing impact on an optional resource of the second terminal device.

In a possible implementation, X includes at least one of the following values: 6, 12, 20, and 22. Different terminal devices may be distinguished by using ALs supported by terminal devices. There may be a plurality of values of X. For example, X includes at least one of the following values: 6, 12, 20, and 22. For example, an AL supported by the first terminal device may be 6, and the second terminal device does not support the AL being 6. For another example, an AL supported by the first terminal device may be 12, and the second terminal device does not support the AL being 12. For still another example, an AL supported by the first terminal device may be 20, and the second terminal device does not support the AL being 20. For yet another example, an AL supported by the first terminal device may be 22, and the second terminal device does not support the AL being 22. The network device may specifically configure, based on an application scenario, the AL supported by the first terminal device.

In a possible implementation, when a quantity 1 of symbols in the first control resource set is equal to 3, N is equal to 96, and the bandwidth supported by the first terminal device is greater than or equal to a bandwidth corresponding to N/2 resource blocks, a quantity of candidate control channels whose AL supported by the first terminal device is equal to 20 is 1, a quantity of candidate control channels whose AL supported by the first terminal device is equal to 16 is 1, a quantity of candidate control channels whose AL supported by the first terminal device is equal to 8 is 1 or 2, a quantity of candidate control channels whose AL supported by the first terminal device is equal to 4 is 2 or 3, and/or a quantity of candidate control channels whose AL supported by the first terminal device is equal to 22 is 1.

When a quantity 1 of symbols in the first control resource set is equal to 2, N is equal to 96, and the bandwidth supported by the first terminal device is greater than or equal to a bandwidth corresponding to N/2 resource blocks, a quantity of candidate control channels whose AL supported by the first terminal device is equal to 16 is 1, a quantity of candidate control channels whose AL supported by the first terminal device is equal to 12 is 1, a quantity of candidate control channels whose AL supported by the first terminal device is equal to 8 is 1 or 2, and/or a quantity of candidate control channels whose AL supported by the first terminal device is equal to 4 is 2 or 3.

When a quantity 1 of symbols in the first control resource set is equal to 1, N is equal to 96, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1.

When a quantity 1 of symbols in the first control resource set is equal to 3, N is equal to 48, and the bandwidth supported by the first terminal device is greater than or equal to a bandwidth corresponding to N/2 resource blocks, a quantity of candidate control channels whose AL supported by the first terminal device is equal to 8 is 1, and/or a quantity of candidate control channels whose AL supported by the first terminal device is equal to 4 is 1.

When a quantity 1 of symbols in the first control resource set is equal to 2, N is equal to 48, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1.

When a quantity 1 of symbols in the first control resource set is equal to 1, N is equal to 48, and the bandwidth supported by the first terminal device is greater than or equal to a bandwidth corresponding to N/2 resource blocks, a quantity of candidate control channels whose AL supported by the first terminal device is equal to 2 is 1.

When a quantity 1 of symbols in the first control resource set is equal to 3, N is equal to 96, and the bandwidth supported by the first terminal device is greater than or equal to a bandwidth corresponding to N/4 resource blocks, a quantity of candidate control channels whose AL supported by the first terminal device is equal to 12 is 1, a quantity of candidate control channels whose AL supported by the first terminal device is equal to 8 is 1, and/or a quantity of candidate control channels whose AL supported by the first terminal device is equal to 4 is 1 or 2.

When a quantity 1 of symbols in the first control resource set is equal to 2, N is equal to 96, and the bandwidth supported by the first terminal device is greater than or equal to a bandwidth corresponding to N/4 resource blocks, a quantity of candidate control channels whose AL supported by the first terminal device is equal to 8 is 1, and/or a quantity of candidate control channels whose AL supported by the first terminal device is equal to 4 is 1.

When a quantity 1 of symbols in the first control resource set is equal to 1, N is equal to 96, and the bandwidth supported by the first terminal device is greater than or equal to a bandwidth corresponding to N/4 resource blocks, a quantity of candidate control channels whose AL supported by the first terminal device is equal to 4 is 1.

When a quantity 1 of symbols in the first control resource set is equal to 3, N is equal to 48, and the bandwidth supported by the first terminal device is greater than or equal to a bandwidth corresponding to N/4 resource blocks, a quantity of candidate control channels whose AL supported by the first terminal device is equal to 6 is 1, and/or a quantity of candidate control channels whose AL supported by the first terminal device is equal to 4 is 1.

When a quantity 1 of symbols in the first control resource set is equal to 2, N is equal to 48, and the bandwidth supported by the first terminal device is greater than or equal to a bandwidth corresponding to N/4 resource blocks, a quantity of candidate control channels whose AL supported by the first terminal device is equal to 4 is 1.

When a quantity 1 of symbols in the first control resource set is equal to 1, N is equal to 48, and the bandwidth supported by the first terminal device is greater than or equal to a bandwidth corresponding to N/4 resource blocks, a quantity of candidate control channels whose AL supported by the first terminal device is equal to 2 is 1.

In the foregoing solution, the second terminal device and the first terminal device may share the first control resource set. This ensures an available resource of the first terminal device while minimizing impact on an optional resource of the second terminal device, so that the first terminal device can reliably communicate with the network device.

In a possible implementation, indexes of Y REG bundles in X REG bundles corresponding to the AL that is supported by the first terminal device and that is equal to X are {i,i+1,...,i+(Y-1)}, indexes of remaining (X-Y) REG bundles in the X REG bundles are {j,j+1,...,j+(X-Y-1)}, and i and j are positive integers.

Further, i and j meet at least one of the following cases:

When the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=16, B=32, and C=8. When X=8, A=20, B=32, and C=4. When X=8, A=16, B=36, and C=4. When X=4, A=16, B=34, and C=2. When X=4, A=20, B=34, and C=2. When X=4, A=20, B=32, and C=2. When X=4, A=22, B=34, and C=2. When X=20, A=16, B=28, and C=8. When X=22, A=16, B=32, and C=8. When X=24, A=16, B=28, and C=8.

When the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=12, B=16, and C=4. When X=12, A=12, B=20, and C=4. When X=8, A=12, B=24, and C=4. When X=8, A=12, B=20, and C=4. When X=4, A=12, B=20, and C=2. When X=4, A=14, B=22, and C=2. When X=8 and Y=8, indexes of eight REG bundles are i, i=0, 1, 2, ..., or 7, i=(n+A)mod W/2, and A={14,15,18,19,22,23,26,27}.

When the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=8, A=6, B=8, and C=2. When X=6, A=6, B=10, and C=2. When X=4, A=6, B=12, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=12, A=8, B=12, and C=4. When X=8, A=8, B=16, and C=4. When X=4, A=8 and C=4. When X=4, A=8, B=18, and C=2.

When the quantity 1 of symbols in the first control resource set is equal to 2, N is equal to 48, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=8, A=6, B=8, and C=2. When X=6, A=6, B=10, and C=2. When X=4, A=6, B=12, and C=2.

When the quantity 1 of symbols in the first control resource set is equal to 1, N is equal to 48, and the bandwidth supported by the first terminal device is greater than or equal to the bandwidth corresponding to the N/2 resource blocks, i=(n+A)mod W/2. A quantity of candidate control channels corresponding to the AL that is supported by the first terminal device and that is equal to X is C, n indicates an identifier of a cell in which the first terminal device is located, and mod indicates a modulo operation. When X=2, A=2 and C=2.

In the foregoing solution, the second terminal device and the first terminal device may share the first control resource set. This ensures an available resource of the first terminal device while minimizing impact on an optional resource of the second terminal device, so that the first terminal device can reliably communicate with the network device.

In a possible implementation, indexes of Y CCE resources in X CCE resources corresponding to the AL that is supported by the first terminal device and that is equal to X are {i,i+1,...,i+(Y-1)}, and indexes of (X-Y) CCE resources in the X CCE resources are {j,j+1,...,j+(X-Y-1)}.

Further, i and j meet at least one of the following cases:

When the quantity 1 of symbols in the first control resource set is equal to 3, N is equal to 96, and the bandwidth supported by the first terminal device is greater than or equal to the bandwidth corresponding to the N/2 resource blocks, i=(32+T+A)mod W/2, and j=(17-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=16, A=0, B=0, and C=8. When X=8, A=8, B=0, and C=4. When X=8, A=0, B=8, and C=4. When X=4, A=0, B=4, and C=2. When X=4, A=8, B=4, and C=2. When X=4, A=8, B=0, and C=2. When X=4, A=12, B=4, and C=2. When X=20, A=0, B=-8, and C=8. When X=22, A=0, B=0, and C=8. When X=24, A=0, B=-8, and C=8.

When the quantity 1 of symbols in the first control resource set is equal to 2, N is equal to 96, and the bandwidth supported by the first terminal device is greater than or equal to the bandwidth corresponding to the N/2 resource blocks, i=(24+T+A)mod W/2, and j=(17-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. Further, n indicates an identifier of a cell in which the first terminal device is located, and mod indicates a modulo operation. When X=16, A=0, B=-16, and C=4. When X=12, A=0, B=-8, and C=4. When X=8, A=0, B=0, and C=4. When X=8, A=0, B=-8, and C=4. When X=4, A=0, B=-8, and C=2. When X=4, A=4, B=-4, and C=2. When X=8 and Y=8, indexes of eight CCE resources are i, and i=0, 1, 2, 3, 4, ..., or 7. When i=0 or 1, i=(A+T)mod W/2, and A={28,30}. When i=2, 3, 4, ..., or 7, i=(A-T)mod W/2, and A={5,7,13,15,21,23}. When n mod W belongs to {2^(1-u) to (2^(1-u)+W/2-1)}, T=1. When n mod W does not belong to {2^(1-u) to (2^(1-u)+W/2-1)}, T=0.

When the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, and j=(9-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0, B=-8, and C=2. When X=6, A=0, B=-4, and C=2. When X=4, A=0, B=0, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(16+T+A)mod W/2, and j=(9-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=12, A=0, B=-8, and C=4. When X=8, A=0, B=0, and C=4. When X=4, A=0 and C=4. When X=4, A=0, B=4, and C=2.

When the quantity 1 of symbols in the first control resource set is equal to 2, N is equal to 48, and the bandwidth supported by the first terminal device is greater than or equal to the bandwidth corresponding to the N/2 resource blocks, i=(12+T+A)mod W/2, and j=(9-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0, B=-8, and C=2. When X=6, A=0, B=-4, and C=2. When X=4, A=0, B=0, and C=2.

When the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, j=(5-T+B)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=2, A=0 and C=2.

In the foregoing solution, the second terminal device and the first terminal device may share the first control resource set. This ensures an available resource of the first terminal device while minimizing impact on an optional resource of the second terminal device, so that the first terminal device can reliably communicate with the network device.

In a possible implementation, resource indexes of Y REG bundles in X REG bundles corresponding to the AL that is supported by the first terminal device and that is equal to X are {i,i+1,...i+(Y-1)}, and indexes of remaining (X-Y) REG bundles in the X REG bundles are {j,j+1,...j+(X-Y-1)}.

Further, i and j meet at least one of the following cases:

When the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=8 and C=16. When X=8, A=16 and C=8. When X=8, A=8, B=20, and C=4. When X=4, A=8, B=20, and C=2. When X=4, A=10, B=22, and C=2. When X=4, A=8, B=22, and C=2. When X=4, A=10, B=20, and C=2. When X=20, A=4 and C=20. When X=22, A=2 and C=22. When X=24, A=2, B=26, and C=22.

When the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=0 and C=16. When X=12, A=4 and C=12. When X=8, A=8 and C=8. When X=8, A=4, B=12, and C=4. When X=4, A=12, 4, or 8, and C=4. When X=4, A=10, B=14, and C=2. When X=4, A=6, B=14, and C=2.

When the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n=nCelliD, nCelliD indicates an identifier of a cell in which the first terminal device is located, and mod indicates a modulo operation. When X=8, A=6, B=8, and C=2. When X=6, A=6, B=10, and C=2. When X=4, A=6, B=12, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2. A quantity of candidate control channels corresponding to the AL that is supported by the first terminal device and that is equal to X is C, n indicates an identifier of a cell in which the first terminal device is located, and mod indicates a modulo operation. When X=12, A=0 and C=12. When X=8, A=4 and C=8. When X=4, A=8 and C=4. When X=4, A=4 and C=4.

When the quantity 1 of symbols in the first control resource set is equal to 2, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n=nCelliD, nCelliD indicates an identifier of a cell in which the first terminal device is located, and mod indicates a modulo operation. When X=8, A=0 and C=8. When X=6, A=2 and C=6. When X=4, A=4 and C=4.

When the quantity 1 of symbols in the first control resource set is equal to 1, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n=nCelliD, nCelliD indicates an identifier of a cell in which the first terminal device is located, and mod indicates a modulo operation. When X=2, A=2 and C=2.

In the foregoing solution, the second terminal device and the first terminal device may share the first control resource set. This ensures an available resource of the first terminal device while minimizing impact on an optional resource of the second terminal device, so that the first terminal device can reliably communicate with the network device.

In a possible implementation, indexes of Y CCE resources in X CCE resources corresponding to the AL that is supported by the first terminal device and that is equal to X are {i,i+1,...,i+(Y-1)}, and indexes of (X-Y) CCE resources in the X CCE resources are {j,j+1,...,j+(X-Y-1)}.

When the quantity 1 of symbols in the first control resource set is equal to 3, N is equal to 96, and the bandwidth supported by the first terminal device is greater than or equal to the bandwidth corresponding to the N/2 resource blocks, i=(16+T+A)mod W/2, and j=(32+T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=16, A=0 and C=16. When X=8, A=0, B=0, and C=0. When X=8, A=0, B=8, and C=4. When X=4, A=0, B=8, and C=2. When X=4, A=4, B=10, and C=2. When X=4, A=0, B=10, and C=2. When X=4, A=4, B=8, and C=2. When X=20, A=-8 and C=8. When X=22, A=-12 and C=10. When X=24, A=-12, B=5, and C=22.

When the quantity 1 of symbols in the first control resource set is equal to 2, N is equal to 96, and the bandwidth supported by the first terminal device is greater than or equal to the bandwidth corresponding to the N/2 resource blocks, i=(8+T+A)mod W/2, and j=(24+T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=16, A=-8 and C=16. When X=12, A=0 and C=12. When X=8, A=8 and C=8. When X=8, A=0, B=0, and C=4. When X=4, A=0, 8, or 16, and C=4. When X=4, A=12, B=4, and C=2. When X=4, A=-4, B=4, and C=2.

When the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, j=(9-T+B)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0, B=-8, and C=2. When X=6, A=0, B=-4, and C=2. When X=4, A=0, B=0, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(8+T+A)mod W/2, and j=(16+T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=12, A=0 and C=12. When X=8, A=8 and C=8. When X=4, A=16 and C=4. When X=4, A=8 and C=4.

When the quantity 1 of symbols in the first control resource set is equal to 2, N is equal to 48, and the bandwidth supported by the first terminal device is greater than or equal to the bandwidth corresponding to the N/2 resource blocks, i=(0+T+A)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0 and C=8. When X=6, A=4 and C=6. When X=4, A=8 and C=4.

When the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=2, A=4 and C=2.

In the foregoing solution, the second terminal device and the first terminal device may share the first control resource set. This ensures an available resource of the first terminal device while minimizing impact on an optional resource of the second terminal device, so that the first terminal device can reliably communicate with the network device.

In a possible implementation, the resource indexes {i,i+1,...,i+(Y-1)} of the Y REG bundles in the X REG bundles corresponding to the AL that is supported by the first terminal device and that is equal to X are dli+e and dli+f+E after offset, the resource indexes {j,j+1,...,j+(X-Y-1)} of the (X-Y) REG bundles are d2i+p and d2i+q+P after offset, e=0, 1, , or E, f=0, 1, ..., or F, E+F=Y, p=0, 1, , or P, q=0, 1, , or Q, and P+Q=X-Y.

When j+(X-Y-1)<W/2, d1i+e=i+e, d1i+f+E=i+f+E, d2i+p=j+p, and d2i+q+P=j+q+P, or d1i+e=i+e+W/2, d1i+f+E=i+f+E+W/2, d2i+p=j+p+W/2, and d2i+q+P=j+q+P+W/2.

When j<W/2≤j+(X-Y-1), d1i+e=i+e, d1i+f+E=i+f+E, d2i+p=j+p, d2i+q+P=j+q+P-W/2, dli+e=i+e+W/2, dli+f+E=i+f+E+W/2, d2i+p=j+p+W/2, d2i+q+P=j+q+P, and P=W/2-1-j.

When i+(Y-1)<W/2≤j, d1i+e=i+e, d1i+f+E=i+f+E, d2i+p=j+p-W/2, d2i+q+P=j+q+P-W/2, dli+e=i+e+W/2, dli+f+E=i+f+E+W/2, d2i+p=j+p, and d2i+q+P=j+q+P.

When i<W/2<i+(Y-1), d1i+e=i+e, dli+f+E=i+f+E-W/2, d2i+p=j+p-W/2, d2i+q+P=j+q+P-W/2, dli+e=i+e+W/2, d1i+f+E=i+f+E, d2i+p=j+p, d2i+q+P=j+q+P, and E=W/2-1-j.

When i ≥ W/2, dli+e=i+e-W/2, dli+f+E=i+f+E-W/2, d2i+p=j+p-W/2, d2i+q+P=j+q+P-W/2, d1i+e=i+e, d1i+f+E=i+f+E, d2i+p=j+p, and d2i+q+P=j+q+P.

In some embodiments of this application, offset may be further performed on the X REG bundles corresponding to the AL that is supported by the first terminal device and that is equal to X. The first terminal device may perform control channel monitoring on offset REG bundles. There are a plurality of values of i and j for different quantities 1 of symbols in the first control resource set, the quantity N of resource blocks, and bandwidth ranges supported by the first terminal device. After i and j are determined, REG bundles that can be used by the first terminal device can be determined, so that the first terminal device can perform control channel monitoring.

In a possible implementation, the method further includes: The first terminal device receives control information on R REG bundles. The R REG bundles do not overlap with S REG bundles, and the S REG bundles are used by the second terminal device to receive the control information. The R REG bundles do not overlap with the S REG bundles. The R REG bundles are used by the first terminal device to receive the control information. The S REG bundles are used by the second terminal device to receive the control information. In this embodiment of this application, communication between the first terminal device and the network device does not affect the second terminal device.

According to a third aspect, an embodiment of this application further provides a communication apparatus. The communication apparatus includes a first terminal device, and the first terminal device includes a transceiver module and a processing module. The transceiver module is configured to receive first information from a network device, where the first information indicates a first control resource set, a quantity of resource blocks in the first control resource set is N, a quantity of resource element group bundles REG bundles in the first control resource set is W, a bandwidth supported by the first terminal device is less than a bandwidth corresponding to the N resource blocks, the bandwidth supported by the first terminal device is less than a bandwidth supported by a second terminal device, N and W are positive integers; and an aggregation level AL supported by the first terminal device includes X, and an AL supported by the second terminal device does not include X, and/or a quantity of candidate control channels supported by the first terminal device in a first search space SS set is Y1, a quantity of candidate control channels supported by the second terminal device in the first search space set is Z, and Y1 is less than or equal to Z. The processing module is configured to monitor a first control channel on M REG bundles in the W REG bundles or on M control channel element CCE resources corresponding to the M REG bundles, where M is less than W.

In the third aspect of this application, the modules constituting the communication apparatus may further perform the steps described in the first aspect and the possible implementations of the first aspect. For details, refer to the descriptions in the first aspect and the possible implementations of the first aspect.

According to a fourth aspect, an embodiment of this application further provides a communication apparatus. The communication apparatus includes a network device, and the network device includes a processing module and a transceiver module. The processing module is configured to determine a first control resource set for a first terminal device, where a quantity of resource blocks in the first control resource set is N, a quantity of resource element group bundles REG bundles in the first control resource set is W, a bandwidth supported by the first terminal device is less than a bandwidth corresponding to the N resource blocks, the bandwidth supported by the first terminal device is less than a bandwidth supported by a second terminal device, N and W are positive integers; and an aggregation level AL supported by the first terminal device includes X, and an AL supported by the second terminal device does not include X, and/or a quantity of candidate control channels supported by the first terminal device in a first search space SS set is Y, a quantity of candidate control channels supported by the second terminal device in the first search space set is Z, and Y is less than or equal to Z. The transceiver module is configured to send first information to the first terminal device, where the first information indicates the first control resource set. The transceiver module is further configured to send a first control channel on M REG bundles in the W REG bundles or on M control channel element CCE resources corresponding to the M REG bundles, where M is less than W.

In the fourth aspect of this application, the modules constituting the communication apparatus may further perform the steps described in the second aspect and the possible implementations of the second aspect. For details, refer to the descriptions in the second aspect and the possible implementations of the second aspect.

In a possible implementation, X includes at least one of the following values: 6, 12, 20, and 22.

In a possible implementation, when a quantity 1 of symbols in the first control resource set is equal to 3, N is equal to 96, and the bandwidth supported by the first terminal device is greater than or equal to a bandwidth corresponding to N/2 resource blocks, a quantity of candidate control channels whose AL supported by the first terminal device is equal to 20 is 1, a quantity of candidate control channels whose AL supported by the first terminal device is equal to 16 is 1, a quantity of candidate control channels whose AL supported by the first terminal device is equal to 8 is 1 or 2, a quantity of candidate control channels whose AL supported by the first terminal device is equal to 4 is 2 or 3, and/or a quantity of candidate control channels whose AL supported by the first terminal device is equal to 22 is 1.

When a quantity 1 of symbols in the first control resource set is equal to 2, N is equal to 96, and the bandwidth supported by the first terminal device is greater than or equal to a bandwidth corresponding to N/2 resource blocks, a quantity of candidate control channels whose AL supported by the first terminal device is equal to 16 is 1, a quantity of candidate control channels whose AL supported by the first terminal device is equal to 12 is 1, a quantity of candidate control channels whose AL supported by the first terminal device is equal to 8 is 1 or 2, and/or a quantity of candidate control channels whose AL supported by the first terminal device is equal to 4 is 2 or 3.

When a quantity 1 of symbols in the first control resource set is equal to 1, N is equal to 96, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1.

When a quantity 1 of symbols in the first control resource set is equal to 3, N is equal to 48, and the bandwidth supported by the first terminal device is greater than or equal to a bandwidth corresponding to N/2 resource blocks, a quantity of candidate control channels whose AL supported by the first terminal device is equal to 8 is 1, and/or a quantity of candidate control channels whose AL supported by the first terminal device is equal to 4 is 1.

When a quantity 1 of symbols in the first control resource set is equal to 2, N is equal to 48, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1.

When a quantity 1 of symbols in the first control resource set is equal to 1, N is equal to 48, and the bandwidth supported by the first terminal device is greater than or equal to a bandwidth corresponding to N/2 resource blocks, a quantity of candidate control channels whose AL supported by the first terminal device is equal to 2 is 1.

When a quantity 1 of symbols in the first control resource set is equal to 3, N is equal to 96, and the bandwidth supported by the first terminal device is greater than or equal to a bandwidth corresponding to N/4 resource blocks, a quantity of candidate control channels whose AL supported by the first terminal device is equal to 12 is 1, a quantity of candidate control channels whose AL supported by the first terminal device is equal to 8 is 1, and/or a quantity of candidate control channels whose AL supported by the first terminal device is equal to 4 is 1 or 2.

When a quantity 1 of symbols in the first control resource set is equal to 2, N is equal to 96, and the bandwidth supported by the first terminal device is greater than or equal to a bandwidth corresponding to N/4 resource blocks, a quantity of candidate control channels whose AL supported by the first terminal device is equal to 8 is 1, and/or a quantity of candidate control channels whose AL supported by the first terminal device is equal to 4 is 1.

When a quantity 1 of symbols in the first control resource set is equal to 1, N is equal to 96, and the bandwidth supported by the first terminal device is greater than or equal to a bandwidth corresponding to N/4 resource blocks, a quantity of candidate control channels whose AL supported by the first terminal device is equal to 4 is 1.

When a quantity 1 of symbols in the first control resource set is equal to 3, N is equal to 48, and the bandwidth supported by the first terminal device is greater than or equal to a bandwidth corresponding to N/4 resource blocks, a quantity of candidate control channels whose AL supported by the first terminal device is equal to 6 is 1, and/or a quantity of candidate control channels whose AL supported by the first terminal device is equal to 4 is 1.

When a quantity 1 of symbols in the first control resource set is equal to 2, N is equal to 48, and the bandwidth supported by the first terminal device is greater than or equal to a bandwidth corresponding to N/4 resource blocks, a quantity of candidate control channels whose AL supported by the first terminal device is equal to 4 is 1.

When a quantity 1 of symbols in the first control resource set is equal to 1, N is equal to 48, and the bandwidth supported by the first terminal device is greater than or equal to a bandwidth corresponding to N/4 resource blocks, a quantity of candidate control channels whose AL supported by the first terminal device is equal to 2 is 1.

In a possible implementation, indexes of Y REG bundles in X REG bundles corresponding to the AL that is supported by the first terminal device and that is equal to X are {i,i+1,...,i+(Y-1)}, indexes of remaining (X-Y) REG bundles in the X REG bundles are {j,j+1,...,j+(X-Y-1)}, and i and j are positive integers.

Further, i and j meet at least one of the following cases:

When the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=16, B=32, and C=8. When X=8, A=20, B=32, and C=4. When X=8, A=16, B=36, and C=4. When X=4, A=16, B=34, and C=2. When X=4, A=20, B=34, and C=2. When X=4, A=20, B=32, and C=2. When X=4, A=22, B=34, and C=2. When X=20, A=16, B=28, and C=8. When X=22, A=16, B=32, and C=8. When X=24, A=16, B=28, and C=8.

When the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=12, B=16, and C=4. When X=12, A=12, B=20, and C=4. When X=8, A=12, B=24, and C=4. When X=8, A=12, B=20, and C=4. When X=4, A=12, B=20, and C=2. When X=4, A=14, B=22, and C=2. When X=8 and Y=8, indexes of eight REG bundles are i, i=0, 1, 2, ..., or 7, i=(n+A)mod W/2, and A={14,15,18,19,22,23,26,27}.

When the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=8, A=6, B=8, and C=2. When X=6, A=6, B=10, and C=2. When X=4, A=6, B=12, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=12, A=8, B=12, and C=4. When X=8, A=8, B=16, and C=4. When X=4, A=8 and C=4. When X=4, A=8, B=18, and C=2.

When the quantity 1 of symbols in the first control resource set is equal to 2, N is equal to 48, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=8, A=6, B=8, and C=2. When X=6, A=6, B=10, and C=2. When X=4, A=6, B=12, and C=2.

When the quantity 1 of symbols in the first control resource set is equal to 1, N is equal to 48, and the bandwidth supported by the first terminal device is greater than or equal to the bandwidth corresponding to the N/2 resource blocks, i=(n+A)mod W/2. A quantity of candidate control channels corresponding to the AL that is supported by the first terminal device and that is equal to X is C, n indicates an identifier of a cell in which the first terminal device is located, and mod indicates a modulo operation. When X=2, A=2 and C=2.

In a possible implementation, indexes of Y CCE resources in X CCE resources corresponding to the AL that is supported by the first terminal device and that is equal to X are {i,i+1,...,i+(Y-1)}, and indexes of (X-Y) CCE resources in the X CCE resources are {j,j+1,...,j+(X-Y-1)}.

Further, i and j meet at least one of the following cases:

When the quantity 1 of symbols in the first control resource set is equal to 3, N is equal to 96, and the bandwidth supported by the first terminal device is greater than or equal to the bandwidth corresponding to the N/2 resource blocks, i=(32+T+A)mod W/2, and j=(17-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=16, A=0, B=0, and C=8. When X=8, A=8, B=0, and C=4. When X=8, A=0, B=8, and C=4. When X=4, A=0, B=4, and C=2. When X=4, A=8, B=4, and C=2. When X=4, A=8, B=0, and C=2. When X=4, A=12, B=4, and C=2. When X=20, A=0, B=-8, and C=8. When X=22, A=0, B=0, and C=8. When X=24, A=0, B=-8, and C=8.

When the quantity 1 of symbols in the first control resource set is equal to 2, N is equal to 96, and the bandwidth supported by the first terminal device is greater than or equal to the bandwidth corresponding to the N/2 resource blocks, i=(24+T+A)mod W/2, and j=(17-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. Further, n indicates an identifier of a cell in which the first terminal device is located, and mod indicates a modulo operation. When X=16, A=0, B=-16, and C=4. When X=12, A=0, B=-8, and C=4. When X=8, A=0, B=0, and C=4. When X=8, A=0, B=-8, and C=4. When X=4, A=0, B=-8, and C=2. When X=4, A=4, B=-4, and C=2. When X=8 and Y=8, indexes of eight CCE resources are i, and i=0, 1, 2, 3, 4, ..., or 7. When i=0 or 1, i=(A+T)mod W/2, and A={28,30}. When i=2, 3, 4, ..., or 7, i=(A-T)mod W/2, and A={5,7,13,15,21,23}. When n mod W belongs to {2^(1-u) to (2^(1-u)+W/2-1)}, T=1. When n mod W does not belong to {2^(1-u) to (2^(1-u)+W/2-1)}, T=0.

When the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, and j=(9-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0, B=-8, and C=2. When X=6, A=0, B=-4, and C=2. When X=4, A=0, B=0, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(16+T+A)mod W/2, and j=(9-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=12, A=0, B=-8, and C=4. When X=8, A=0, B=0, and C=4. When X=4, A=0 and C=4. When X=4, A=0, B=4, and C=2.

When the quantity 1 of symbols in the first control resource set is equal to 2, N is equal to 48, and the bandwidth supported by the first terminal device is greater than or equal to the bandwidth corresponding to the N/2 resource blocks, i=(12+T+A)mod W/2, and j=(9-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0, B=-8, and C=2. When X=6, A=0, B=-4, and C=2. When X=4, A=0, B=0, and C=2.

When the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, j=(5-T+B)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=2, A=0 and C=2.

In a possible implementation, resource indexes of Y REG bundles in X REG bundles corresponding to the AL that is supported by the first terminal device and that is equal to X are {i,i+1,...i+(Y-1)}, and indexes of remaining (X-Y) REG bundles in the X REG bundles are {j,j+1,...j+(X-Y-1)}.

Further, i and j meet at least one of the following cases:

When the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=8 and C=16. When X=8, A=16 and C=8. When X=8, A=8, B=20, and C=4. When X=4, A=8, B=20, and C=2. When X=4, A=10, B=22, and C=2. When X=4, A=8, B=22, and C=2. When X=4, A=10, B=20, and C=2. When X=20, A=4 and C=20. When X=22, A=2 and C=22. When X=24, A=2, B=26, and C=22.

When the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=0 and C=16. When X=12, A=4 and C=12. When X=8, A=8 and C=8. When X=8, A=4, B=12, and C=4. When X=4, A=12, 4, or 8, and C=4. When X=4, A=10, B=14, and C=2. When X=4, A=6, B=14, and C=2.

When the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n=nCelliD, nCelliD indicates an identifier of a cell in which the first terminal device is located, and mod indicates a modulo operation. When X=8, A=6, B=8, and C=2. When X=6, A=6, B=10, and C=2. When X=4, A=6, B=12, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2. A quantity of candidate control channels corresponding to the AL that is supported by the first terminal device and that is equal to X is C, n indicates an identifier of a cell in which the first terminal device is located, and mod indicates a modulo operation. When X=12, A=0 and C=12. When X=8, A=4 and C=8. When X=4, A=8 and C=4. When X=4, A=4 and C=4.

When the quantity 1 of symbols in the first control resource set is equal to 2, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n=nCelliD, nCelliD indicates an identifier of a cell in which the first terminal device is located, and mod indicates a modulo operation. When X=8, A=0 and C=8. When X=6, A=2 and C=6. When X=4, A=4 and C=4.

When the quantity 1 of symbols in the first control resource set is equal to 1, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n=nCelliD, nCelliD indicates an identifier of a cell in which the first terminal device is located, and mod indicates a modulo operation. When X=2, A=2 and C=2.

In a possible implementation, indexes of Y CCE resources in X CCE resources corresponding to the AL that is supported by the first terminal device and that is equal to X are {i,i+1,...,i+(Y-1)}, and indexes of (X-Y) CCE resources in the X CCE resources are {j,j+1,...,j+(X-Y-1)}.

When the quantity 1 of symbols in the first control resource set is equal to 3, N is equal to 96, and the bandwidth supported by the first terminal device is greater than or equal to the bandwidth corresponding to the N/2 resource blocks, i=(16+T+A)mod W/2, and j=(32+T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=16, A=0 and C=16. When X=8, A=0, B=0, and C=0. When X=8, A=0, B=8, and C=4. When X=4, A=0, B=8, and C=2. When X=4, A=4, B=10, and C=2. When X=4, A=0, B=10, and C=2. When X=4, A=4, B=8, and C=2. When X=20, A=-8 and C=8. When X=22, A=-12 and C=10. When X=24, A=-12, B=5, and C=22.

When the quantity 1 of symbols in the first control resource set is equal to 2, N is equal to 96, and the bandwidth supported by the first terminal device is greater than or equal to the bandwidth corresponding to the N/2 resource blocks, i=(8+T+A)mod W/2, and j=(24+T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=16, A=-8 and C=16. When X=12, A=0 and C=12. When X=8, A=8 and C=8. When X=8, A=0, B=0, and C=4. When X=4, A=0, 8, or 16, and C=4. When X=4, A=12, B=4, and C=2. When X=4, A=-4, B=4, and C=2.

When the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, j=(9-T+B)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0, B=-8, and C=2. When X=6, A=0, B=-4, and C=2. When X=4, A=0, B=0, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(8+T+A)mod W/2, and j=(16+T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=12, A=0 and C=12. When X=8, A=8 and C=8. When X=4, A=16 and C=4. When X=4, A=8 and C=4.

When the quantity 1 of symbols in the first control resource set is equal to 2, N is equal to 48, and the bandwidth supported by the first terminal device is greater than or equal to the bandwidth corresponding to the N/2 resource blocks, i=(0+T+A)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0 and C=8. When X=6, A=4 and C=6. When X=4, A=8 and C=4.

When the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=2, A=4 and C=2.

In a possible implementation, the resource indexes {i,i+1,...,i+(Y-1)} of the Y REG bundles in the X REG bundles corresponding to the AL that is supported by the first terminal device and that is equal to X are dli+e and dli+f+E after offset, the resource indexes {j,j+1,...,j+(X-Y-1)} of the (X-Y) REG bundles are d2i+p and d2i+q+P after offset, e=0, 1, , or E, f=0, 1, ..., or F, E+F=Y, p=0, 1, , or P, q=0, 1, ..., or Q, and P+Q=X-Y.

When j+(X-Y-1)<W/2, d1i+e=i+e, d1i+f+E=i+f+E, d2i+p=j+p, and d2i+q+P=j+q+P, or d1i+e=i+e+W/2, d1i+f+E=i+f+E+W/2, d2i+p=j+p+W/2, and d2i+q+P=j+q+P+W/2.

When j<W/2≤j+(X-Y-1), d1i+e=i+e, d1i+f+E=i+f+E, d2i+p=j+p, d2i+q+P=j+q+P-W/2, dli+e=i+e+W/2, dli+f+E=i+f+E+W/2, d2i+p=j+p+W/2, d2i+q+P=j+q+P, and P=W/2-1-j.

When i+(Y-1)<W/2≤j, d1i+e=i+e, d1i+f+E=i+f+E, d2i+p=j+p-W/2, d2i+q+P=j+q+P-W/2, dli+e=i+e+W/2, dli+f+E=i+f+E+W/2, d2i+p=j+p, and d2i+q+P=j+q+P.

When i<W/2<i+(Y-1), d1i+e=i+e, dli+f+E=i+f+E-W/2, d2i+p=j+p-W/2, d2i+q+P=j+q+P-W/2, dli+e=i+e+W/2, d1i+f+E=i+f+E, d2i+p=j+p, d2i+q+P=j+q+P, and E=W/2-1-j.

When i ≥ W/2, dli+e=i+e-W/2, dli+f+E=i+f+E-W/2, d2i+p=j+p-W/2, d2i+q+P=j+q+P-W/2, d1i+e=i+e, d1i+f+E=i+f+E, d2i+p=j+p, and d2i+q+P=j+q+P.

In a possible implementation, the apparatus further includes: The first terminal device receives control information on R REG bundles. The R REG bundles do not overlap with S REG bundles, and the S REG bundles are used by the second terminal device to receive the control information.

According to a fifth aspect, an apparatus is provided. The apparatus may be a terminal device, an apparatus in a terminal device, or an apparatus that can be used together with a terminal device. In a design, the apparatus may include modules that are in one-to-one correspondence with the method/operations/steps/actions described in the first aspect. The modules may be implemented by using a hardware circuit, software, or a combination of a hardware circuit and software. In a design, the apparatus may include a processing module and a transceiver module.

According to a sixth aspect, an apparatus is provided. The apparatus may be a network device, an apparatus in a network device, or an apparatus that can be used together with a network device. In a design, the apparatus may include modules that are in one-to-one correspondence with the method/operations/steps/actions described in the second aspect. The modules may be implemented by using a hardware circuit, software, or a combination of a hardware circuit and software. In a design, the apparatus may include a processing module and a transceiver module.

According to a seventh aspect, an embodiment of this application provides an apparatus. The apparatus includes a processor, configured to implement the method described in the first aspect. Optionally, the apparatus may further include a memory, configured to store instructions and data. The memory is coupled to the processor. When executing the instructions stored in the memory, the processor can implement the method described in the first aspect. The apparatus may further include a communication interface. The communication interface is used by the apparatus to communicate with another device. For example, the communication interface may be a transceiver, a circuit, a bus, a module, a pin, or another type of communication interface. The another device may be a network device. In a possible device, the apparatus includes:
a memory, configured to store program instructions; and
a processor, configured to perform the steps in the first aspect through a communication interface. This is not specifically limited herein.

According to an eighth aspect, an embodiment of this application provides an apparatus. The apparatus includes a processor, configured to implement the method described in the second aspect. Optionally, the apparatus may further include a memory, configured to store instructions and data. The memory is coupled to the processor. When executing the instructions stored in the memory, the processor can implement the method described in the second aspect. The apparatus may further include a communication interface. The communication interface is used by the apparatus to communicate with another device. For example, the communication interface may be a transceiver, a circuit, a bus, a module, a pin, or another type of communication interface. The another device may be a terminal device. In a possible device, the apparatus includes:
a memory, configured to store program instructions; and
a processor, configured to perform the steps in the second aspect through a communication interface. This is not specifically limited herein.

According to a ninth aspect, an embodiment of this application further provides a computer-readable storage medium, including instructions. When the instructions are run on a computer, the computer is enabled to perform the method according to any one of the first aspect to the second aspect.

According to a tenth aspect, an embodiment of this application further provides a computer program product, including instructions. When the instructions are run on a computer, the computer is enabled to perform the method according to any one of the first aspect to the second aspect.

According to an eleventh aspect, an embodiment of this application provides a chip system. The chip system includes a processor, may further include a memory, and is configured to implement the method according to any one of the first aspect to the second aspect. The chip system may include a chip, or may include a chip and another discrete component.

According to a twelfth aspect, an embodiment of this application provides a system. The system includes the apparatus described in the first aspect and the apparatus described in the second aspect.

### BRIEF DESCRIPTION OF DRAWINGS

FIG. 1 is a schematic flowchart of interaction of a communication method according to an embodiment of this application;
FIG. 2a to FIG. 2y are schematic diagrams of a candidate control channel according to an embodiment of this application;
FIG. 2za to FIG. 2zz are schematic diagrams of another candidate control channel according to an embodiment of this application;

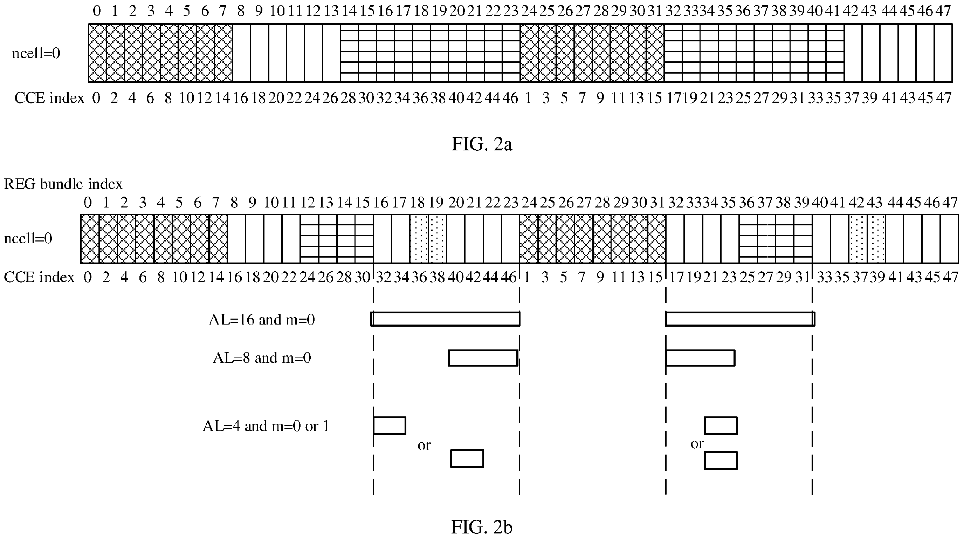

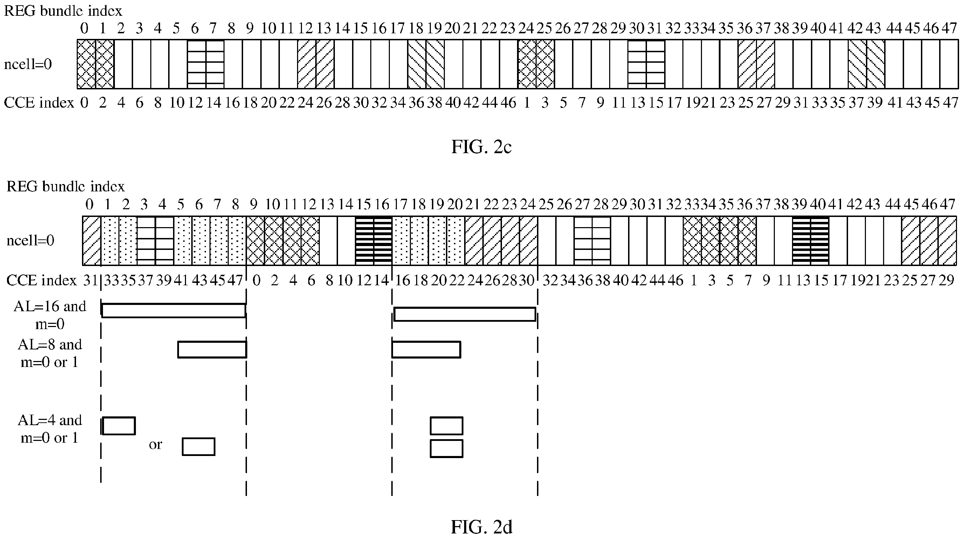

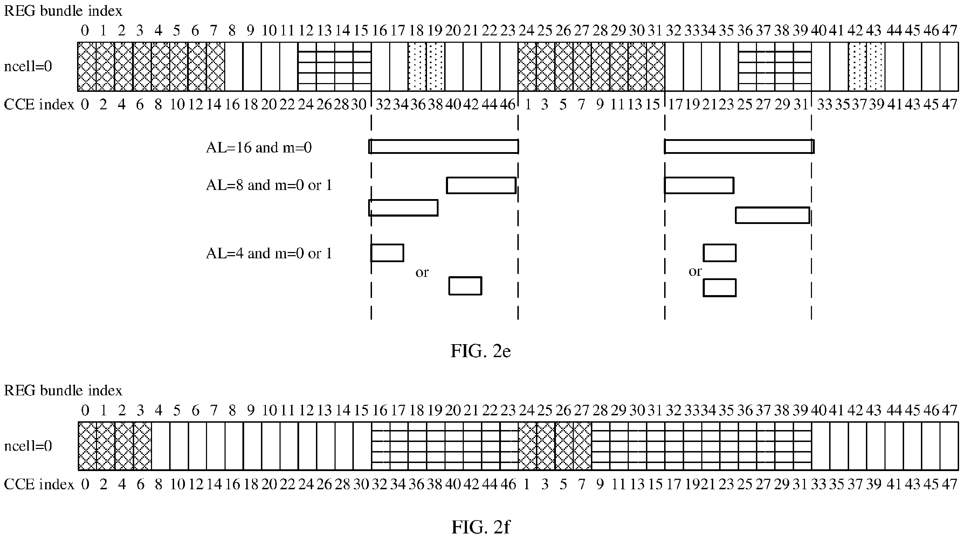

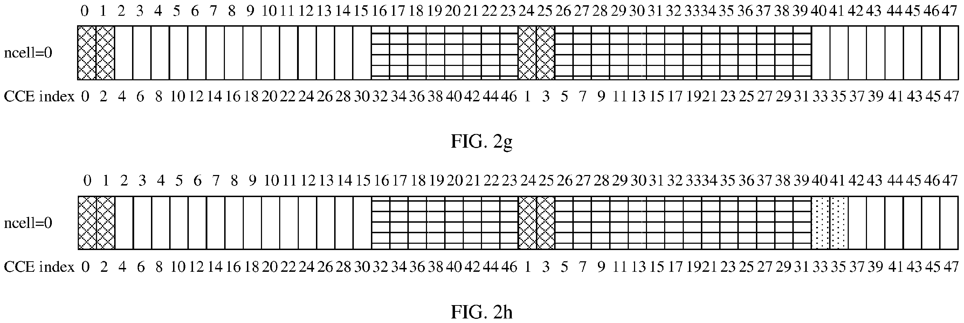

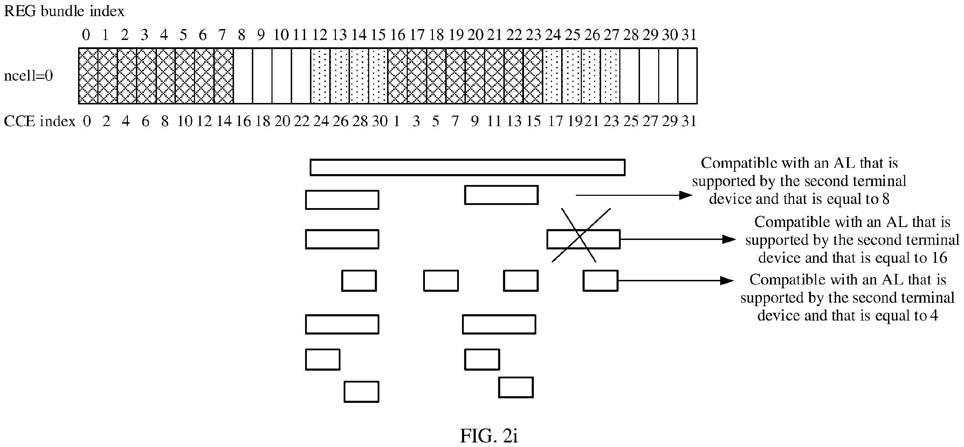

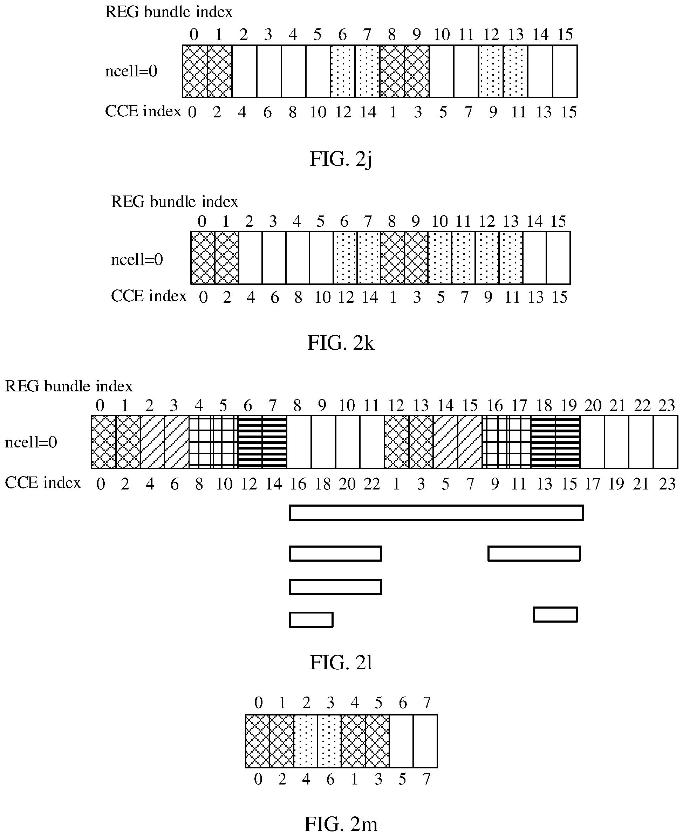

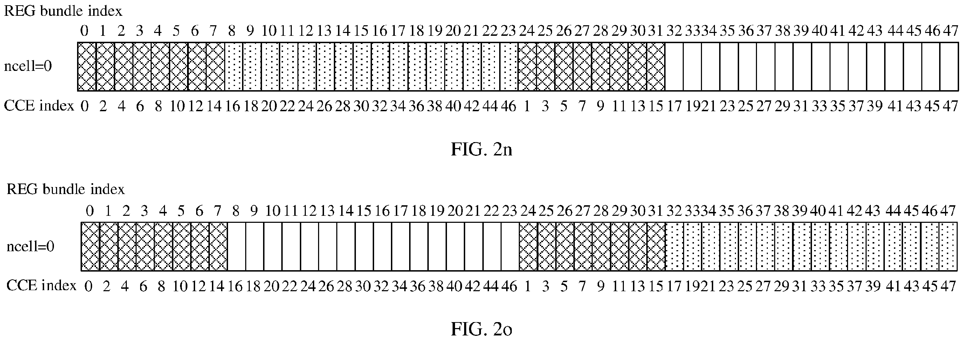

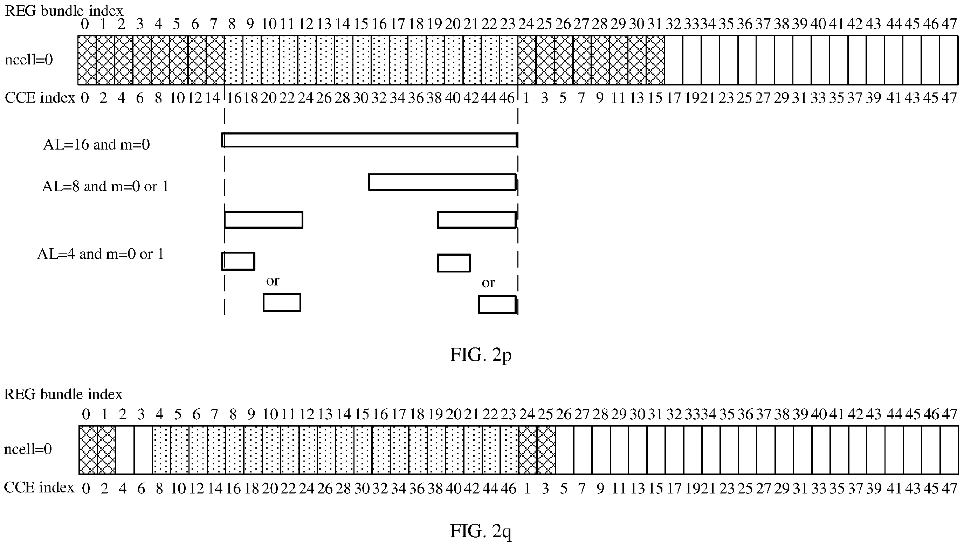

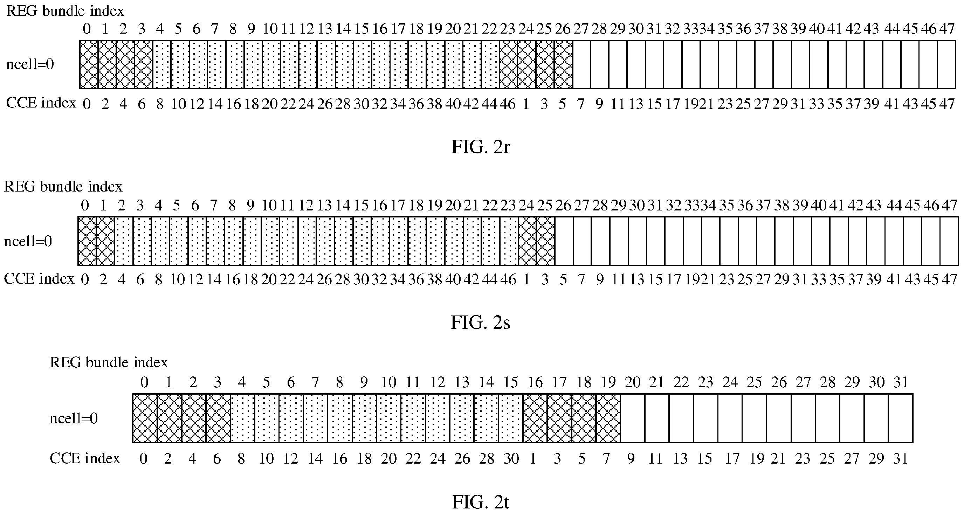

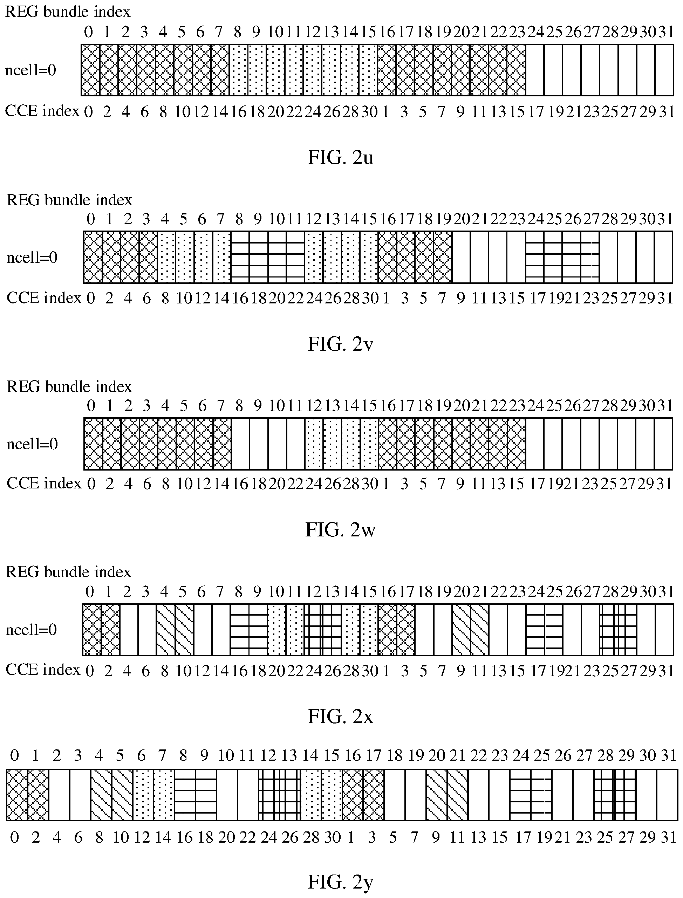

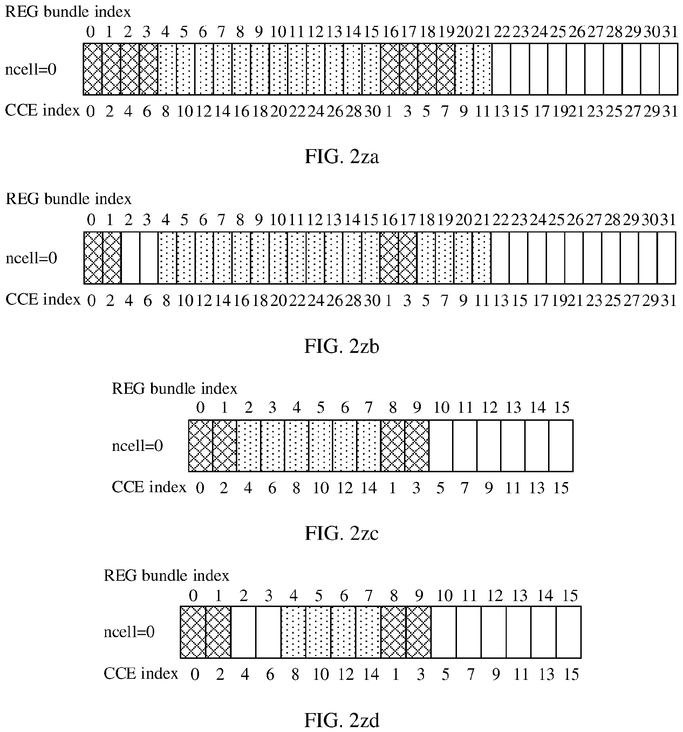

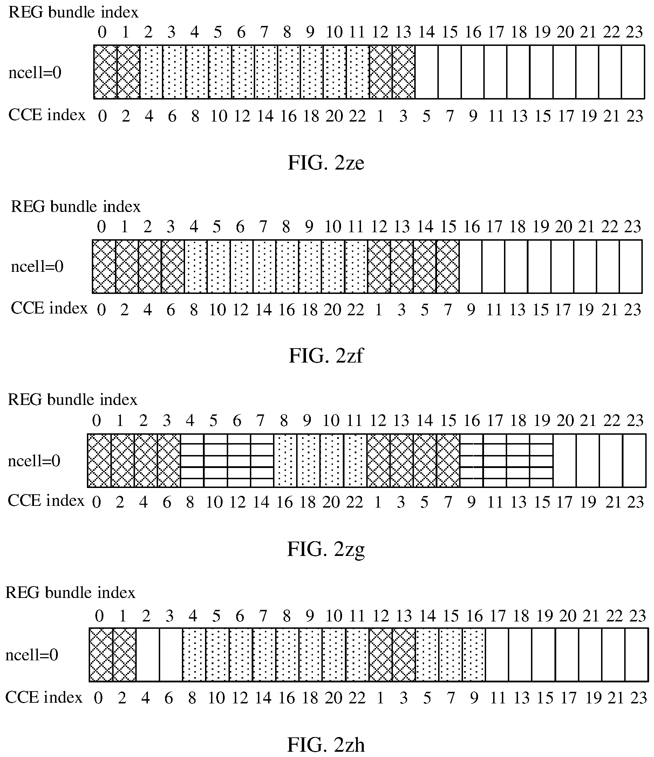

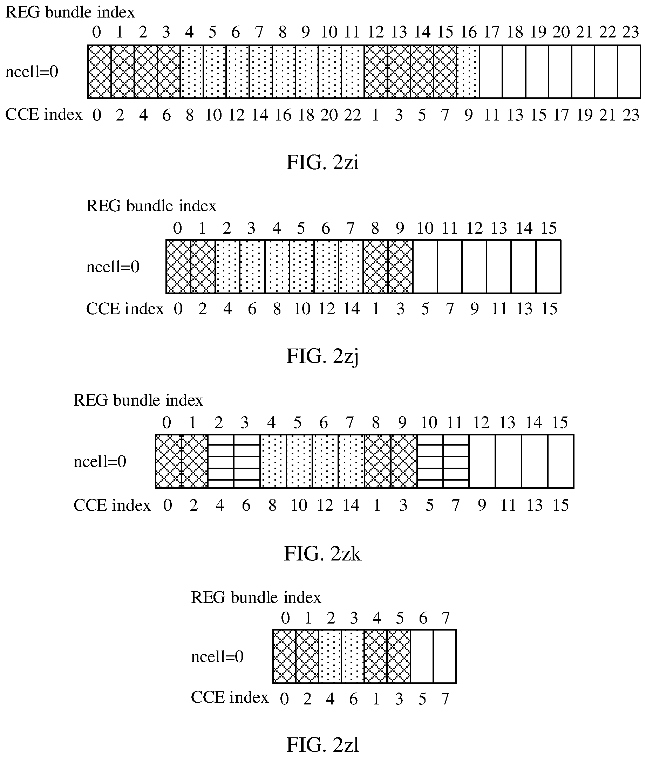

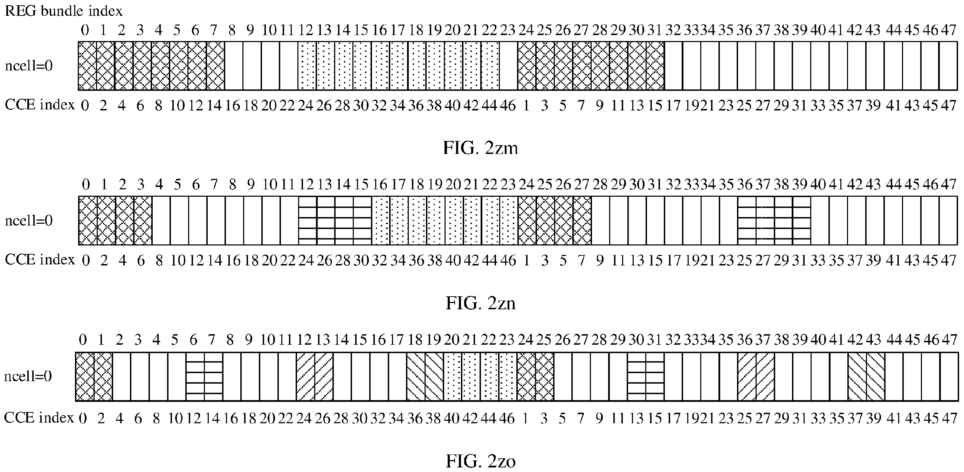

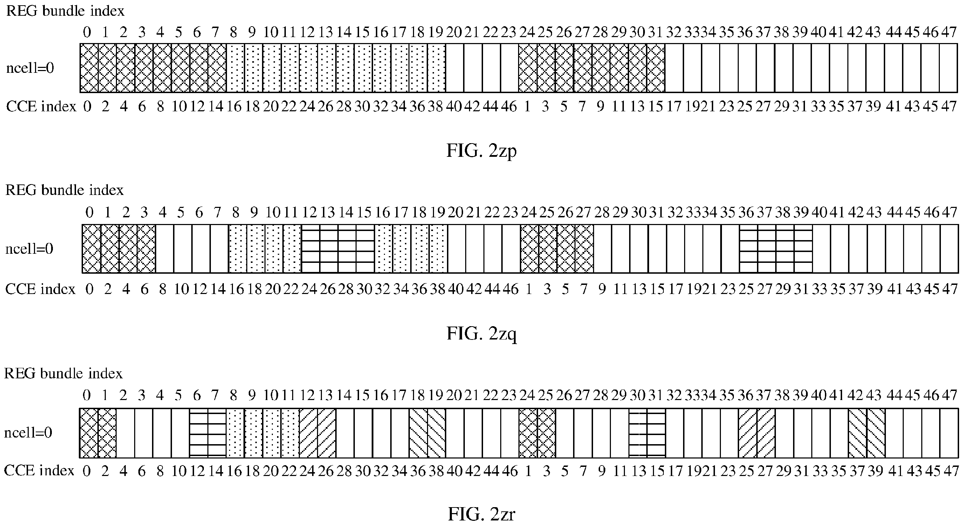

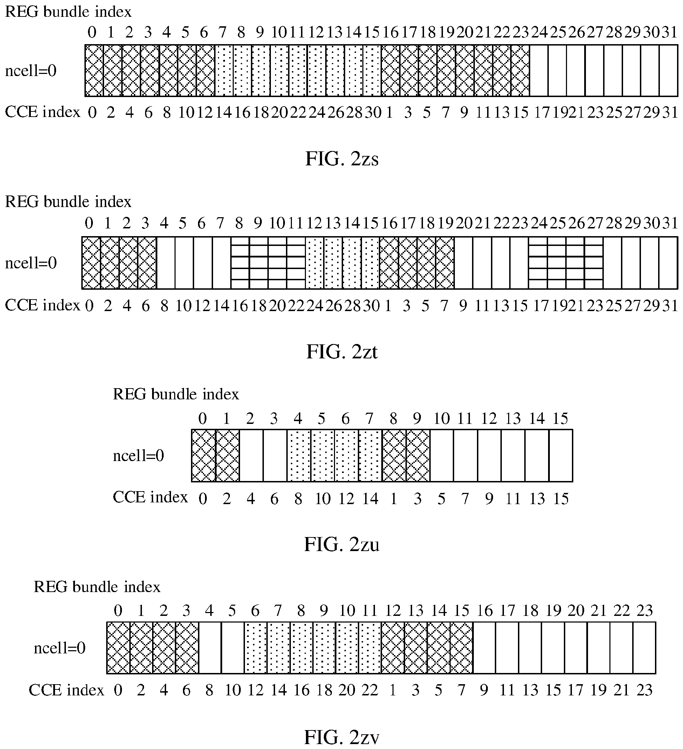

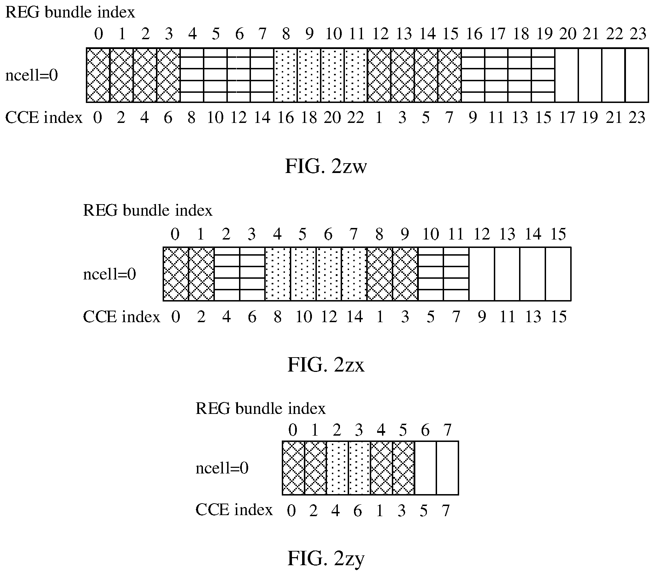

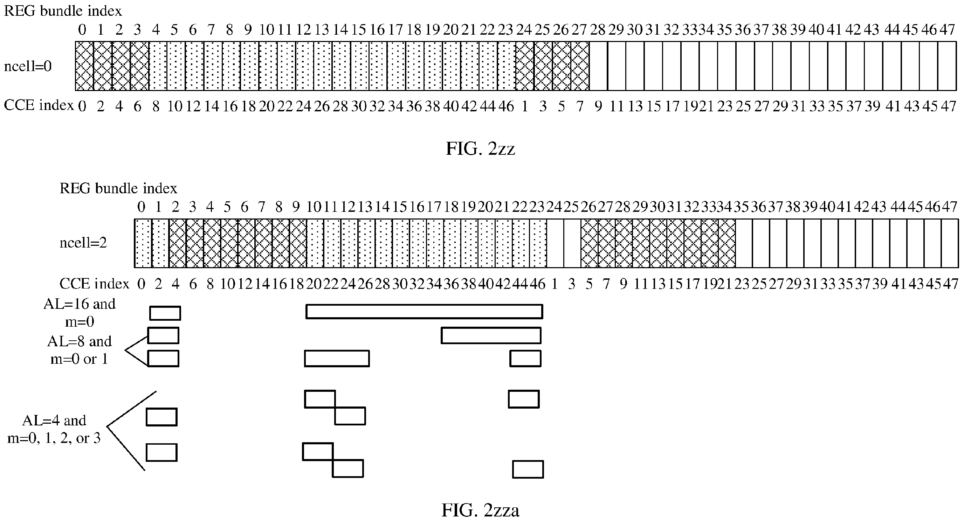

FIG. 2zza is a schematic diagram of still another candidate control channel according to an embodiment of this application;

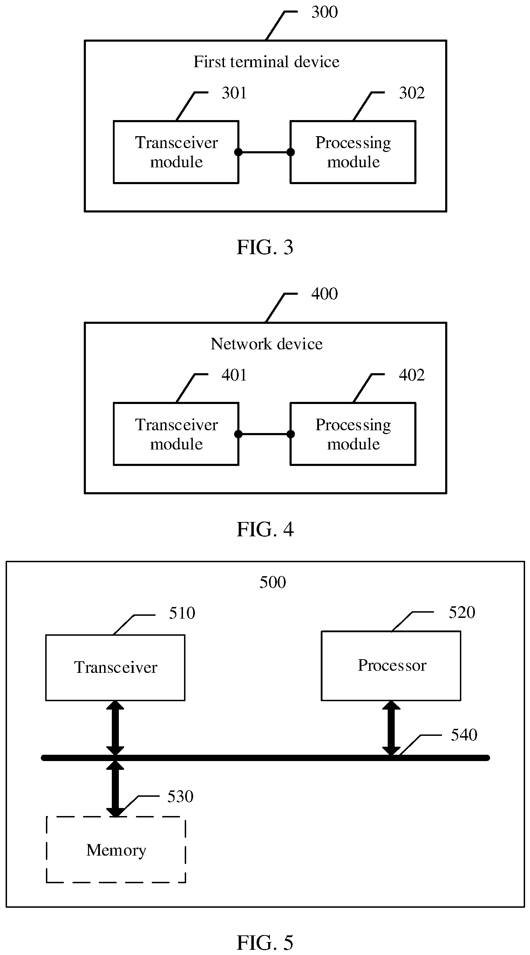

FIG. 3 is a schematic diagram of a composition structure of a terminal device according to an embodiment of this application;
FIG. 4 is a schematic diagram of a composition structure of a network device according to an embodiment of this application;
FIG. 5 is a schematic diagram of a composition structure of another terminal device according to an embodiment of this application; and

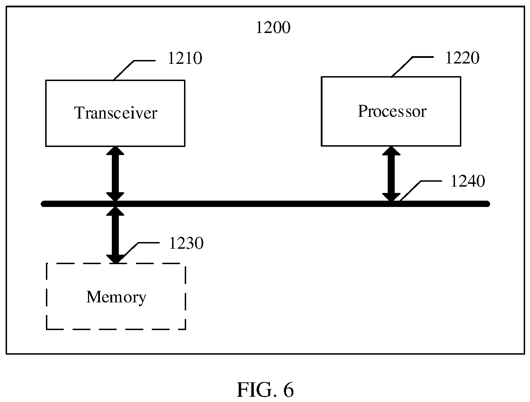

FIG. 6 is a schematic diagram of a composition structure of another network device according to an embodiment of this application.

### DESCRIPTION OF EMBODIMENTS

Embodiments of this application provide a communication method and apparatus, so that a terminal device monitors a control channel on a corresponding resource applicable to a terminal device of a first capability type. This can implement communication between a network device and the terminal device of the first capability type.

The following describes embodiments of this application with reference to accompanying drawings.

Technical solutions provided in embodiments of this application may be applied to various communication systems, for example, a long term evolution (long term evolution, LTE) system, a 5th generation mobile communication system, a wireless fidelity (wireless fidelity, Wi-Fi) system, a future communication system, a system integrating a plurality of communication systems, or the like. This is not limited in embodiments of this application. 5G may also be referred to as new radio (new radio, NR).

The technical solutions provided in embodiments of this application may be applied to various communication scenarios, for example, applied to one or more of the following communication scenarios: eMBB, URLLC, mMTC, device-to-device (device-to-device, D2D) communication, vehicle-to-everything (vehicle to everything, V2X) communication, vehicle-to-vehicle (vehicle to vehicle, V2V) communication, Internet of things (internet of things, IoT), and the like.

A wireless communication system includes communication devices, and the communication devices may perform wireless communication over an air interface resource. The communication device may include a network device and a terminal device, and the network device may also be referred to as a network-side device. The air interface resource may include at least one of a time domain resource, a frequency domain resource, a code resource, and a spatial resource. In embodiments of this application, "at least one" may also be described as "one or more", and "a plurality of" may be "two, three, four, or more". This is not limited in this application. For example, the wireless communication system includes two communication devices: a first communication device and a second communication device. The first communication device may be a network device, and the second communication device may be a terminal device.

In embodiments of this application, "/" may represent an "or" relationship between associated objects. For example, A/B may represent A or B. However, in calculation according to a formula, "/" may represent a division symbol. For example, N/M represents N divided by M, and N and M each represent a value. The term "and/or" may be used to describe that three relationships exist between associated objects. For example, A and/or B may represent the following three cases: Only A exists, both A and B exist, and only B exists, where A and B may be singular or plural. To facilitate description of the technical solutions in embodiments of this application, in embodiments of this application, words such as "first", "second", "A", and "B" may be used to distinguish between technical features with a same or similar function. The words such as "first", "second", "A", and "B" do not limit a quantity and an execution sequence, and the words such as "first", "second", "A", and "B" do not indicate a definite difference either. In embodiments of this application, the word such as "example" or "for example" is used to represent an example, an illustration, or a description, and is described as "example" or "for example". Any embodiment or design scheme should not be explained as being more preferred or having more advantages than another embodiment or design scheme. Use of the terms such as "example" or "for example" is intended to present a related concept in a specific manner for ease of understanding.

The terminal device in embodiments of this application may also be referred to as a terminal, and may be a device having a wireless transceiver function. The terminal device may be deployed on land, including an indoor device, an outdoor device, a handheld device, or a vehicle-mounted device; may be deployed on the surface of water (such as in a steamship); or may be deployed in the air (such as on an airplane, a balloon, or a satellite). The terminal device may be user equipment (user equipment, UE). The UE includes a handheld device, a vehicle-mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal device may be a terminal device, or may be an apparatus, for example, a chip system, that can support a terminal device in implementing the function. The apparatus may be deployed on the terminal device, or may be used together with the terminal device. In embodiments of this application, the chip system may include a chip, or may include a chip and another discrete component. In embodiments of this application, an example in which the apparatus configured to implement the function of the terminal device is a terminal device is used to specifically describe the technical solutions provided in embodiments of this application.

A terminal device in an mMTC scenario may be a reduced capability (reduced capability, REDCAP) terminal device. The REDCAP terminal device may also be referred to as a light (light) terminal device. For example, a REDCAP terminal device in an NR system has a capability lower than that of a conventional terminal device. For example, compared with the conventional terminal device, the REDCAP terminal device has one or more of the following features: a narrower supported bandwidth, a smaller quantity of configured antennas, smaller maximum supported transmit power, a lower supported duplex capability (for example, the conventional terminal device supports full-duplex frequency division duplex, and the REDCAP terminal device supports half-duplex frequency division duplex), and a weaker data processing capability (for example, the REDCAP terminal device can process less data than the conventional terminal device within a same period, or the REDCAP terminal device takes a longer period to process same data than the conventional terminal device). Therefore, the REDCAP terminal device and the conventional terminal device may require different system information, dedicated access networks, control channels with different performance, and/or the like. The conventional terminal device may be a non-REDCAP terminal device, and the non-REDCAP terminal device mainly supports an eMBB service and/or a URLLC service. Compared with the REDCAP terminal device, the conventional terminal device may be considered as a high-capability terminal device or a terminal device whose capability is not limited. Optionally, the conventional terminal device may be replaced with a terminal device that is introduced in the future and that has a high capability compared with the REDCAP terminal device. For example, a first terminal device may be the REDCAP terminal device, and a second terminal device may be the conventional terminal device.

The network device in embodiments of this application includes a base station (base station, BS), and may be a device deployed in a radio access network for wireless communication with another terminal device. The base station may be in a plurality of forms, such as a macro base station, a micro base station, a relay station, and an access point. For example, the base station in embodiments of this application may be a base station in a 5G mobile communication system or a base station in an LTE system. The base station in the 5G mobile communication system may also be referred to as a transmission reception point (transmission reception point, TRP) or a gNB. In embodiments of this application, an apparatus configured to implement a function of the network device may be a network device, or may be an apparatus, for example, a chip system, that can support a network device in implementing the function. The apparatus may be deployed on the network device, or may be used together with the network device. In embodiments of this application, an example in which the apparatus configured to implement the function of the network device is a network device is used to specifically describe the technical solutions provided in embodiments of this application.

The technical solutions provided in embodiments of this application may be applied to wireless communication between communication devices. The wireless communication between communication devices may include wireless communication between the network device and the terminal device, wireless communication between network devices, and wireless communication between terminal devices. In embodiments of this application, the term "wireless communication" may be referred to as "communication" for short, and the term "communication" may also be described as "data transmission", "information transmission", or "transmission". The technical solution may be used for wireless communication between a scheduling entity and a subordinate entity. The scheduling entity may allocate a resource to the subordinate entity. A person skilled in the art may use the technical solutions provided in embodiments of this application to perform wireless communication between another scheduling entity and a subordinate entity, for example, wireless communication between a macro base station and a micro base station, and wireless communication between a first-type terminal device and a second-type terminal device. The first-type terminal device and the second-type terminal device may indicate two different types of terminal devices. For example, the first-type terminal device may be a terminal device configured for an industrial wireless sensor network (industry wireless sensor network, IWSN), and the second-type terminal device may be a terminal device configured for video surveillance (Video Surveillance). Alternatively, the first-type terminal device may be a capability-reduced terminal device of a type 1, and the second-type terminal device may be a capability-reduced terminal device of a type 2 and a non-capability-reduced terminal device. For another example, the first-type terminal device may be a terminal device configured for an industrial wireless sensor network, and the second-type terminal device may be a terminal device configured for video surveillance and an enhanced mobile broadband (eMBB) terminal device.

An embodiment of this application provides a communication method. The communication method is applicable to a communication scenario between a network device and a plurality of types of terminal devices, and may provide applicable resources for different types of terminal devices. For example, M REG bundles in W REG bundles applicable to a REDCAP terminal device or M CCE resources corresponding to the M REG bundles may be provided for the REDCAP terminal device, to meet communication requirements of various types of terminal devices. For example, bandwidths supported by the REDCAP terminal device and a conventional terminal device are different, aggregation levels (aggregation level, AL) supported by the REDCAP terminal device and the conventional terminal device are different, or quantities of candidate control channels supported by the REDCAP terminal device and the conventional terminal device are different.

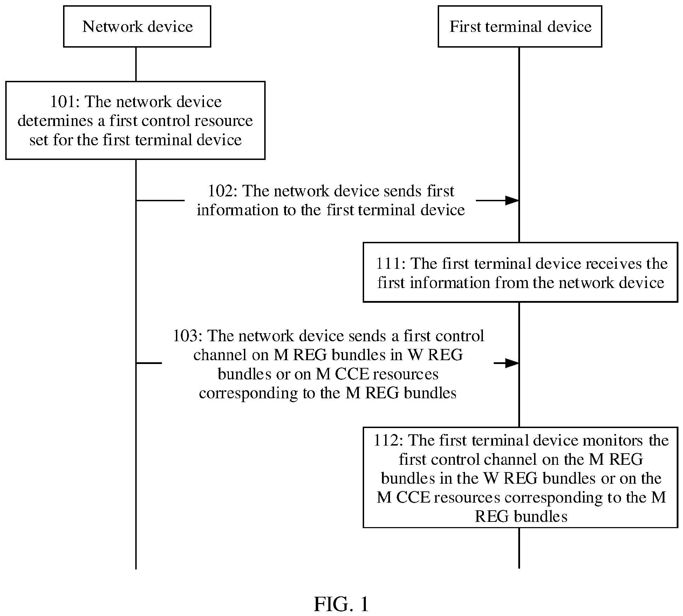

FIG. 1 is a schematic flowchart of interaction between a network device and a terminal device according to an embodiment of this application. In the interaction procedure, step 101 to step 103 are described from a side of the network device, and step 111 to step 112 are described from a side of a first terminal device. The interaction procedure shown in FIG. 1 mainly includes the following steps.

101: The network device determines a first control resource set for the first terminal device.

A quantity of resource blocks in the first control resource set is N. A specific value of N is not limited, and N may be a positive integer. For example, the first control resource set may be a CORESET 0, namely a control resource set numbered 0. For example, the first control resource set includes a frequency domain parameter and a time domain parameter. The frequency domain parameter is a size of the first control resource set in frequency domain. For example, N may be a multiple of any six resource blocks (resource block, RB). The time domain parameter is a symbol length occupied by the first control resource set in time domain. For example, the time domain parameter is configured by control resource setting duration (ControlResourceSet.duration) in a radio resource control (radio resource control, RRC) parameter.

A quantity of resource element group bundles (resource element group bundle, REG bundle) in the first control resource set is W. A specific value of W is not limited, and W may be a positive integer. For example, the first control resource set may be a CORESET 0, namely a control resource set numbered 0. A REG bundle may include a plurality of resource element groups (resource element group, REG), and a REG includes one RB in frequency domain and one orthogonal frequency division multiplexing (orthogonal frequency division multiplexing, OFDM) symbol in time domain. A size of the REG bundle is determined by a parameter L, where L is defined by a resource element group bundle size (reg-bundle-size) in an RRC parameter.

In this embodiment of this application, the network device needs to determine an attribute feature of the first terminal device, and then determine the first control resource set for the first terminal device. An attribute (or a type) feature of the first terminal device may meet the following: A bandwidth supported by the first terminal device is less than a bandwidth corresponding to the N resource blocks, the bandwidth supported by the first terminal device is less than a bandwidth supported by a second terminal device, and N and W are positive integers. The bandwidth supported by the first terminal device is less than the bandwidth corresponding to the N resource blocks, so that the first terminal device can perform communication within the bandwidth corresponding to the N resource blocks. In addition, the bandwidth supported by the second terminal device is less than the bandwidth corresponding to the N resource blocks, so that the second terminal device can perform communication within the bandwidth corresponding to the N resource blocks.

The attribute feature of the first terminal device further includes one or more of the following: An aggregation level (aggregation level, AL) supported by the first terminal device includes X, and an AL supported by the second terminal device does not include X, that is, ALs supported by the first terminal device and the second terminal device are different. A quantity of candidate control channels supported by the first terminal device in a first search space (search space, SS) set is Y1, and a quantity of candidate control channels supported by the second terminal device in the first search space set is Z, and Y1 is less than or equal to Z, that is, a quantity of candidate control channels supported by the first terminal device is less than a quantity of candidate control channels supported by the second terminal device.

The aggregation level indicates a quantity of control channel elements (control channel element, CCE) allocated to one physical downlink control channel (physical downlink control channel, PDCCH). One CCE includes a plurality of REGs, and REG bundle sizes vary with different CCEs. There is a correspondence between a CCE aggregation level and a quantity of corresponding allocated CCEs. For example, a corresponding CCE quantity at an aggregation level 1 is 1, a corresponding CCE quantity at an aggregation level 2 is 2, a corresponding CCE quantity at an aggregation level 4 is 4, a corresponding CCE quantity at an aggregation level 8 is 8, and a corresponding CCE quantity at an aggregation level 16 is 16. The aggregation level specifically used by the first terminal device is determined by the network device (for example, a base station), and the first terminal device may perform blind detection in the first control resource set to determine the aggregation level configured by the network device for the first terminal device.

The quantity of candidate control channels supported by the first terminal device in the first SS set is a quantity of candidate control channels that can be used by the first terminal device in the first SS set. A quantity of candidate (a candidate control channel quantity) control channels may also be referred to as a number of candidate control channels, and is referred to as a quantity of candidate control channels for short below. Different ALs correspond to different quantities of candidate control channels in the first control resource set. For example, ALs that can be supported by CORESET 0 of a scheduling broadcast message SIB 1 are 16, 8, and 4, and corresponding quantities of candidate control channels are 1, 2, and 4 respectively.

In some embodiments of this application, the AL supported by the first terminal device includes X, and the AL supported by the second terminal device does not include X. In other words, ALs supported by the first terminal device and the second terminal device are different. Different terminal devices may be distinguished by using ALs supported by terminal devices. There may be a plurality of values of X. For example, X includes at least one of the following values: 6, 12, 20, and 22. For example, the AL supported by the first terminal device may be 6, and the second terminal device does not support the AL being 6. For another example, the AL supported by the first terminal device may be 12, and the second terminal device does not support the AL being 12. For yet another example, the AL supported by the first terminal device may be 20, and the second terminal device does not support the AL being 20. For yet another example, the AL supported by the first terminal device may be 22, and the second terminal device does not support the AL being 22. The network device may specifically configure, based on an application scenario, the AL supported by the first terminal device. A value specifically included in the AL supported by the first terminal device is provided in a following embodiment.

In some embodiments of this application, a quantity of symbols in the first control resource set is indicated by a lowercase letter 1, and the quantity of symbols in the first control resource set is a quantity of OFDM symbols (symbol) included in the first control resource set. The network device may determine, based on the quantity 1 of symbols and the quantity N of resource blocks that are included in the first control resource set, and a size of the bandwidth supported by the first terminal device, the AL supported by the first terminal device and a corresponding quantity of candidate control channels. The following describes the AL supported by the first terminal device and the corresponding quantity of candidate control channels by using the following implementations A01 to A12 as examples.

A01: When the quantity 1 of symbols in the first control resource set is equal to 3, N is equal to 96, and the bandwidth supported by the first terminal device is greater than or equal to a bandwidth corresponding to N/2 resource blocks, a quantity of candidate control channels whose AL supported by the first terminal device is equal to 20 is 1, a quantity of candidate control channels whose AL supported by the first terminal device is equal to 16 is 1, a quantity of candidate control channels whose AL supported by the first terminal device is equal to 8 is 1 or 2, a quantity of candidate control channels whose AL supported by the first terminal device is equal to 4 is 2 or 3, and/or a quantity of candidate control channels whose AL supported by the first terminal device is equal to 22 is 1.

When the quantity 1 of symbols is equal to 3, N is equal to 96, and the bandwidth supported by the first terminal device falls within a bandwidth range of [N/2,N], the quantity of candidate control channels whose AL supported by the first terminal device is equal to 20 is 1. FIG. 2a is a schematic diagram of a candidate control channel according to an embodiment of this application. A mesh grid indicates a candidate control channel whose AL supported by the second terminal device is equal to 16. A horizontal linear grid indicates a candidate control channel supported by the first terminal device. A REG bundle index indicates an index of a REG bundle, a CCE index indicates an index of a CCE resource, and ncell indicates an identifier of a cell. It can be learned that the quantity of candidate control channels whose AL supported by the first terminal device is equal to 20 is 1, and the second terminal device and the first terminal device can share the first control resource set. This ensures an available resource of the first terminal device while minimizing impact on an optional resource of the second terminal device, so that the first terminal device can reliably communicate with the network device.

When the quantity 1 of symbols is equal to 3, N is equal to 96, and the bandwidth supported by the first terminal device falls within a bandwidth range of [N/2,N], the quantity of candidate control channels whose AL supported by the first terminal device is equal to 16 is 1. FIG. 2b is a schematic diagram of a candidate control channel according to an embodiment of this application. A mesh grid indicates a candidate control channel whose AL supported by the second terminal device is equal to 16. A horizontal linear grid indicates a candidate control channel whose AL supported by the second terminal device is equal to 8. A diagonal linear grid indicates a candidate control channel whose AL supported by the second terminal device is equal to 4. A dot grid indicates a candidate control channel supported by the first terminal device. Further, m is a sequence number of a candidate control channel. When m=0, a corresponding AL has only one candidate control channel. When m=0 or 1, a corresponding AL has two candidate control channels. The quantity of candidate control channels whose AL supported by the first terminal device is equal to 16 is 1, and the second terminal device and the first terminal device may share the first control resource set. This ensures an available resource of the first terminal device while minimizing impact on an optional resource of the second terminal device, so that the first terminal device can reliably communicate with the network device.

When the quantity 1 of symbols in the first control resource set is equal to 3, N is equal to 96, and the bandwidth supported by the first terminal device is greater than or equal to the bandwidth corresponding to the N/2 resource blocks, the quantity of candidate control channels whose AL supported by the first terminal device is equal to 8 is 1 or 2. FIG. 2b shows an example in which the quantity of candidate control channels whose AL is equal to 8 is 1. The quantity of candidate control channels whose AL supported by the first terminal device is equal to 8 is 1 or 2, and the second terminal device and the first terminal device may share the first control resource set. This ensures an available resource of the first terminal device while minimizing impact on an optional resource of the second terminal device, so that the first terminal device can reliably communicate with the network device.

When the quantity 1 of symbols in the first control resource set is equal to 3, N is equal to 96, and the bandwidth supported by the first terminal device is greater than or equal to the bandwidth corresponding to the N/2 resource blocks, the quantity of candidate control channels whose AL supported by the first terminal device is equal to 4 is 2 or 3. FIG. 2b shows an example in which the quantity of candidate control channels whose AL is equal to 4 is 2. The quantity of candidate control channels whose AL supported by the first terminal device is equal to 4 is 2 or 3, and the second terminal device and the first terminal device may share the first control resource set. This ensures an available resource of the first terminal device while minimizing impact on an optional resource of the second terminal device, so that the first terminal device can reliably communicate with the network device.

When the quantity 1 of symbols in the first control resource set is equal to 3, N is equal to 96, and the bandwidth supported by the first terminal device is greater than or equal to the bandwidth corresponding to the N/2 resource blocks, the quantity of candidate control channels whose AL supported by the first terminal device is equal to 22 is 1. The second terminal device and the first terminal device may share the first control resource set. This ensures an available resource of the first terminal device while minimizing impact on an optional resource of the second terminal device, so that the first terminal device can reliably communicate with the network device.

A02: When the quantity 1 of symbols in the first control resource set is equal to 2, N is equal to 96, and the bandwidth supported by the first terminal device is greater than or equal to a bandwidth corresponding to N/2 resource blocks, a quantity of candidate control channels whose AL supported by the first terminal device is equal to 16 is 1, a quantity of candidate control channels whose AL supported by the first terminal device is equal to 12 is 1, a quantity of candidate control channels whose AL supported by the first terminal device is equal to 8 is 1 or 2, and/or a quantity of candidate control channels whose AL supported by the first terminal device is equal to 4 is 2 or 3.

A03: When the quantity 1 of symbols in the first control resource set is equal to 1, N is equal to 96, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1. The second terminal device and the first terminal device may share the first control resource set. This ensures an available resource of the first terminal device while minimizing impact on an optional resource of the second terminal device, so that the first terminal device can reliably communicate with the network device.

A04: When the quantity 1 of symbols in the first control resource set is equal to 3, N is equal to 48, and the bandwidth supported by the first terminal device is greater than or equal to a bandwidth corresponding to N/2 resource blocks, a quantity of candidate control channels whose AL supported by the first terminal device is equal to 8 is 1, and/or a quantity of candidate control channels whose AL supported by the first terminal device is equal to 4 is 1. The second terminal device and the first terminal device may share the first control resource set. This ensures an available resource of the first terminal device while minimizing impact on an optional resource of the second terminal device, so that the first terminal device can reliably communicate with the network device.

A05: When the quantity 1 of symbols in the first control resource set is equal to 2, N is equal to 48, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1. The second terminal device and the first terminal device may share the first control resource set. This ensures an available resource of the first terminal device while minimizing impact on an optional resource of the second terminal device, so that the first terminal device can reliably communicate with the network device.

A06: When the quantity 1 of symbols in the first control resource set is equal to 1, N is equal to 48, and the bandwidth supported by the first terminal device is greater than or equal to a bandwidth corresponding to N/2 resource blocks, a quantity of candidate control channels whose AL supported by the first terminal device is equal to 2 is 1. The second terminal device and the first terminal device may share the first control resource set. This ensures an available resource of the first terminal device while minimizing impact on an optional resource of the second terminal device, so that the first terminal device can reliably communicate with the network device.

A07: When the quantity 1 of symbols in the first control resource set is equal to 3, N is equal to 96, and the bandwidth supported by the first terminal device is greater than or equal to a bandwidth corresponding to N/4 resource blocks, a quantity of candidate control channels whose AL supported by the first terminal device is equal to 12 is 1, a quantity of candidate control channels whose AL supported by the first terminal device is equal to 8 is 1, and/or a quantity of candidate control channels whose AL supported by the first terminal device is equal to 4 is 1 or 2. The second terminal device and the first terminal device may share the first control resource set. This ensures an available resource of the first terminal device while minimizing impact on an optional resource of the second terminal device, so that the first terminal device can reliably communicate with the network device.

A08: When the quantity 1 of symbols in the first control resource set is equal to 2, N is equal to 96, and the bandwidth supported by the first terminal device is greater than or equal to a bandwidth corresponding to N/4 resource blocks, a quantity of candidate control channels whose AL supported by the first terminal device is equal to 8 is 1, and/or a quantity of candidate control channels whose AL supported by the first terminal device is equal to 4 is 1. The second terminal device and the first terminal device may share the first control resource set. This ensures an available resource of the first terminal device while minimizing impact on an optional resource of the second terminal device, so that the first terminal device can reliably communicate with the network device.

A09: When the quantity 1 of symbols in the first control resource set is equal to 1, N is equal to 96, and the bandwidth supported by the first terminal device is greater than or equal to a bandwidth corresponding to N/4 resource blocks, a quantity of candidate control channels whose AL supported by the first terminal device is equal to 4 is 1. The second terminal device and the first terminal device may share the first control resource set. This ensures an available resource of the first terminal device while minimizing impact on an optional resource of the second terminal device, so that the first terminal device can reliably communicate with the network device.

A10: When the quantity 1 of symbols in the first control resource set is equal to 3, N is equal to 48, and the bandwidth supported by the first terminal device is greater than or equal to a bandwidth corresponding to N/4 resource blocks, a quantity of candidate control channels whose AL supported by the first terminal device is equal to 6 is 1, and/or a quantity of candidate control channels whose AL supported by the first terminal device is equal to 4 is 1. The second terminal device and the first terminal device may share the first control resource set. This ensures an available resource of the first terminal device while minimizing impact on an optional resource of the second terminal device, so that the first terminal device can reliably communicate with the network device.

A11: When the quantity 1 of symbols in the first control resource set is equal to 2, N is equal to 48, and the bandwidth supported by the first terminal device is greater than or equal to a bandwidth corresponding to N/4 resource blocks, a quantity of candidate control channels whose AL supported by the first terminal device is equal to 4 is 1. The second terminal device and the first terminal device may share the first control resource set. This ensures an available resource of the first terminal device while minimizing impact on an optional resource of the second terminal device, so that the first terminal device can reliably communicate with the network device.

A12: When the quantity 1 of symbols in the first control resource set is equal to 1, N is equal to 48, and the bandwidth supported by the first terminal device is greater than or equal to a bandwidth corresponding to N/4 resource blocks, a quantity of candidate control channels whose AL supported by the first terminal device is equal to 2 is 1. The second terminal device and the first terminal device may share the first control resource set. This ensures an available resource of the first terminal device while minimizing impact on an optional resource of the second terminal device, so that the first terminal device can reliably communicate with the network device.

In some embodiments of this application, indexes of Y REG bundles in X REG bundles corresponding to the AL that is supported by the first terminal device and that is equal to X are {i,i+1,...,i+(Y-1)}, indexes of remaining (X-Y) REG bundles in the X REG bundles are {j,j+1,...,j+(X-Y-1)}, and i and j are positive integers. There are a plurality of values of i and j for different quantities 1 of symbols in the first control resource set, the quantity N of resource blocks, and bandwidth ranges supported by the first terminal device. After i and j are determined, REG bundles that can be used by the first terminal device can be determined, so that the first terminal device can perform control channel monitoring.

Further, i and j meet at least one of the following cases:

When the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=16, B=32, and C=8. When X=8, A=20, B=32, and C=4. When X=8, A=16, B=36, and C=4. When X=4, A=16, B=34, and C=2. When X=4, A=20, B=34, and C=2. When X=4, A=20, B=32, and C=2. When X=4, A=22, B=34, and C=2. When X=20, A=16, B=28, and C=8. When X=22, A=16, B=32, and C=8. When X=24, A=16, B=28, and C=8.

When the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=12, B=16, and C=4. When X=12, A=12, B=20, and C=4. When X=8, A=12, B=24, and C=4. When X=8, A=12, B=20, and C=4. When X=4, A=12, B=20, and C=2. When X=4, A=14, B=22, and C=2. When X=8 and Y=8, indexes of eight REG bundles are i, i=0, 1, 2, ..., or 7, i=(n+A)mod W/2, and A={14,15,18,19,22,23,26,27}.

When the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=8, A=6, B=8, and C=2. When X=6, A=6, B=10, and C=2. When X=4, A=6, B=12, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=12, A=8, B=12, and C=4. When X=8, A=8, B=16, and C=4. When X=4, A=8 and C=4. When X=4, A=8, B=18, and C=2.

When the quantity 1 of symbols in the first control resource set is equal to 2, N is equal to 48, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=8, A=6, B=8, and C=2. When X=6, A=6, B=10, and C=2. When X=4, A=6, B=12, and C=2.

When the quantity 1 of symbols in the first control resource set is equal to 1, N is equal to 48, and the bandwidth supported by the first terminal device is greater than or equal to the bandwidth corresponding to the N/2 resource blocks, i=(n+A)mod W/2. A quantity of candidate control channels corresponding to the AL that is supported by the first terminal device and that is equal to X is C, n indicates an identifier of a cell in which the first terminal device is located, and mod indicates a modulo operation. When X=2, A=2 and C=2.

In some embodiments of this application, indexes of Y CCE resources in X CCE resources corresponding to the AL that is supported by the first terminal device and that is equal to X are {i,i+1,...,i+(Y-1)}, and indexes of (X-Y) CCE resources in the X CCE resources are {j,j+1,...,j+(X-Y-1)}. There are a plurality of values of i and j for different quantities 1 of symbols in the first control resource set, the quantity N of resource blocks, and bandwidth ranges supported by the first terminal device. After i and j are determined, CCE resources that can be used by the first terminal device can be determined, so that the first terminal device can perform control channel monitoring.

Further, i and j meet at least one of the following cases:

When the quantity 1 of symbols in the first control resource set is equal to 3, N is equal to 96, and the bandwidth supported by the first terminal device is greater than or equal to the bandwidth corresponding to the N/2 resource blocks, i=(32+T+A)mod W/2, and j=(17-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=16, A=0, B=0, and C=8. When X=8, A=8, B=0, and C=4. When X=8, A=0, B=8, and C=4. When X=4, A=0, B=4, and C=2. When X=4, A=8, B=4, and C=2. When X=4, A=8, B=0, and C=2. When X=4, A=12, B=4, and C=2. When X=20, A=0, B=-8, and C=8. When X=22, A=0, B=0, and C=8. When X=24, A=0, B=-8, and C=8.

When the quantity 1 of symbols in the first control resource set is equal to 2, N is equal to 96, and the bandwidth supported by the first terminal device is greater than or equal to the bandwidth corresponding to the N/2 resource blocks, i=(24+T+A)mod W/2, and j=(17-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. Further, n indicates an identifier of a cell in which the first terminal device is located, and mod indicates a modulo operation. When X=16, A=0, B=-16, and C=4. When X=12, A=0, B=-8, and C=4. When X=8, A=0, B=0, and C=4. When X=8, A=0, B=-8, and C=4. When X=4, A=0, B=-8, and C=2. When X=4, A=4, B=-4, and C=2. When X=8 and Y=8, indexes of eight CCE resources are i, and i=0, 1, 2, 3, 4, , or 7. When i=0 or 1, i=(A+T)mod W/2, and A={28,30}. When i=2, 3, 4, ..., or 7, i=(A-T)mod W/2, and A={5,7,13,15,21,23}. When n mod W belongs to {2^(1-u) to (2^(1-u)+W/2-1)}, T=1. When n mod W does not belong to {2^(1-u) to (2^(1-u)+W/2-1)}, T=0.

When the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, and j=(9-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0, B=-8, and C=2. When X=6, A=0, B=-4, and C=2. When X=4, A=0, B=0, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(16+T+A)mod W/2, and j=(9-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=12, A=0, B=-8, and C=4. When X=8, A=0, B=0, and C=4. When X=4, A=0 and C=4. When X=4, A=0, B=4, and C=2.

When the quantity 1 of symbols in the first control resource set is equal to 2, N is equal to 48, and the bandwidth supported by the first terminal device is greater than or equal to the bandwidth corresponding to the N/2 resource blocks, i=(12+T+A)mod W/2, and j=(9-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0, B=-8, and C=2. When X=6, A=0, B=-4, and C=2. When X=4, A=0, B=0, and C=2.

When the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, j=(5-T+B)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=2, A=0 and C=2.

In some embodiments of this application, resource indexes of Y REG bundles in X REG bundles corresponding to the AL that is supported by the first terminal device and that is equal to X are {i,i+1,...i+(Y-1)}, and indexes of remaining (X-Y) REG bundles in the X REG bundles are {j,j+1,...j+(X-Y-1)}. There are a plurality of values of i and j for different quantities 1 of symbols in the first control resource set, the quantity N of resource blocks, and bandwidth ranges supported by the first terminal device. After i and j are determined, REG bundles that can be used by the first terminal device can be determined, so that the first terminal device can perform control channel monitoring.

Further, i and j meet at least one of the following cases:

When the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=8 and C=16. When X=8, A=16 and C=8. When X=8, A=8, B=20, and C=4. When X=4, A=8, B=20, and C=2. When X=4, A=10, B=22, and C=2. When X=4, A=8, B=22, and C=2. When X=4, A=10, B=20, and C=2. When X=20, A=4 and C=20. When X=22, A=2 and C=22. When X=24, A=2, B=26, and C=22.

When the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=0 and C=16. When X=12, A=4 and C=12. When X=8, A=8 and C=8. When X=8, A=4, B=12, and C=4. When X=4, A=12, 4, or 8, and C=4. When X=4, A=10, B=14, and C=2. When X=4, A=6, B=14, and C=2.

When the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n=nCelliD, nCelliD indicates an identifier of a cell in which the first terminal device is located, and mod indicates a modulo operation. When X=8, A=6, B=8, and C=2. When X=6, A=6, B=10, and C=2. When X=4, A=6, B=12, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2. A quantity of candidate control channels corresponding to the AL that is supported by the first terminal device and that is equal to X is C, n indicates an identifier of a cell in which the first terminal device is located, and mod indicates a modulo operation. When X=12, A=0 and C=12. When X=8, A=4 and C=8. When X=4, A=8 and C=4. When X=4, A=4 and C=4.

When the quantity 1 of symbols in the first control resource set is equal to 2, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n=nCelliD, nCelliD indicates an identifier of a cell in which the first terminal device is located, and mod indicates a modulo operation. When X=8, A=0 and C=8. When X=6, A=2 and C=6. When X=4, A=4 and C=4.

When the quantity 1 of symbols in the first control resource set is equal to 1, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n=nCelliD, nCelliD indicates an identifier of a cell in which the first terminal device is located, and mod indicates a modulo operation. When X=2, A=2 and C=2.

In some embodiments of this application, indexes of Y CCE resources in X CCE resources corresponding to the AL that is supported by the first terminal device and that is equal to X are {i,i+1,...,i+(Y-1)}, and indexes of (X-Y) CCE resources in the X CCE resources are {j,j+1,...,j+(X-Y-1)}. There are a plurality of values of i and j for different quantities 1 of symbols in the first control resource set, the quantity N of resource blocks, and bandwidth ranges supported by the first terminal device. After i and j are determined, CCE resources that can be used by the first terminal device can be determined, so that the first terminal device can perform control channel monitoring.

When the quantity 1 of symbols in the first control resource set is equal to 3, N is equal to 96, and the bandwidth supported by the first terminal device is greater than or equal to the bandwidth corresponding to the N/2 resource blocks, i=(16+T+A)mod W/2, and j=(32+T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=16, A=0 and C=16. When X=8, A=0, B=0, and C=0. When X=8, A=0, B=8, and C=4. When X=4, A=0, B=8, and C=2. When X=4, A=4, B=10, and C=2. When X=4, A=0, B=10, and C=2. When X=4, A=4, B=8, and C=2. When X=20, A=-8 and C=8. When X=22, A=-12 and C=10. When X=24, A=-12, B=5, and C=22.

When the quantity 1 of symbols in the first control resource set is equal to 2, N is equal to 96, and the bandwidth supported by the first terminal device is greater than or equal to the bandwidth corresponding to the N/2 resource blocks, i=(8+T+A)mod W/2, and j=(24+T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=16, A=-8 and C=16. When X=12, A=0 and C=12. When X=8, A=8 and C=8. When X=8, A=0, B=0, and C=4. When X=4, A=0, 8, or 16, and C=4. When X=4, A=12, B=4, and C=2. When X=4, A=-4, B=4, and C=2.

When the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, j=(9-T+B)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0, B=-8, and C=2. When X=6, A=0, B=-4, and C=2. When X=4, A=0, B=0, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(8+T+A)mod W/2, and j=(16+T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=12, A=0 and C=12. When X=8, A=8 and C=8. When X=4, A=16 and C=4. When X=4, A=8 and C=4.

When the quantity 1 of symbols in the first control resource set is equal to 2, N is equal to 48, and the bandwidth supported by the first terminal device is greater than or equal to the bandwidth corresponding to the N/2 resource blocks, i=(0+T+A)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0 and C=8. When X=6, A=4 and C=6. When X=4, A=8 and C=4.

When the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=2, A=4 and C=2.

In some embodiments of this application, offset may be further performed on the X REG bundles corresponding to the AL that is supported by the first terminal device and that is equal to X. The first terminal device may perform control channel monitoring on offset REG bundles. There are a plurality of values of i and j for different quantities 1 of symbols in the first control resource set, the quantity N of resource blocks, and bandwidth ranges supported by the first terminal device. After i and j are determined, REG bundles that can be used by the first terminal device can be determined, so that the first terminal device can perform control channel monitoring.

The resource indexes {i,i+1,...,i+(Y-1)} of the Y REG bundles in the X REG bundles corresponding to the AL that is supported by the first terminal device and that is equal to X are dli+e and dli+f+E after offset, the resource indexes {j,j+1,...,j+(X-Y-1)} of the (X-Y) REG bundles are d2i+p and d2i+q+P after offset, e=0, 1, .. , or E, f=0, 1, ..., or F, E+F=Y, p=0, 1, ..., or P, q=0, 1, ..., or Q, and P+Q=X-Y.

When j+(X-Y-1)<W/2, d1i+e=i+e, d1i+f+E=i+f+E, d2i+p=j+p, and d2i+q+P=j+q+P, or d1i+e=i+e+W/2, d1i+f+E=i+f+E+W/2, d2i+p=j+p+W/2, and d2i+q+P=j+q+P+W/2.

When j<W/2≤j+(X-Y-1), d1i+e=i+e, d1i+f+E=i+f+E, d2i+p=j+p, d2i+q+P=j+q+P-W/2, dli+e=i+e+W/2, dli+f+E=i+f+E+W/2, d2i+p=j+p+W/2, d2i+q+P=j+q+P, and P=W/2-1-j.

When i+(Y-1)<W/2≤j, d1i+e=i+e, d1i+f+E=i+f+E, d2i+p=j+p-W/2, d2i+q+P=j+q+P-W/2, dli+e=i+e+W/2, dli+f+E=i+f+E+W/2, d2i+p=j+p, and d2i+q+P=j+q+P.

When i<W/2<i+(Y-1), d1i+e=i+e, dli+f+E=i+f+E-W/2, d2i+p=j+p-W/2, d2i+q+P=j+q+P-W/2, dli+e=i+e+W/2, d1i+f+E=i+f+E, d2i+p=j+p, d2i+q+P=j+q+P, and E=W/2-1-j.

When i ≥ W/2, dli+e=i+e-W/2, dli+f+E=i+f+E-W/2, d2i+p=j+p-W/2, d2i+q+P=j+q+P-W/2, d1i+e=i+e, d1i+f+E=i+f+E, d2i+p=j+p, and d2i+q+P=j+q+P.

For example, as shown in FIG. 2a, when a frequency domain bandwidth is equal to 96 RBs and the quantity of symbols is equal to 3 OS (OFDM symbols), a subcarrier spacing (subcarrierspace, SCS) is equal to 15 kilohertz (kHz), and a CORESET frequency domain bandwidth of the second terminal device (for example, legacy UE) is 20 MHz. If a maximum bandwidth that can be supported by the first terminal device (for example, REDCAP UE) is 10 MHz, a search space design is shown in FIG. 2b. A mesh grid indicates a candidate control channel whose AL supported by the second terminal device is equal to 16. A horizontal linear grid indicates a candidate control channel whose AL supported by the second terminal device is equal to 8. A diagonal linear grid indicates a candidate control channel whose AL supported by the second terminal device is equal to 4. A dot grid indicates a candidate control channel supported by the first terminal device. Further, m is a sequence number of a candidate control channel. When m=0, a corresponding AL has only one candidate control channel. When m=0 or 1, a corresponding AL has two candidate control channels. For example, a mesh grid indicates a quantity of candidate control channels whose AL supported by the legacy UE is equal to 16. A dot grid indicates a position of one candidate control channel whose AL supported by the REDCAP UE (RC UE for short) is equal to 8. Another candidate control channel whose AL supported by the REDCAP UE is equal to 8 overlaps with a control channel whose AL supported by the legacy UE is equal to 16. Still another candidate control channel whose AL supported by the REDCAP UE is equal to 8 falls within a range of a control channel whose AL supported by the legacy UE is equal to 16. Positions of the quantity of candidate control channels whose AL supported by the legacy UE is equal to 4 are indicated by diagonal linear grids as shown in FIG. 2b.

FIG. 2c is a schematic diagram of a candidate control channel according to an embodiment of this application. A mesh grid, a horizontal linear grid, and a diagonal linear grid each indicate a candidate control channel whose AL supported by the second terminal device is equal to 4.

It can be learned that a resource position design of a quantity of candidate control channels can ensure that an AL that is supported by the RC UE and that is equal to 16 does not affect the AL that is supported by the legacy UE and that is equal to 16. However, one candidate control channel whose AL supported by the legacy UE is equal to 8 and one candidate control channel whose AL is equal to 4 are affected. The AL that is supported by the RC UE and that is equal to 8 does not affect any AL supported by the legacy UE. An AL that is supported by the RC UE and that is equal to 4 does not affect any AL supported by the legacy UE. If a position of a frequency domain resource of a candidate control channel is a REG bundle index that is equal to 16, 17, 34, or 35, this can ensure a maximum interleaving depth. If a position of a frequency domain resource of a candidate control channel is a REG bundle index that is equal to 20, 21, 34, or 35, this can ensure a maximum interleaving depth while candidate control channels are symmetrically distributed in the two parts of resources.

In some embodiments of this application, ncell indicates an identifier of a cell, ncell is equal to nshift, and nshift indicates position offset of a candidate control channel. For example, when ncell=0, nshift=0, indicating that no offset occurs in the candidate control channel. FIG. 2d is a schematic diagram of a candidate control channel according to an embodiment of this application. When ncell=9, nshift=9. Compared with those in FIG. 2b, a pattern (pattern) of candidate control channels in FIG. 2d remains unchanged, and only positions of candidate control channels change.

For the AL that is supported by the RC UE and that is equal to 8 or 4, more candidates may also be provided to improve flexibility. As shown in FIG. 2e, when the AL is equal to 8, m=0 or 1 is supported. This improves flexibility of PDCCH mapping. The AL supported by the legacy UE may be equal to 16 while the AL supported by the RC UE is equal to 16. The AL supported by the legacy UE may be equal to 8 and m=1 while the AL supported by the RC UE is equal to 8 and m=0. When the AL supported by the legacy UE is equal to 8 and m=0 while the AL supported by the RC UE is equal to 8 and m=0 and 1, and while the AL supported by the RC UE is equal to 4, quantities of candidate control channels may coexist.

When receiving conditions of terminal devices are the same, a same corresponding AL indicates same coverage. The pattern (pattern) of candidate control channels can ensure the same coverage of two types of UEs. However, due to poor receiving performance of the RC UE (for example, a small quantity of antennas), an AL higher or no lower than the AL supported by the legacy UE may be needed to ensure the coverage.

Further, due to small quantities of receive antennas and transmit antennas or lower power of the REDCAP UE, a quantity of resources for the RC UE is considered to be increased to improve the coverage. A maximum AL supported by a protocol standard is equal to 16. When the AL supported by the legacy UE is equal to 8, 20 idle REG bundles (or CCE resources) may be available in a candidate resource range of the RC UE. Therefore, in this case, it is considered that the RC UE is allowed to support an AL that is equal to 20, and a quantity of candidate control channels that is equal to 1. A resource mapping position of a candidate control channel is indicated by a horizontal linear grid as shown in FIG. 2f.

Further, an AL level that may be introduced includes at least one of the following:

An AL is equal to 22, and a quantity of candidate control channels is equal to 1. As shown in FIG. 2g, when the AL supported by the legacy UE is equal to 4, 22 idle REG bundles (or CCE resources) may be available in a candidate resource range of the RC UE.

An AL is equal to 24, and a quantity of candidate control channels is equal to 1. As shown in FIG. 2h, in the foregoing embodiments, frequency domain bandwidths for transmission by the RC UE are calculated based on a half of CORESET 0, namely, 24 CCEs=48 RBs. If the RC UE supports a bandwidth of 10 MHz, a quantity of RBs that can be transmitted is actually (10 MHz/180 kHz/2)=27, and a maximum of 27 RBs can be supported. As shown in FIG. 2h, a horizontal linear grid and a dot grid each indicate a candidate control channel of the first terminal device. Impact on the legacy UE is still minimized as much as possible according to the previous principle. When the RC UE supports the AL that is equal to 24, a resource range is increased to CCE indexes 33 and 35, namely, REG bundle indexes 40 and 41.

The following describes in detail a case in which the quantity N of resource blocks in the first control resource set is equal to 96 and the quantity 1 of symbols is equal to 2 (which is briefly described as 96 RBs×2 OS).

As shown in FIG. 2i, if the RC UE is intended to support the AL that is equal to 16, the legacy UE cannot simultaneously support or perform transmission corresponding to the AL that is equal to 16. When the AL supported by the RC UE is equal to 8, a first alternative pattern (pattern) may coexist with the AL that is supported by the legacy UE and that is equal to 8. When the AL supported by the RC UE is equal to 8, a second alternative pattern is compatible with the AL that is supported by the legacy UE and that is equal to 16. However, the second alternative pattern is not compatible with m=1 when the AL supported by the legacy UE is equal to 8. When the AL supported by the RC UE is equal to 8, a third alternative pattern may coexist with the AL that is supported by the legacy UE and that is equal to 4. Therefore, compared with the second alternative pattern, the third alternative pattern is more suitable for being used as a candidate control channel of the RC UE. When the AL supported by the RC UE is equal to 4, the second alternative pattern is compatible with patterns in which the AL supported by the legacy UE is equal to 4, and the first alternative pattern is incompatible with m=3.

The following describes in detail a case in which the quantity N of resource blocks in the first control resource set is equal to 96 and the quantity 1 of symbols is equal to 1 (which is briefly described as 96 RBs×1 OS). As shown in FIG. 2j and FIG. 2k, a mesh grid indicates a candidate control channel of the first terminal device (for example, RC UE), a dot grid indicates a candidate control channel of the second terminal device (for example, legacy UE), and a pattern in which an AL supported by the RC UE is equal to 4 may protect a pattern in which an AL supported by the legacy UE is equal to 8. A pattern in which the AL supported by the RC UE is equal to 6 may coexist with the AL that is supported by the legacy UE and that is equal to 4. If the RC UE is intended to support the AL that is equal to 8, the legacy UE cannot simultaneously support/transmit DCI.

The following describes in detail a case in which the quantity N of resource blocks in the first control resource set is equal to 48 and the quantity 1 of symbols is equal to 3 (which is briefly described as 48 RBs×3 OS). As shown in FIG. 21, a mesh grid, a diagonal linear grid, a square grid, and a horizontal linear grid each indicate a candidate control channel of the second terminal device (for example, legacy UE), a blank grid below a CCE index indicates a candidate control channel of the first terminal device (for example, RC UE). If the RC UE is intended to support the AL that is equal to 12, the legacy UE cannot simultaneously support or transmit DCI. An AL that is supported by the RC UE and that is equal to 8 may coexist with m=0 when an AL supported by the legacy UE is equal to 8. When the AL supported by the RC UE is equal to 4, a first alternative pattern may coexist with the ALs that are supported by the legacy UE and that are equal to 8 and 4 respectively. When the AL supported by the RC UE is equal to 4, a second alternative pattern may coexist with m=0, 1, or 2 when the AL supported by the legacy UE is equal to 8 and 4.

The following describes in detail a case in which the quantity N of resource blocks in the first control resource set is equal to 48 and the quantity 1 of symbols is equal to 2 (which is briefly described as 48 RBs×2 OS). The case of 48 RBs×2 OS is the same as the case of 96 RBs×1 OS, and details are not described herein again.

The following describes in detail a case in which the quantity N of resource blocks in the first control resource set is equal to 48 and the quantity 1 of symbols is equal to 1 (which is briefly described as 48 RBs×1 OS). As shown in FIG. 2m, a mesh grid indicates a candidate control channel of the second terminal device, and a dot grid indicates a candidate control channel of the first terminal device. If the RC UE is intended to support the AL that is equal to 4, the legacy UE cannot simultaneously support/transmit DCI. An AL that is supported by the RC UE and that is equal to 2 may coexist with an AL that is supported by the legacy UE and that is equal to 4.

Based on the foregoing example description, in this embodiment of this application, selection of a candidate control channel of the REDCAP UE affects candidate control channels of the legacy UE as less as possible. To reduce blind detection complexity, a quantity of candidate control channels corresponding to each AL is reduced.

For the current AL, a quantity and positions of candidate control channels are determined when the RC UE and the legacy UE share the CORESET 0. In addition, a new aggregation level (AL that is equal to 6, 12, 20, or the like) is introduced, and a quantity and resource positions of corresponding candidate control channels are determined. To reduce complexity of blind detection of the REDCAP UE, a quantity of candidate control channels of the REDCAP UE is not greater than a quantity of candidate control channels of the legacy UE corresponding to a same AL.

It should be noted that in the foregoing example, meanings of the RC UE, the REDCAP UE, and the NRL UE are the same.

The following describes another application scenario of this application by using an example. As shown in FIG. 2n and FIG. 2o, a mesh grid indicates a candidate control channel of the second terminal device, and a dot grid indicates a candidate control channel of the first terminal device. The following describes a quantity and positions of candidate control channels during mapping in a resource range for determining a quantity of candidate control channels of the REDCAP UE. Selection of the candidate control channels of the RC UE affects candidate control channels of the legacy UE as less as possible. In this embodiment of this application, blind detection complexity can be reduced as much as possible, and an interleaving depth as deep as possible is used in this embodiment of this application.

A scenario in which the RC UE uses a 1/2 bandwidth is first described. At 96 RBs×3 OS, as shown in FIG. 2p, a mesh grid indicates a candidate control channel of a second terminal device, and a dot grid indicates a candidate control channel of a first terminal device. When a frequency domain bandwidth is equal to 96 RBs, and a quantity of symbols is equal to 3 OS (OFDM symbols), a subcarrier spacing SCS is equal to 15 kHz, and a CORESET frequency domain bandwidth of the legacy UE is 20 MHz. If a maximum bandwidth that can be supported by the REDCAP UE is 10 MHz, a search space design is shown in FIG. 2p. Further, m is a sequence number of a candidate control channel. When m=0, a corresponding AL has only one candidate control channel. When m=0 or 1, a corresponding AL has two candidate control channels.

A position of a quantity of candidate control channels whose AL supported by the RC UE is equal to 16 is shown in FIG. 2p. One or two candidate control channels may be considered for the AL that is supported by the RC UE and that is equal to 8. A frequency domain start position is REG bundle index+8 or CCE index+16 (m=0 in FIG. 2p) when the AL supported by the legacy UE is equal to 8 and m=0. If there are two candidate control channels, a quantity of candidate control channels whose m=1 in FIG. 2p is increased. When the AL supported by the RC UE is equal to 4, two candidate control channels may be considered. There may be two patterns shown in FIG. 2p. In pattern 1, interleaving depths of two candidate control channels are the same. In pattern 2, candidate control channels are symmetrically distributed within a frequency domain resource range.

It can be learned that, when the AL supported by the legacy UE is equal to 16, quantities of candidate control channels of the legacy UE and the RC UE may completely coexist. When the AL supported by the legacy UE is equal to 8, and m=0, candidate control channels of the legacy UE and the RC UE may completely coexist. When the AL supported by the legacy UE is equal to 8, and m=1, the AL supported by the RC UE may be equal to 8 or 4. A criterion for determining a frequency domain resource for a quantity of candidate control channels is met.

It should be noted that, in the figures of following embodiments, a dot grid indicates a candidate control channel of the first terminal device, and a grid filled in another shape indicates a candidate control channel of the second terminal device. For example, a mesh grid indicates a candidate control channel of the second terminal device.

Further, the following AL level may be introduced. As shown in FIG. 2q, the AL supported by the legacy UE is equal to 4, the AL supported by the RC UE is equal to 20, and AL=20. As shown in FIG. 2r, the AL supported by the legacy UE is equal to 8, and the AL supported by the RC UE is equal to 20. AL=20, and the quantity of candidate control channels is equal to 1. A frequency domain start position is a frequency domain start resource REG bundle index+4 or CCE index+8 of a candidate control channel of the legacy UE whose m=0, namely nshift+4 or nshift+8.

As shown in FIG. 2s, the AL supported by the legacy UE is equal to 4, the AL supported by the RC UE is equal to 22, and the quantity of candidate control channels is equal to 1. A frequency domain start position is a frequency domain start resource REG bundle index+2 or CCE index+4 of a candidate control channel of the legacy UE whose m=0, namely nshift+2 or nshift+4.

The following describes in detail a case in which the quantity N of resource blocks in the first control resource set is equal to 96 and the quantity 1 of symbols is equal to 2 (which is briefly described as 96 RBs×2 OS). As shown in FIG. 2t, the AL supported by the legacy UE is equal to 8, the AL supported by the RC UE is equal to 12, and the quantity of candidate control channels is equal to 1. A frequency domain start position of the RC UE is a frequency domain start resource REG bundle index+4 or CCE index+8 of a candidate control channel of the legacy UE whose m=0, namely nshift+4 or nshift+8. Therefore, the frequency domain start position of the candidate control channel of the RC UE may be determined by using the start position of the candidate control channel of the legacy UE and offset (nshift).

As shown in FIG. 2u, the AL supported by the legacy UE is equal to 16, the AL supported by the RC UE is equal to 8, and the quantity of candidate control channels is equal to 1/2, where 1/2 represents 1 or 2. Similarly, 1/2/3 represents 1, 2, or 3. A case of a candidate control channel is that a frequency domain start position is a frequency domain start resource REG bundle index+8 or CCE index+16 of a candidate control channel of the legacy UE whose m=0, namely nshift+8 or nshift+16. Therefore, the frequency domain start position of the candidate control channel of the RC UE may be determined by using the start position of the candidate control channel of the legacy UE and offset (nshift).

As shown in FIG. 2v, the AL supported by the legacy UE is equal to 8, and the AL supported by the RC UE is equal to 8. Another case of a candidate control channel is that a frequency domain start position is a first part of a frequency domain start resource REG bundle index+4 or CCE index+8 of a quantity of candidate control channels of the legacy UE whose m=0, namely nshift+4 or nshift+8. A second part of the frequency-domain start resource is REG bundle index+12 or CCE index+24, namely nshift+12 or nshift+24. Therefore, the frequency domain start position of the candidate control channel of the RC UE may be determined by using the start position of the candidate control channel of the legacy UE and offset (nshift). Therefore, the frequency domain start position of the candidate control channel of the RC UE may be determined by using the start position of the candidate control channel of the legacy UE and offset (nshift).

When the AL supported by the RC UE is equal to 4, the quantity of candidate control channels is equal to 1/2/3, including the following two manners:

Manner 1: As shown in FIG. 2w, the AL supported by the legacy UE is equal to 16, four consecutive REG bundles are selected. In an implementation of the candidate control channel, a frequency domain start position is nshift+12 of the legacy UE. A frequency domain start position is a frequency domain start resource REG bundle index+12 or CCE index+24 of a candidate control channel of the legacy UE whose m=0, namely nshift+12 or nshift+24. For another quantity of candidate control channels, a frequency domain start position is nshift+4 and/or nshift+8 of the legacy UE. Therefore, the frequency domain start position of the candidate control channel of the RC UE may be determined by using the start position of the candidate control channel of the legacy UE and offset (nshift).

Manner 2: Non-consecutive REG bundles are selected.

As shown in FIG. 2x, the AL supported by the legacy UE is equal to 4. A frequency domain start position is a first part of a frequency domain start resource REG bundle index+10 or CCE index+20 of a quantity of candidate control channels of the legacy UE whose m=0, namely nshift+ 10 or nshift+20. A second part of the frequency-domain start resource is REG bundle index+14 or CCE index+28, namely nshift+14 or nshift+28. Therefore, the frequency domain start position of the candidate control channel of the RC UE may be determined by using the start position of the candidate control channel of the legacy UE and offset (nshift).

As shown in FIG. 2y, the AL supported by the legacy UE is equal to 4. A frequency domain start position is a first part of a frequency domain start resource REG bundle index+6 or CCE index+12 of a quantity of candidate control channels of the legacy UE whose m=0, namely nshift+6 or nshift+12. A second part of the frequency-domain start resource is REG bundle index+14 or CCE index+28, namely nshift+14 or nshift+28. Therefore, the frequency domain start position of the candidate control channel of the RC UE may be determined by using the start position of the candidate control channel of the legacy UE and offset (nshift).

Further, the following quantity of candidate control channels may be introduced. As shown in FIG. 2za, the AL supported by the legacy UE is equal to 8, the AL supported by the RC UE is equal to 14, and the quantity of candidate control channels is equal to 1. A detected bandwidth range of the NRL UE should start from nshift+4 to a position of nshift+21. There are 18 REG bundles in total, and a bandwidth is 180 kHz×3×18=9.72 MHz. This can ensure that impact on a quantity of candidate control channels of another AL is minimized.

As shown in FIG. 2zb, the AL supported by the legacy UE is equal to 4, the AL supported by the RC UE is equal to 16, and the quantity of candidate control channels is equal to 1.

The following describes in detail a case in which the quantity N of resource blocks in the first control resource set is equal to 96 and the quantity 1 of symbols is equal to 1 (which is briefly described as 96 RBs×1 OS). As shown in FIG. 2zc, the AL supported by the RC UE is equal to 6, and the quantity of candidate control channels is equal to 1.

As shown in FIG. 2zd, the AL supported by the RC UE is equal to 4, and the quantity of candidate control channels is equal to 1.

The following describes in detail a case in which the quantity N of resource blocks in the first control resource set is equal to 48 and the quantity 1 of symbols is equal to 3 (which is briefly described as 48 RBs×3 OS).

When a frequency domain bandwidth is equal to 48 RBs, and a quantity of symbols is equal to 3 OS (OFDM symbols), a subcarrier spacing SCS is equal to 30 kHz, and a CORESET frequency domain bandwidth of the legacy UE is 20 MHz. If a maximum bandwidth that can be supported by the REDCAP UE is 10 MHz, a quantity and positions of candidate control channels are shown in Table 1.

| | | | | |
|---|---|---|---|---|
| AL | 10 (or 11) | 8 (or 9) | 4 | |
| Quantity of candidate control channels | 1 | 1 | 1 | |

As shown in FIG. 2ze, the AL supported by the legacy UE is equal to 4, the AL supported by the RC UE is equal to 10, and the quantity of candidate control channels is equal to 1.

As shown in FIG. 2zf, the AL supported by the legacy UE is equal to 8, the AL supported by the RC UE is equal to 8, and the quantity of candidate control channels is equal to 1.

As shown in FIG. 2zg, the AL supported by the legacy UE is equal to 8, the AL supported by the RC UE is equal to 4, and the quantity of candidate control channels is equal to 1.

If the quantity of candidate control channels is configured based on maximum utilization of a bandwidth supported by the NRL UE, AL=10 and 8 may be extended to AL=11 and AL=9 respectively. As shown in FIG. zh, the AL supported by the legacy UE is equal to 4, the AL supported by the RC UE is equal to 11, and the quantity of candidate control channels is equal to 1. As shown in FIG. zi, the AL supported by the legacy UE is equal to 8, the AL supported by the RC UE is equal to 9, and the quantity of candidate control channels is equal to 1.

The following describes in detail a case in which the quantity N of resource blocks in the first control resource set is equal to 48 and the quantity 1 of symbols is equal to 2 (which is briefly described as 48 RBs×2 OS).

As shown in FIG. 2zj, the AL supported by the legacy UE is equal to 4, the AL supported by the RC UE is equal to 6, and the quantity of candidate control channels is equal to 1, as shown in Table 2.

| | | | | |
|---|---|---|---|---|
| AL | 6 | 4 | | |
| Quantity of candidate control channels | 1 | 1 | | |

As shown in FIG. 2zk, the AL supported by the legacy UE is equal to 4, the AL supported by the RC UE is equal to 4, and the quantity of candidate control channels is equal to 1.

If the quantity of candidate control channels is configured based on maximum utilization of a bandwidth supported by the NRL UE, AL=6 and 4 may be extended to AL=7 and AL=5 respectively.

The following describes in detail a case in which the quantity N of resource blocks in the first control resource set is equal to 48 and the quantity 1 of symbols is equal to 1 (which is briefly described as 48 RBs×1 OS).

As shown in FIG. 2zl, the AL supported by the legacy UE is equal to 4, the AL supported by the RC UE is equal to 2, and the quantity of candidate control channels is equal to 1, as shown in Table 3.

| | | | | |
|---|---|---|---|---|
| AL | 2 | | | |
| Quantity of candidate control channels | 1 | | | |

In this case, the NRL UE has poor coverage, and is applicable only to a very good channel condition (for example, UE in a central area of a cell). Therefore, a case in which if CORESET 0 resources of the NRL UE and the legacy UE overlap, the base station does not support configuration of one symbol may be considered.

The following describes a scenario in which the first terminal device uses a 1/4 bandwidth.

The following describes in detail a case in which the quantity N of resource blocks in the first control resource set is equal to 96 and the quantity 1 of symbols is equal to 3 (which is briefly described as 96 RBs×3 OS).

When a frequency domain bandwidth is equal to 96 RBs, and a quantity of symbols is equal to 3 OS (OFDM symbols), a subcarrier spacing SCS is equal to 15 kHz, and a CORESET frequency domain bandwidth of the legacy UE is 20 MHz. If a maximum bandwidth that can be supported by the REDCAP UE is 5 MHz, a search space design is shown in FIG. 2zm, FIG. 2zn, and FIG. 2zo, and is summarized in Table 4.

| | | | | |
|---|---|---|---|---|
| AL | 12 | 8 | 4 | |
| Quantity of candidate control channels | 1 | 1 | 1/2 | |

The quantity of candidate control channels whose AL supported by the RC UE is 4 and that is equal to 2 may be REG bundle index=16 to 19 or 14 to 17.

Alternatively, as shown in FIG. 2zp, FIG. 2zq, and FIG. 2zr, the quantity of candidate control channels whose AL supported by the RC UE is 4 and that is equal to 2 may be REG bundle index=16 to 19 or 14 to 17.

The following describes in detail a case in which the quantity N of resource blocks in the first control resource set is equal to 96 and the quantity 1 of symbols is equal to 2 (which is briefly described as 96 RBs×2 OS).

As shown in FIG. 2zs and FIG. 2zt, a dot grid indicates a candidate control channel of the first terminal device, and is summarized in Table 5.

| | | | | |
|---|---|---|---|---|
| AL | 8 | 4 | | |
| Quantity of candidate control channels | 1 | 1 | | |

The following describes in detail a case in which the quantity N of resource blocks in the first control resource set is equal to 96 and the quantity 1 of symbols is equal to 1 (which is briefly described as 96 RBs×1 OS).

As shown in FIG. 2zu, a dot grid indicates a candidate control channel of the first terminal device, and is summarized in Table 6.

| | | | | |
|---|---|---|---|---|
| AL | | 4 | | |
| Quantity of candidate control channels | | 1 | | |

The following describes in detail a case in which the quantity N of resource blocks in the first control resource set is equal to 48 and the quantity 1 of symbols is equal to 3 (which is briefly described as 48 RBs×3 OS).

As shown in FIG. 2zv and FIG. 2zw, a dot grid indicates a candidate control channel of the first terminal device, and is summarized in Table 7.

| | | | | |
|---|---|---|---|---|
| AL | 6 | 4 | | |
| Quantity of candidate control channels | 1 | 1 | | |

The following describes in detail a case in which the quantity N of resource blocks in the first control resource set is equal to 48 and the quantity 1 of symbols is equal to 2 (which is briefly described as 48 RBs×2 OS).

As shown in FIG. 2zx, a dot grid indicates a candidate control channel of the first terminal device, and is summarized in Table 8.

| | | | | |
|---|---|---|---|---|
| AL | | 4 | | |
| Quantity of candidate control channels | | 1 | | |

The following describes in detail a case in which the quantity N of resource blocks in the first control resource set is equal to 48 and the quantity 1 of symbols is equal to 1 (which is briefly described as 48 RBs×1 OS).

As shown in FIG. 2zy, a dot grid indicates a candidate control channel of the first terminal device, and is summarized in Table 9.

| | | | | |
|---|---|---|---|---|
| AL | | 2 | | |
| Quantity of candidate control channels | | 1 | | |

The foregoing cases are summarized to obtain a quantity of candidate control channels when a bandwidth BW is equal to 10 MHz, as shown in Table 10.

| BW=10 MHz | Symbol | REG bundle | 20 (or 22/24) | 16 | 12 | 10 | 8 | 6 | 4 | 2 |
|---|---|---|---|---|---|---|---|---|---|---|
| 15 kHz | 3 | 48 | 1 | 1 | | | 1/2 | | 2/3 | |
| | 2 | 32 | | 1 | 1 | | 1/2 | | 1/2/3 | |
| | 1 | 16 | | | | | | 1 | 1 | |
| 30 kHz | 3 | 24 | | | | 1 | 1 | | 1 | |
| | 2 | 16 | | | | | | 1 | 1 | |
| | 1 | 8 | | | | | | | | 1 |

The foregoing cases are summarized to obtain a quantity of candidate control channels when a bandwidth BW is equal to 5 MHz, as shown in Table 11.

| BW=5 MHz | Symbol | REG bundle | 20 (or 22/24) | 16 | 12 | 10 | 8 | 6 | 4 | 2 |
|---|---|---|---|---|---|---|---|---|---|---|
| 15 kHz | 3 | 48 | | | 1 | | 1 | | 1/2 | |
| | 2 | 32 | | | | | 1 | | 1 | |
| | 1 | 16 | | | | | | | 1 | |
| 30 kHz | 3 | 24 | | | | | | 1 | 1 | |
| | 2 | 16 | | | | | | | 1 | |
| | 1 | 8 | | | | | | | | 1 |

It can be learned from the foregoing example description that, in this embodiment of this application, selection of a candidate control channel of the REDCAP UE affects candidate control channels of the legacy UE as less as possible. To reduce blind detection complexity, a quantity of candidate control channels corresponding to each AL is reduced, and an interleaving depth as deep as possible is used to increase a frequency diversity gain.

For the current AL, a quantity and positions of candidate control channels are determined when the REDCAP UE and the legacy UE share the CORESET 0. In addition, a new aggregation level (AL that is equal to 6, 12, 20, or the like) is introduced, and a quantity and resource positions of corresponding candidate control channels are determined. To reduce complexity of blind detection of the REDCAP UE, a quantity of candidate control channels of the REDCAP UE is not greater than a quantity of candidate control channels of the legacy UE corresponding to a same AL.

The following uses an example to describe a pattern of a candidate control channel that can support frequency hopping. For example, FIG. 2zz shows a candidate control channel without frequency hopping. A frequency domain range when nshift=2 and a quantity of candidate control channels of the REDCAP UE are shown in FIG. 2zza. It can be learned that a design of the candidate control channel is similar to that in the foregoing embodiment. A difference lies in that the pattern in the foregoing embodiment+nshift)mod(bandwidth/2), namely a part of the pattern in the foregoing embodiment that exceeds half of the bandwidth after being shifted rightward by nshift, is moved to a low-frequency part. Therefore, the pattern in this embodiment may be transformed based on the pattern in the foregoing embodiment, and details are not described herein again.

It can be learned from the foregoing of example description that, selection of a candidate control channel of the REDCAP UE affects candidate control channels of the legacy UE as less as possible. To reduce blind detection complexity, a quantity of candidate control channels corresponding to each AL is reduced, and an interleaving depth as deep as possible is used to increase a frequency diversity gain.

For the current AL, a quantity and positions of candidate control channels are determined when the REDCAP UE and the legacy UE share the CORESET 0. In addition, a new aggregation level (AL that is equal to 6, 12, 20, or the like) is introduced, and a quantity and resource positions of corresponding candidate control channels are determined. To reduce complexity of blind detection of the REDCAP UE, a quantity of candidate control channels of the REDCAP UE is not greater than a quantity of candidate control channels of the legacy UE corresponding to a same AL.

102: The network device sends first information to the first terminal device, where the first information indicates the first control resource set.

After obtaining an attribute feature that the first terminal device meets, the network device determines the first control resource set for the first terminal device. The network device sends the first information to the first terminal device. The first information indicates the first control resource set, so that the first terminal device can determine the first control resource set by receiving the first information. For example, the first information may be configuration information of the control resource set.

111: The first terminal device receives the first information from the network device, where the first information indicates the first control resource set.

A quantity of resource blocks in the first control resource set is N, a quantity of resource element group bundles REG bundles in the first control resource set is W, a bandwidth supported by the first terminal device is less than a bandwidth corresponding to the N resource blocks, the bandwidth supported by the first terminal device is less than a bandwidth supported by a second terminal device, N and W are positive integers; and an aggregation level AL supported by the first terminal device comprises X, and an AL supported by the second terminal device does not comprise X, and/or a quantity of candidate control channels supported by the first terminal device in a first search space SS set is Y1, a quantity of candidate control channels supported by the second terminal device in the first search space set is Z, and Y1 is less than or equal to Z. For description of the attribute feature that the first terminal device meets, refer to the description in step 101. Details are not described herein again.

Specifically, after obtaining an attribute feature that the first terminal device meets, the network device determines the first control resource set for the first terminal device. The network device sends the first information to the first terminal device. The first information indicates the first control resource set, so that the first terminal device can determine the first control resource set by receiving the first information. For example, the first information may be configuration information of the control resource set.

103: The network device sends a first control channel on M REG bundles in the W REG bundles or on M CCE resources corresponding to the M REG bundles, where M is less than W.

In this embodiment of this application, after the network device sends the first information to the first terminal device, the network device determines the M REG bundles in the W REG bundles or the M CCE resources corresponding to the M REG bundles, where M is less than W. W indicates a quantity of REG bundles in the first control resource set, and a value of M is not limited.

The network device may send the first control channel to the first terminal device on the M REG bundles. For example, the first control channel is one or more control channels determined by the base station. Alternatively, the network device sends the first control channel on the M CCE resources corresponding to the M REG bundles. There is a correspondence between an index of a REG bundle and an index of a CCE resource.

Further, in some embodiments of this application, the communication method provided in this embodiment of this application further includes:

The network device sends control information to the first terminal device on R REG bundles, and the control information to the second terminal device on S REG bundles.

The R REG bundles do not overlap with the S REG bundles. The R REG bundles are used by the first terminal device to receive the control information. The S REG bundles are used by the second terminal device to receive the control information. In this embodiment of this application, communication between the first terminal device and the network device does not affect the second terminal device.

112: The first terminal device monitors the first control channel on the M REG bundles in the W REG bundles or on the M CCE resources corresponding to the M REG bundles, where M is less than W.

In this embodiment of this application, the first terminal device receives the first information, and determines the foregoing first control resource set. The first terminal device may obtain that a quantity of REG bundles included in the first control resource set is W. The first terminal device determines a value of M, and then may monitor the first control channel on the M REG bundles, or may monitor the first control channel on the M CCE resources corresponding to the M REG bundles. In this embodiment of this application, the network device allocates, to the first terminal device, the M REG bundles in the W REG bundles or the M CCE resources corresponding to the M REG bundles. Therefore, the first terminal device may monitor the control channel on the M REG bundles or the M CCE resources, to implement communication between the first terminal device and the network device. In this solution, the network device can send a control channel for a first terminal device, and the first terminal device is distinguished from a second terminal device. This can meet requirements of different types of terminal devices for control channels.

Further, in some embodiments of this application, the communication method provided in this embodiment of this application further includes:

The first terminal device receives control information on R REG bundles. The R REG bundles do not overlap with S REG bundles, and the S REG bundles are used by the second terminal device to receive the control information.

The R REG bundles do not overlap with the S REG bundles. The R REG bundles are used by the first terminal device to receive the control information. The S REG bundles are used by the second terminal device to receive the control information. In this embodiment of this application, communication between the first terminal device and the network device does not affect the second terminal device.

It should be noted that, for brevity, the foregoing method embodiments are represented as a series of actions. But persons skilled in the art should appreciate that embodiments of this application is not limited to the order of the described actions, because according to embodiments of this application, some steps may adopt other order or occur simultaneously. In addition, a person skilled in the art should also appreciate that all the embodiments described in the specification are example embodiments, and the related actions and modules are not necessarily mandatory to embodiments of this application.

To better implement the solutions of embodiments of this application, a related apparatus for implementing the solutions is further provided below.

As shown in FIG. 3, an embodiment of this application provides a communication apparatus. The communication apparatus may be a first terminal device, an apparatus in a first terminal device, or an apparatus that can be used together with a first terminal device. FIG. 3 is shown by using an example in which the communication apparatus is a first terminal device 300. The first terminal device 300 may include a transceiver module 301 and a processing module 302.

The transceiver module is configured to receive first information from a network device, where the first information indicates a first control resource set, a quantity of resource blocks in the first control resource set is N, a quantity of resource element group bundles REG bundles in the first control resource set is W, a bandwidth supported by the first terminal device is less than a bandwidth corresponding to the N resource blocks, the bandwidth supported by the first terminal device is less than a bandwidth supported by a second terminal device, N and W are positive integers; and an aggregation level AL supported by the first terminal device includes X, and an AL supported by the second terminal device does not include X, and/or a quantity of candidate control channels supported by the first terminal device in a first search space SS set is Y1, a quantity of candidate control channels supported by the second terminal device in the first search space set is Z, and Y1 is less than or equal to Z. The processing module is configured to monitor a first control channel on M REG bundles in the W REG bundles or on M control channel element CCE resources corresponding to the M REG bundles, where M is less than W.

As shown in FIG. 4, an embodiment of this application provides a communication apparatus. The communication apparatus may be a network device, an apparatus in a network device, or an apparatus that can be used together with a network device. FIG. 4 is shown by using an example in which the communication apparatus is a network device 400. The network device 400 may include a transceiver module 401 and a processing module 402.

In a possible implementation, the processing module is configured to determine a first control resource set for a first terminal device, where a quantity of resource blocks in the first control resource set is N, a quantity of resource element group bundles REG bundles in the first control resource set is W, a bandwidth supported by the first terminal device is less than a bandwidth corresponding to the N resource blocks, the bandwidth supported by the first terminal device is less than a bandwidth supported by a second terminal device, N and W are positive integers; and an aggregation level AL supported by the first terminal device includes X, and an AL supported by the second terminal device does not include X, and/or a quantity of candidate control channels supported by the first terminal device in a first search space SS set is Y, a quantity of candidate control channels supported by the second terminal device in the first search space set is Z, and Y is less than or equal to Z. The transceiver module is configured to send first information to the first terminal device, where the first information indicates the first control resource set. The transceiver module is further configured to send a first control channel on M REG bundles in the W REG bundles or on M control channel element CCE resources corresponding to the M REG bundles, where M is less than W.

In the fourth aspect of this application, the modules constituting the communication apparatus may further perform the steps described in the second aspect and the possible implementations of the second aspect. For details, refer to the descriptions in the second aspect and the possible implementations of the second aspect.

In a possible implementation, X includes at least one of the following values: 6, 12, 20, and 22.

In a possible implementation, when a quantity 1 of symbols in the first control resource set is equal to 3, N is equal to 96, and the bandwidth supported by the first terminal device is greater than or equal to a bandwidth corresponding to N/2 resource blocks, a quantity of candidate control channels whose AL supported by the first terminal device is equal to 20 is 1, a quantity of candidate control channels whose AL supported by the first terminal device is equal to 16 is 1, a quantity of candidate control channels whose AL supported by the first terminal device is equal to 8 is 1 or 2, a quantity of candidate control channels whose AL supported by the first terminal device is equal to 4 is 2 or 3, and/or a quantity of candidate control channels whose AL supported by the first terminal device is equal to 22 is 1.

When a quantity 1 of symbols in the first control resource set is equal to 2, N is equal to 96, and the bandwidth supported by the first terminal device is greater than or equal to a bandwidth corresponding to N/2 resource blocks, a quantity of candidate control channels whose AL supported by the first terminal device is equal to 16 is 1, a quantity of candidate control channels whose AL supported by the first terminal device is equal to 12 is 1, a quantity of candidate control channels whose AL supported by the first terminal device is equal to 8 is 1 or 2, and/or a quantity of candidate control channels whose AL supported by the first terminal device is equal to 4 is 2 or 3.

When a quantity 1 of symbols in the first control resource set is equal to 1, N is equal to 96, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1.

When a quantity 1 of symbols in the first control resource set is equal to 3, N is equal to 48, and the bandwidth supported by the first terminal device is greater than or equal to a bandwidth corresponding to N/2 resource blocks, a quantity of candidate control channels whose AL supported by the first terminal device is equal to 8 is 1, and/or a quantity of candidate control channels whose AL supported by the first terminal device is equal to 4 is 1.

When a quantity 1 of symbols in the first control resource set is equal to 2, N is equal to 48, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1.

When a quantity 1 of symbols in the first control resource set is equal to 1, N is equal to 48, and the bandwidth supported by the first terminal device is greater than or equal to a bandwidth corresponding to N/2 resource blocks, a quantity of candidate control channels whose AL supported by the first terminal device is equal to 2 is 1.

When a quantity 1 of symbols in the first control resource set is equal to 3, N is equal to 96, and the bandwidth supported by the first terminal device is greater than or equal to a bandwidth corresponding to N/4 resource blocks, a quantity of candidate control channels whose AL supported by the first terminal device is equal to 12 is 1, a quantity of candidate control channels whose AL supported by the first terminal device is equal to 8 is 1, and/or a quantity of candidate control channels whose AL supported by the first terminal device is equal to 4 is 1 or 2.

When a quantity 1 of symbols in the first control resource set is equal to 2, N is equal to 96, and the bandwidth supported by the first terminal device is greater than or equal to a bandwidth corresponding to N/4 resource blocks, a quantity of candidate control channels whose AL supported by the first terminal device is equal to 8 is 1, and/or a quantity of candidate control channels whose AL supported by the first terminal device is equal to 4 is 1.

When a quantity 1 of symbols in the first control resource set is equal to 1, N is equal to 96, and the bandwidth supported by the first terminal device is greater than or equal to a bandwidth corresponding to N/4 resource blocks, a quantity of candidate control channels whose AL supported by the first terminal device is equal to 4 is 1.

When a quantity 1 of symbols in the first control resource set is equal to 3, N is equal to 48, and the bandwidth supported by the first terminal device is greater than or equal to a bandwidth corresponding to N/4 resource blocks, a quantity of candidate control channels whose AL supported by the first terminal device is equal to 6 is 1, and/or a quantity of candidate control channels whose AL supported by the first terminal device is equal to 4 is 1.

When a quantity 1 of symbols in the first control resource set is equal to 2, N is equal to 48, and the bandwidth supported by the first terminal device is greater than or equal to a bandwidth corresponding to N/4 resource blocks, a quantity of candidate control channels whose AL supported by the first terminal device is equal to 4 is 1.

When a quantity 1 of symbols in the first control resource set is equal to 1, N is equal to 48, and the bandwidth supported by the first terminal device is greater than or equal to a bandwidth corresponding to N/4 resource blocks, a quantity of candidate control channels whose AL supported by the first terminal device is equal to 2 is 1.

In a possible implementation, indexes of Y REG bundles in X REG bundles corresponding to the AL that is supported by the first terminal device and that is equal to X are {i,i+1,... ,i+(Y-1)}, indexes of remaining (X-Y) REG bundles in the X REG bundles are {j,j+1,... ,j+(X-Y-1)}, and i and j are positive integers.

Further, i and j meet at least one of the following cases:

When the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=16, B=32, and C=8. When X=8, A=20, B=32, and C=4. When X=8, A=16, B=36, and C=4. When X=4, A=16, B=34, and C=2. When X=4, A=20, B=34, and C=2. When X=4, A=20, B=32, and C=2. When X=4, A=22, B=34, and C=2. When X=20, A=16, B=28, and C=8. When X=22, A=16, B=32, and C=8. When X=24, A=16, B=28, and C=8.

When the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=12, B=16, and C=4. When X=12, A=12, B=20, and C=4. When X=8, A=12, B=24, and C=4. When X=8, A=12, B=20, and C=4. When X=4, A=12, B=20, and C=2. When X=4, A=14, B=22, and C=2. When X=8 and Y=8, indexes of eight REG bundles are i, i=0, 1, 2, ..., or 7, i=(n+A)mod W/2, and A={14,15,18,19,22,23,26,27}.

When the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=8, A=6, B=8, and C=2. When X=6, A=6, B=10, and C=2. When X=4, A=6, B=12, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=12, A=8, B=12, and C=4. When X=8, A=8, B=16, and C=4. When X=4, A=8 and C=4. When X=4, A=8, B=18, and C=2.

When the quantity 1 of symbols in the first control resource set is equal to 2, N is equal to 48, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=8, A=6, B=8, and C=2. When X=6, A=6, B=10, and C=2. When X=4, A=6, B=12, and C=2.

When the quantity 1 of symbols in the first control resource set is equal to 1, N is equal to 48, and the bandwidth supported by the first terminal device is greater than or equal to the bandwidth corresponding to the N/2 resource blocks, i=(n+A)mod W/2. A quantity of candidate control channels corresponding to the AL that is supported by the first terminal device and that is equal to X is C, n indicates an identifier of a cell in which the first terminal device is located, and mod indicates a modulo operation. When X=2, A=2 and C=2.

In a possible implementation, indexes of Y CCE resources in X CCE resources corresponding to the AL that is supported by the first terminal device and that is equal to X are {i,i+1,... ,i+(Y-1)}, and indexes of (X-Y) CCE resources in the X CCE resources are {j,j+1,... ,j+(X-Y-1)}.

Further, i and j meet at least one of the following cases:

When the quantity 1 of symbols in the first control resource set is equal to 3, N is equal to 96, and the bandwidth supported by the first terminal device is greater than or equal to the bandwidth corresponding to the N/2 resource blocks, i=(32+T+A)mod W/2, and j=(17-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=16, A=0, B=0, and C=8. When X=8, A=8, B=0, and C=4. When X=8, A=0, B=8, and C=4. When X=4, A=0, B=4, and C=2. When X=4, A=8, B=4, and C=2. When X=4, A=8, B=0, and C=2. When X=4, A=12, B=4, and C=2. When X=20, A=0, B=-8, and C=8. When X=22, A=0, B=0, and C=8. When X=24, A=0, B=-8, and C=8.

When the quantity 1 of symbols in the first control resource set is equal to 2, N is equal to 96, and the bandwidth supported by the first terminal device is greater than or equal to the bandwidth corresponding to the N/2 resource blocks, i=(24+T+A)mod W/2, and j=(17-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. Further, n indicates an identifier of a cell in which the first terminal device is located, and mod indicates a modulo operation. When X=16, A=0, B=-16, and C=4. When X=12, A=0, B=-8, and C=4. When X=8, A=0, B=0, and C=4. When X=8, A=0, B=-8, and C=4. When X=4, A=0, B=-8, and C=2. When X=4, A=4, B=-4, and C=2. When X=8 and Y=8, indexes of eight CCE resources are i, and i=0, 1, 2, 3, 4, ..., or 7. When i=0 or 1, i=(A+T)mod W/2, and A={28,30}. When i=2, 3, 4, ..., or 7, i=(A-T)mod W/2, and A={5,7,13,15,21,23}. When n mod W belongs to {2^(1-u) to (2^(1-u)+W/2-1)}, T=1. When n mod W does not belong to {2^(1-u) to (2^(1-u)+W/2-1)}, T=0.

When the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, and j=(9-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0, B=-8, and C=2. When X=6, A=0, B=-4, and C=2. When X=4, A=0, B=0, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(16+T+A)mod W/2, and j=(9-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=12, A=0, B=-8, and C=4. When X=8, A=0, B=0, and C=4. When X=4, A=0 and C=4. When X=4, A=0, B=4, and C=2.

When the quantity 1 of symbols in the first control resource set is equal to 2, N is equal to 48, and the bandwidth supported by the first terminal device is greater than or equal to the bandwidth corresponding to the N/2 resource blocks, i=(12+T+A)mod W/2, and j=(9-T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0, B=-8, and C=2. When X=6, A=0, B=-4, and C=2. When X=4, A=0, B=0, and C=2.

When the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, j=(5-T+B)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=2, A=0 and C=2.

In a possible implementation, resource indexes of Y REG bundles in X REG bundles corresponding to the AL that is supported by the first terminal device and that is equal to X are {i,i+1,... i+(Y-1)}, and indexes of remaining (X-Y) REG bundles in the X REG bundles are {j ,j + 1, j+(X-Y-1)}.

Further, i and j meet at least one of the following cases:

When the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=8 and C=16. When X=8, A=16 and C=8. When X=8, A=8, B=20, and C=4. When X=4, A=8, B=20, and C=2. When X=4, A=10, B=22, and C=2. When X=4, A=8, B=22, and C=2. When X=4, A=10, B=20, and C=2. When X=20, A=4 and C=20. When X=22, A=2 and C=22. When X=24, A=2, B=26, and C=22.

When the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n indicates an identifier of a cell in which the first terminal device is located, and mod indicates a modulo operation. When X=16, A=0 and C=16. When X=12, A=4 and C=12. When X=8, A=8 and C=8. When X=8, A=4, B=12, and C=4. When X=4, A=12, 4, or 8, and C=4. When X=4, A=10, B=14, and C=2. When X=4, A=6, B=14, and C=2.

When the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n=nCelliD, nCelliD indicates an identifier of a cell in which the first terminal device is located, and mod indicates a modulo operation. When X=8, A=6, B=8, and C=2. When X=6, A=6, B=10, and C=2. When X=4, A=6, B=12, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2. A quantity of candidate control channels corresponding to the AL that is supported by the first terminal device and that is equal to X is C, n indicates an identifier of a cell in which the first terminal device is located, and mod indicates a modulo operation. When X=12, A=0 and C=12. When X=8, A=4 and C=8. When X=4, A=8 and C=4. When X=4, A=4 and C=4.

When the quantity 1 of symbols in the first control resource set is equal to 2, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n=nCelliD, nCelliD indicates an identifier of a cell in which the first terminal device is located, and mod indicates a modulo operation. When X=8, A=0 and C=8. When X=6, A=2 and C=6. When X=4, A=4 and C=4.

When the quantity 1 of symbols in the first control resource set is equal to 1, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, and j=(n+B)mod W/2. A quantity of candidate control channels corresponding to the AL that is supported by the first terminal device and that is equal to X is C, n=nCelliD, nCelliD indicates an identifier of a cell in which the first terminal device is located, and mod indicates a modulo operation. When X=2, A=2 and C=2.

In a possible implementation, indexes of Y CCE resources in X CCE resources corresponding to the AL that is supported by the first terminal device and that is equal to X are {i,i+1,...,i+(Y-1)}, and indexes of (X-Y) CCE resources in the X CCE resources are {j,j+1,... ,j+(X-Y-1)}.

When the quantity 1 of symbols in the first control resource set is equal to 3, N is equal to 96, and the bandwidth supported by the first terminal device is greater than or equal to the bandwidth corresponding to the N/2 resource blocks, i=(16+T+A)mod W/2, and j=(32+T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=16, A=0 and C=16. When X=8, A=0, B=0, and C=0. When X=8, A=0, B=8, and C=4. When X=4, A=0, B=8, and C=2. When X=4, A=4, B=10, and C=2. When X=4, A=0, B=10, and C=2. When X=4, A=4, B=8, and C=2. When X=20, A=-8 and C=8. When X=22, A=-12 and C=10. When X=24, A=-12, B=5, and C=22.

When the quantity 1 of symbols in the first control resource set is equal to 2, N is equal to 96, and the bandwidth supported by the first terminal device is greater than or equal to the bandwidth corresponding to the N/2 resource blocks, i=(8+T+A)mod W/2, and j=(24+T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=16, A=-8 and C=16. When X=12, A=0 and C=12. When X=8, A=8 and C=8. When X=8, A=0, B=0, and C=4. When X=4, A=0, 8, or 16, and C=4. When X=4, A=12, B=4, and C=2. When X=4, A=-4, B=4, and C=2.

When the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, j=(9-T+B)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0, B=-8, and C=2. When X=6, A=0, B=-4, and C=2. When X=4, A=0, B=0, and C=2.

When the quantity 1 of symbols in the first control resource set is equal to 3, N is equal to 48, and the bandwidth supported by the first terminal device is greater than or equal to the bandwidth corresponding to the N/2 resource blocks, i=(8+T+A)mod W/2, and j=(16+T+B)mod W/2. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=12, A=0 and C=12. When X=8, A=8 and C=8. When X=4, A=16 and C=4. When X=4, A=8 and C=4.

When the quantity 1 of symbols in the first control resource set is equal to 2, N is equal to 48, and the bandwidth supported by the first terminal device is greater than or equal to the bandwidth corresponding to the N/2 resource blocks, i=(0+T+A)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=8, A=0 and C=8. When X=6, A=4 and C=6. When X=4, A=8 and C=4.

When the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, and Y=C. When a result obtained from n mod W is greater than or equal to 2^{1-u} and less than or equal to 2^{1-u}+W/2-1, T=1. When a result obtained from n mod W is less than 2^{1-u} or greater than 2^{1-u}+W/2-1, T=0. A quantity of candidate control channels corresponding to the AL that is supported by the first terminal device and that is equal to X is C, n indicates an identifier of a cell in which the first terminal device is located, and mod indicates a modulo operation. When X=2, A=4 and C=2.

In a possible implementation, the resource indexes {i,i+1,... ,i+(Y-1)} of the Y REG bundles in the X REG bundles corresponding to the AL that is supported by the first terminal device and that is equal to X are d1i+e and dli+f+E after offset, the resource indexes {j,j+1,...,j+(X-Y-1)} of the (X-Y) REG bundles are d2i+p and d2i+q+P after offset, e=0, 1, , or E, f=0, 1, ..., or F, E+F=Y, p=0, 1, , or P, q=0, 1, , or Q, and P+Q=X-Y.

When j+(X-Y-1)<W/2, d1i+e=i+e, d1i+f+E=i+f+E, d2i+p=j+p, and d2i+q+P=j+q+P, or d1i+e=i+e+W/2, d1i+f+E=i+f+E+W/2, d2i+p=j+p+W/2, and d2i+q+Pj+q+P+W/2.

When j<W/2≤j+(X-Y-1), d1i+e=i+e, d1i+f+E=i+f+E, d2i+p=j+p, d2i+q+P=j+q+P-W/2, dli+e=i+e+W/2, dli+f+E=i+f+E+W/2, d2i+p=j+p+W/2, d2i+q+P=j+q+P, and P=W/2-1-j.

When i+(Y-1)<W/2≤j, d1i+e=i+e, d1i+f+E=i+f+E, d2i+p=j+p-W/2, d2i+q+P=j+q+P-W/2, dli+e=i+e+W/2, dli+f+E=i+f+E+W/2, d2i+p=j+p, and d2i+q+P=j+q+P.

When i<W/2<i+(Y-1), dli+e=i+e, dli+f+E=i+f+E-W/2, d2i+p=j+p-W/2, d2i+q+P=j+q+P-W/2, dli+e=i+e+W/2, dli+f+E=i+f+E, d2i+p=j+p, d2i+q+P=j+q+P, and E=W/2-1-j.

When i ≥ W/2, dli+e=i+e-W/2, dli+f+E=i+f+E-W/2, d2i+p=j+p-W/2, d2i+q+P=j+q+P-W/2, dli+e=i+e, dli+f+E=i+f+E, d2i+p=j+p, and d2i+q+P=j+q+P.

In a possible implementation, the apparatus further includes: The first terminal device receives control information on R REG bundles. The R REG bundles do not overlap with S REG bundles, and the S REG bundles are used by the second terminal device to receive the control information.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 5 shows an apparatus 500 according to an embodiment of this application. The apparatus 500 is configured to implement functions of the terminal device in the foregoing method. The apparatus may be a terminal device, an apparatus in a terminal device, or an apparatus that can be used together with a terminal device. The apparatus may be a chip system. In an embodiment of this application, the chip system may include a chip, or may include a chip and another discrete component. The apparatus 500 includes at least one processor 520, configured to implement the functions of the terminal device in the method provided in embodiments of this application. For example, the processor 520 may receive information such as downlink control information and configuration information of a control resource set, and parse the foregoing information. For details, refer to detailed descriptions in the method example. Details are not described herein again.

The apparatus 500 may further include at least one memory 530, configured to store program instructions and/or data. The memory 530 is coupled to the processor 520. Coupling in this embodiment of this application is indirect coupling or a communication connection between apparatuses, units, or modules, may be in an electrical form, a mechanical form, or another form, and is used for information exchange between apparatuses, units, or modules. The processor 520 may operate in collaboration with the memory 530. The processor 520 may execute the program instructions stored in the memory 530. At least one of the at least one memory may be included in the processor.

The apparatus 500 may further include a communication interface. There are a plurality of implementations for the communication interface. For example, the communication interface may be a transceiver, an interface, a bus, a circuit, a pin, or an apparatus that can implement a receiving and sending function. FIG. 5 shows an example in which the communication interface is a transceiver 510. The transceiver 510 is configured to communicate with another device through a transmission medium, so that the apparatus in the apparatus 500 can communicate with the another device. For example, the another device may be a network device. The processor 520 receives or sends data by using the transceiver 510, and is configured to implement the method performed by the terminal device in the embodiment corresponding to FIG. 1.

A specific connection medium between the transceiver 510, the processor 520, and the memory 530 is not limited in this embodiment of this application. In this embodiment of this application, as shown in FIG. 5, the memory 530, the processor 520, and the transceiver 510 are connected to each other by using a bus 540. The bus is represented by a bold line in FIG. 5. A manner of connection between other components is merely an example for description, and is not limited thereto. The bus may be classified into an address bus, a data bus, a control bus, and the like. For ease of representation, only one bold line is used to represent the bus in FIG. 5, but this does not mean that there is only one bus or only one type of bus.

FIG. 6 shows an apparatus 1200 according to an embodiment of this application. The apparatus 1200 is configured to implement functions of the network device in the foregoing method. The apparatus may be a network device, an apparatus in a network device, or an apparatus that can be used together with a network device. The apparatus may be a chip system. The apparatus 1200 includes at least one processor 1220, configured to implement the functions of the network device in the method provided in embodiments of this application. For example, the processor 1220 may generate and send information such as downlink control information and configuration information of a control resource set. For details, refer to detailed descriptions in the method example. Details are not described herein again.

The apparatus 1200 may further include at least one memory 1230, configured to store program instructions and/or data. The memory 1230 is coupled to the processor 1220. Coupling in this embodiment of this application is indirect coupling or a communication connection between apparatuses, units, or modules, may be in an electrical form, a mechanical form, or another form, and is used for information exchange between apparatuses, units, or modules. The processor 1220 may operate in collaboration with the memory 1230. The processor 1220 may execute the program instructions stored in the memory 1230. At least one of the at least one memory may be included in the processor.

The apparatus 1200 may further include a communication interface. There are a plurality of implementations for the communication interface. For example, the communication interface may be a transceiver, an interface, a bus, a circuit, or an apparatus that can implement a receiving and sending function. FIG. 6 shows an example in which the communication interface is a transceiver 1212. The transceiver 1212 is configured to communicate with another device through a transmission medium, so that the apparatus in the apparatus 1200 can communicate with the another device. For example, the another device may be a terminal device. The processor 1220 receives or sends data by using the transceiver 1212, and is configured to implement the method performed by the network device in the embodiment corresponding to FIG. 1.

A specific connection medium between the transceiver 1212, the processor 1220, and the memory 1230 is not limited in this embodiment of this application. In this embodiment of this application, as shown in FIG. 6, the memory 1230, the processor 1220, and the transceiver 1212 are connected to each other by using a bus 1240. The bus is represented by a bold line in FIG. 6. A manner of connection between other components is merely an example for description, and is not limited thereto. The bus may be classified into an address bus, a data bus, a control bus, and the like. For ease of representation, only one bold line is used to represent the bus in FIG. 6, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed and completed by a hardware processor, or may be performed and completed by using a combination of hardware in the processor and a software module.

In embodiments of this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store the program instructions and/or the data.

All or some of the technical solutions provided in embodiments of this application may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, on the premise that there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving, by a first terminal device, first information from a network device, wherein the first information indicates a first control resource set, a quantity of resource blocks in the first control resource set is N, a quantity of resource element group bundles REG bundles in the first control resource set is W, a bandwidth supported by the first terminal device is less than a bandwidth corresponding to the N resource blocks, the bandwidth supported by the first terminal device is less than a bandwidth supported by a second terminal device, N and W are positive integers; and an aggregation level AL supported by the first terminal device comprises X, and an AL supported by the second terminal device does not comprise X, and/or a quantity of candidate control channels supported by the first terminal device in a first search space SS set is Y1, a quantity of candidate control channels supported by the second terminal device in the first search space set is Z, and Y1 is less than or equal to Z; and
monitoring, by the first terminal device, a first control channel on M REG bundles in the W REG bundles or on M control channel element CCE resources corresponding to the M REG bundles, wherein M is less than W.

2. The method according to claim 1, wherein X comprises at least one of the following values: 6, 12, 20, and 22.

3. The method according to any one of claims 1 and 2, wherein
when a quantity 1 of symbols in the first control resource set is equal to 3, N is equal to 96, and the bandwidth supported by the first terminal device is greater than or equal to a bandwidth corresponding to N/2 resource blocks, a quantity of candidate control channels whose AL supported by the first terminal device is equal to 20 is 1, a quantity of candidate control channels whose AL supported by the first terminal device is equal to 16 is 1, a quantity of candidate control channels whose AL supported by the first terminal device is equal to 8 is 1 or 2, a quantity of candidate control channels whose AL supported by the first terminal device is equal to 4 is 2 or 3, and/or a quantity of candidate control channels whose AL supported by the first terminal device is equal to 22 is 1;
when a quantity 1 of symbols in the first control resource set is equal to 2, N is equal to 96, and the bandwidth supported by the first terminal device is greater than or equal to a bandwidth corresponding to N/2 resource blocks, a quantity of candidate control channels whose AL supported by the first terminal device is equal to 16 is 1, a quantity of candidate control channels whose AL supported by the first terminal device is equal to 12 is 1, a quantity of candidate control channels whose AL supported by the first terminal device is equal to 8 is 1 or 2, and/or a quantity of candidate control channels whose AL supported by the first terminal device is equal to 4 is 2 or 3;
when a quantity 1 of symbols in the first control resource set is equal to 1, N is equal to 96, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1;
when a quantity 1 of symbols in the first control resource set is equal to 3, N is equal to 48, and the bandwidth supported by the first terminal device is greater than or equal to a bandwidth corresponding to N/2 resource blocks, a quantity of candidate control channels whose AL supported by the first terminal device is equal to 8 is 1, and/or a quantity of candidate control channels whose AL supported by the first terminal device is equal to 4 is 1;
when a quantity 1 of symbols in the first control resource set is equal to 2, N is equal to 48, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1;
when a quantity 1 of symbols in the first control resource set is equal to 1, N is equal to 48, and the bandwidth supported by the first terminal device is greater than or equal to a bandwidth corresponding to N/2 resource blocks, a quantity of candidate control channels whose AL supported by the first terminal device is equal to 2 is 1;
when a quantity 1 of symbols in the first control resource set is equal to 3, N is equal to 96, and the bandwidth supported by the first terminal device is greater than or equal to a bandwidth corresponding to N/4 resource blocks, a quantity of candidate control channels whose AL supported by the first terminal device is equal to 12 is 1, a quantity of candidate control channels whose AL supported by the first terminal device is equal to 8 is 1, and/or a quantity of candidate control channels whose AL supported by the first terminal device is equal to 4 is 1 or 2;
when a quantity 1 of symbols in the first control resource set is equal to 2, N is equal to 96, and the bandwidth supported by the first terminal device is greater than or equal to a bandwidth corresponding to N/4 resource blocks, a quantity of candidate control channels whose AL supported by the first terminal device is equal to 8 is 1, and/or a quantity of candidate control channels whose AL supported by the first terminal device is equal to 4 is 1;
when a quantity 1 of symbols in the first control resource set is equal to 1, N is equal to 96, and the bandwidth supported by the first terminal device is greater than or equal to a bandwidth corresponding to N/4 resource blocks, a quantity of candidate control channels whose AL supported by the first terminal device is equal to 4 is 1;
when a quantity 1 of symbols in the first control resource set is equal to 3, N is equal to 48, and the bandwidth supported by the first terminal device is greater than or equal to a bandwidth corresponding to N/4 resource blocks, a quantity of candidate control channels whose AL supported by the first terminal device is equal to 6 is 1, and/or a quantity of candidate control channels whose AL supported by the first terminal device is equal to 4 is 1;
when a quantity 1 of symbols in the first control resource set is equal to 2, N is equal to 48, and the bandwidth supported by the first terminal device is greater than or equal to a bandwidth corresponding to N/4 resource blocks, a quantity of candidate control channels whose AL supported by the first terminal device is equal to 4 is 1; or
when a quantity 1 of symbols in the first control resource set is equal to 1, N is equal to 48, and the bandwidth supported by the first terminal device is greater than or equal to a bandwidth corresponding to N/4 resource blocks, a quantity of candidate control channels whose AL supported by the first terminal device is equal to 2 is 1.

4. The method according to any one of claims 1 to 3, wherein
indexes of Y REG bundles in X REG bundles corresponding to the AL that is supported by the first terminal device and that is equal to X are {i,i+1,... ,i+(Y-1)}, indexes of remaining (X-Y) REG bundles in the X REG bundles are {j,j+1,... ,j+(X-Y-1)}, and i and j are positive integers; and
i and j meet at least one of the following cases:
when the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=16, B=32, and C=8, when X=8, A=20, B=32, and C=4, when X=8, A=16, B=36, and C=4, when X=4, A=16, B=34, and C=2, when X=4, A=20, B=34, and C=2, when X=4, A=20, B=32, and C=2, when X=4, A=22, B=34, and C=2, when X=20, A=16, B=28, and C=8, when X=22, A=16, B=32, and C=8, and/or when X=24, A=16, B=28, and C=8;
when the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=12, B=16, and C=4, when X=12, A=12, B=20, and C=4, when X=8, A=12, B=24, and C=4, when X=8, A=12, B=20, and C=4, when X=4, A=12, B=20, and C=2, when X=4, A=14, B=22, and C=2, and/or when X=8 and Y=8, indexes of eight REG bundles are i, i=0, 1, 2, ..., or 7, i=(n+A)mod W/2, and A={14,15,18,19,22,23,26,27};
when the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=8, A=6, B=8, and C=2, when X=6, A=6, B=10, and C=2, and/or when X=4, A=6, B=12, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=12, A=8, B=12, and C=4, when X=8, A=8, B=16, and C=4, when X=4, A=8 and C=4, and/or when X=4, A=8, B=18, and C=2;
when the quantity 1 of symbols in the first control resource set is equal to 2, N is equal to 48, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=8, A=6, B=8, and C=2, when X=6, A=6, B=10, and C=2, and/or when X=4, A=6, B=12, and C=2; and
when the quantity 1 of symbols in the first control resource set is equal to 1, N is equal to 48, and the bandwidth supported by the first terminal device is greater than or equal to the bandwidth corresponding to the N/2 resource blocks, i=(n+A)mod W/2, a quantity of candidate control channels corresponding to the AL that is supported by the first terminal device and that is equal to X is C, n indicates an identifier of a cell in which the first terminal device is located, mod indicates a modulo operation, and when X=2, A=2 and C=2.

5. The method according to any one of claims 1 to 3, wherein
indexes of Y CCE resources in X CCE resources corresponding to the AL that is supported by the first terminal device and that is equal to X are {i,i+1,... ,i+(Y-1)}, and indexes of (X-Y) CCE resources in the X CCE resources are {j,j+1,... ,j+(X-Y-1)}; and
i and j meet at least one of the following cases:
when the quantity 1 of symbols in the first control resource set is equal to 3, N is equal to 96, and the bandwidth supported by the first terminal device is greater than or equal to the bandwidth corresponding to the N/2 resource blocks, i=(32+T+A)mod W/2, j=(17-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=16, A=0, B=0, and C=8, when X=8, A=8, B=0, and C=4, when X=8, A=0, B=8, and C=4, when X=4, A=0, B=4, and C=2, when X=4, A=8, B=4, and C=2, when X=4, A=8, B=0, and C=2, when X=4, A=12, B=4, and C=2, when X=20, A=0, B=-8, and C=8, when X=22, A=0, B=0, and C=8, and/or when X=24, A=0, B=-8, and C=8;
when the quantity 1 of symbols in the first control resource set is equal to 2, N is equal to 96, and the bandwidth supported by the first terminal device is greater than or equal to the bandwidth corresponding to the N/2 resource blocks, i=(24+T+A)mod W/2, j=(17-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, n indicates an identifier of a cell in which the first terminal device is located, mod indicates a modulo operation, and when X=16, A=0, B=-16, and C=4, when X=12, A=0, B=-8, and C=4, when X=8, A=0, B=0, and C=4, when X=8, A=0, B=-8, and C=4, when X=4, A=0, B=-8, and C=2, when X=4, A=4, B=-4, and C=2, and/or when X=8 and Y=8, indexes of eight CCE resources are i, i=0, 1, 2, 3, 4, ..., or 7, when i=0 or 1, i=(A+T)mod W/2, and A={28,30}, when i=2, 3, 4, ..., or 7, i=(A-T)mod W/2, and A={5,7,13,15,21,23}, and when n mod W belongs to {2^(1-u) to (2^(1-u)+W/2-1)}, T=1, or when n mod W does not belong to {2^(1-u) to (2^(1-u)+W/2-1)}, T=0;
when the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, j=(9-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0, B=-8, and C=2, when X=6, A=0, B=-4, and C=2, and/or when X=4, A=0, B=0, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(16+T+A)mod W/2, j=(9-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=12, A=0, B=-8, and C=4, when X=8, A=0, B=0, and C=4, when X=4, A=0 and C=4, and/or when X=4, A=0, B=4, and C=2;
when the quantity 1 of symbols in the first control resource set is equal to 2, N is equal to 48, and the bandwidth supported by the first terminal device is greater than or equal to the bandwidth corresponding to the N/2 resource blocks, i=(12+T+A)mod W/2, j=(9-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0, B=-8, and C=2, when X=6, A=0, B=-4, and C=2, and/or when X=4, A=0, B=0, and C=2; and
when the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, j=(5-T+B)mod W/2, Y=C, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=2, A=0 and C=2.

6. The method according to any one of claims 1 to 3, wherein
resource indexes of Y REG bundles in X REG bundles corresponding to the AL that is supported by the first terminal device and that is equal to X are {i,i+1,... i+(Y-1)}, and indexes of remaining (X-Y) REG bundles in the X REG bundles are {j,j+1,...j+(X-Y-1)}; and
i and j meet at least one of the following cases:
when the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=8 and C=16, when X=8, A=16 and C=8, when X=8, A=8, B=20, and C=4, when X=4, A=8, B=20, and C=2, when X=4, A=10, B=22, and C=2, when X=4, A=8, B=22, and C=2, when X=4, A=10, B=20, and C=2, when X=20, A=4 and C=20, when X=22, A=2 and C=22, and/or when X=24, A=2, B=26, and C=22;
when the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=0 and C=16, when X=12, A=4 and C=12, when X=8, A=8 and C=8, when X=8, A=4, B=12, and C=4, when X=4, A=12, 4, or 8, and C=4, when X=4, A=10, B=14, and C=2, and/or when X=4, A=6, B=14, and C=2;
when the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n=nCelliD, nCelliD indicates an identifier of a cell in which the first terminal device is located, mod indicates a modulo operation, and when X=8, A=6, B=8, and C=2, when X=6, A=6, B=10, and C=2, and/or when X=4, A=6, B=12, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2, a quantity of candidate control channels corresponding to the AL that is supported by the first terminal device and that is equal to X is C, n indicates an identifier of a cell in which the first terminal device is located, mod indicates a modulo operation, and when X=12, A=0 and C=12, when X=8, A=4 and C=8, when X=4, A=8 and C=4, and/or when X=4, A=4 and C=4;
when the quantity 1 of symbols in the first control resource set is equal to 2, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n=nCelliD, nCelliD indicates an identifier of a cell in which the first terminal device is located, mod indicates a modulo operation, and when X=8, A=0 and C=8, when X=6, A=2 and C=6, and/or when X=4, A=4 and C=4; and
when the quantity 1 of symbols in the first control resource set is equal to 1, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n=nCelliD, nCelliD indicates an identifier of a cell in which the first terminal device is located, mod indicates a modulo operation, and when X=2, A=2 and C=2.

7. The method according to any one of claims 1 to 3, wherein
indexes of Y CCE resources in X CCE resources corresponding to the AL that is supported by the first terminal device and that is equal to X are {i,i+1,... ,i+(Y-1)}, and indexes of (X-Y) CCE resources in the X CCE resources are {j,j+1,... ,j+(X-Y-1)}; and
when the quantity 1 of symbols in the first control resource set is equal to 3, N is equal to 96, and the bandwidth supported by the first terminal device is greater than or equal to the bandwidth corresponding to the N/2 resource blocks, i=(16+T+A)mod W/2, j=(32+T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=16, A=0 and C=16, when X=8, A=0, B=0, and C=0, when X=8, A=0, B=8, and C=4, when X=4, A=0, B=8, and C=2, when X=4, A=4, B=10, and C=2, when X=4, A=0, B=10, and C=2, when X=4, A=4, B=8, and C=2, when X=20, A=-8 and C=8, when X=22, A=-12 and C=10, and/or when X=24, A=-12, B=5, and C=22;
when the quantity 1 of symbols in the first control resource set is equal to 2, N is equal to 96, and the bandwidth supported by the first terminal device is greater than or equal to the bandwidth corresponding to the N/2 resource blocks, i=(8+T+A)mod W/2, j=(24+T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=16, A=-8 and C=16, when X=12, A=0 and C=12, when X=8, A=8 and C=8, when X=8, A=0, B=0, and C=4, when X=4, A=0, 8, or 16, and C=4, when X=4, A=12, B=4, and C=2, and/or when X=4, A=-4, B=4, and C=2;
when the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, j=(9-T+B)mod W/2, Y=C, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0, B=-8, and C=2, when X=6, A=0, B=-4, and C=2, and/or when X=4, A=0, B=0, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(8+T+A)mod W/2, j=(16+T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=12, A=0 and C=12, when X=8, A=8 and C=8, when X=4, A=16 and C=4, and/or when X=4, A=8 and C=4;
when the quantity 1 of symbols in the first control resource set is equal to 2, N is equal to 48, and the bandwidth supported by the first terminal device is greater than or equal to the bandwidth corresponding to the N/2 resource blocks, i=(0+T+A)mod W/2, Y=C, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0 and C=8, when X=6, A=4 and C=6, and/or when X=4, A=8 and C=4; and
when the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, Y=C, when a result obtained from n mod W is greater than or equal to 2^{1-u} and less than or equal to 2^{1-u}+W/2-1, T=1, or when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=2, A=4 and C=2.

8. The method according to claim 4 or 6, wherein
the resource indexes {i,i+1,... ,i+(Y-1)} of the Y REG bundles in the X REG bundles corresponding to the AL that is supported by the first terminal device and that is equal to X are dli+e and dli+f+E after offset, the resource indexes {j,j+1,... ,j+(X-Y-1)} of the (X-Y) REG bundles are d2i+p and d2i+q+P after offset, e=0, 1, ..., or E, f=0, 1, ..., or F, E+F=Y, p=0, 1, ..., or P, q=0, 1, ..., or Q, and P+Q=X-Y;
when j+(X-Y-1)<W/2, dli+e=i+e, dli+f+E=i+f+E, d2i+p=j+p, and d2i+q+P=j+q+P, or dli+e=i+e+W/2, dli+f+E=i+f+E+W/2, d2i+p=j+p+W/2, and d2i+q+P=j+q+P+W/2;
when j<W/2≤j+(X-Y-1), d1i+e=i+e, d1i+f+E=i+f+E, d2i+p=j+p, d2i+q+P=j+q+P-W/2, d1i+e=i+e+W/2, dli+f+E=i+f+E+W/2, d2i+p=j+p+W/2, d2i+q+P=j+q+P, and P=W/2-1-j;
when i+(Y-1)<W/2≤j, d1i+e=i+e, d1i+f+E=i+f+E, d2i+p=j+p-W/2, d2i+q+P=j+q+P-W/2, d1i+e=i+e+W/2, dli+f+E=i+f+E+W/2, d2i+p=j+p, and d2i+q+P=j+q+P;
when i<W/2<i+(Y-1), dli+e=i+e, dli+f+E=i+f+E-W/2, d2i+p=j+p-W/2, d2i+q+P=j+q+P-W/2, dli+e=i+e+W/2, dli+f+E=i+f+E, d2i+p=j+p, d2i+q+P=j+q+P, and E=W/2-1-j; and
when i ≥ W/2, dli+e=i+e-W/2, dli+f+E=i+f+E-W/2, d2i+p=j+p-W/2, d2i+q+P=j+q+P-W/2, dli+e=i+e, dli+f+E=i+f+E, d2i+p=j+p, and d2i+q+P=j+q+P.

9. The method according to any one of claims 1 to 8, wherein the method further comprises:
receiving, by the first terminal device, control information on R REG bundles, wherein the R REG bundles do not overlap with S REG bundles, and the S REG bundles are used by the second terminal device to receive the control information.

10. A communication method, comprising:
determining, by a network device, a first control resource set for a first terminal device, wherein a quantity of resource blocks in the first control resource set is N, a quantity of resource element group bundles REG bundles in the first control resource set is W, a bandwidth supported by the first terminal device is less than a bandwidth corresponding to the N resource blocks, the bandwidth supported by the first terminal device is less than a bandwidth supported by a second terminal device, N and W are positive integers; and an aggregation level AL supported by the first terminal device comprises X, and an AL supported by the second terminal device does not comprise X, and/or a quantity of candidate control channels supported by the first terminal device in a first search space SS set is Y, a quantity of candidate control channels supported by the second terminal device in the first search space set is Z, and Y is less than or equal to Z;
sending, by the network device, first information to the first terminal device, wherein the first information indicates the first control resource set; and
sending, by the network device, a first control channel on M REG bundles in the W REG bundles or on M control channel element CCE resources corresponding to the M REG bundles, wherein M is less than W.

11. The method according to claim 10, wherein X comprises at least one of the following values: 6, 12, 20, and 22.

12. The method according to any one of claims 10 and 11, wherein
when a quantity 1 of symbols in the first control resource set is equal to 3, N is equal to 96, and the bandwidth supported by the first terminal device is greater than or equal to a bandwidth corresponding to N/2 resource blocks, a quantity of candidate control channels whose AL supported by the first terminal device is equal to 20 is 1, a quantity of candidate control channels whose AL supported by the first terminal device is equal to 16 is 1, a quantity of candidate control channels whose AL supported by the first terminal device is equal to 8 is 1 or 2, a quantity of candidate control channels whose AL supported by the first terminal device is equal to 4 is 2 or 3, and/or a quantity of candidate control channels whose AL supported by the first terminal device is equal to 22 is 1;
when a quantity 1 of symbols in the first control resource set is equal to 2, N is equal to 96, and the bandwidth supported by the first terminal device is greater than or equal to a bandwidth corresponding to N/2 resource blocks, a quantity of candidate control channels whose AL supported by the first terminal device is equal to 16 is 1, a quantity of candidate control channels whose AL supported by the first terminal device is equal to 12 is 1, a quantity of candidate control channels whose AL supported by the first terminal device is equal to 8 is 1 or 2, and/or a quantity of candidate control channels whose AL supported by the first terminal device is equal to 4 is 2 or 3;
when a quantity 1 of symbols in the first control resource set is equal to 1, N is equal to 96, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1;
when a quantity 1 of symbols in the first control resource set is equal to 3, N is equal to 48, and the bandwidth supported by the first terminal device is greater than or equal to a bandwidth corresponding to N/2 resource blocks, a quantity of candidate control channels whose AL supported by the first terminal device is equal to 8 is 1, and/or a quantity of candidate control channels whose AL supported by the first terminal device is equal to 4 is 1;
when a quantity 1 of symbols in the first control resource set is equal to 2, N is equal to 48, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1;
when a quantity 1 of symbols in the first control resource set is equal to 1, N is equal to 48, and the bandwidth supported by the first terminal device is greater than or equal to a bandwidth corresponding to N/2 resource blocks, a quantity of candidate control channels whose AL supported by the first terminal device is equal to 2 is 1;
when a quantity 1 of symbols in the first control resource set is equal to 3, N is equal to 96, and the bandwidth supported by the first terminal device is greater than or equal to a bandwidth corresponding to N/4 resource blocks, a quantity of candidate control channels whose AL supported by the first terminal device is equal to 12 is 1, a quantity of candidate control channels whose AL supported by the first terminal device is equal to 8 is 1, and/or a quantity of candidate control channels whose AL supported by the first terminal device is equal to 4 is 1 or 2;
when a quantity 1 of symbols in the first control resource set is equal to 2, N is equal to 96, and the bandwidth supported by the first terminal device is greater than or equal to a bandwidth corresponding to N/4 resource blocks, a quantity of candidate control channels whose AL supported by the first terminal device is equal to 8 is 1, and/or a quantity of candidate control channels whose AL supported by the first terminal device is equal to 4 is 1;
when a quantity 1 of symbols in the first control resource set is equal to 1, N is equal to 96, and the bandwidth supported by the first terminal device is greater than or equal to a bandwidth corresponding to N/4 resource blocks, a quantity of candidate control channels whose AL supported by the first terminal device is equal to 4 is 1;
when a quantity 1 of symbols in the first control resource set is equal to 3, N is equal to 48, and the bandwidth supported by the first terminal device is greater than or equal to a bandwidth corresponding to N/4 resource blocks, a quantity of candidate control channels whose AL supported by the first terminal device is equal to 6 is 1, and/or a quantity of candidate control channels whose AL supported by the first terminal device is equal to 4 is 1;
when a quantity 1 of symbols in the first control resource set is equal to 2, N is equal to 48, and the bandwidth supported by the first terminal device is greater than or equal to a bandwidth corresponding to N/4 resource blocks, a quantity of candidate control channels whose AL supported by the first terminal device is equal to 4 is 1; or
when a quantity 1 of symbols in the first control resource set is equal to 1, N is equal to 48, and the bandwidth supported by the first terminal device is greater than or equal to a bandwidth corresponding to N/4 resource blocks, a quantity of candidate control channels whose AL supported by the first terminal device is equal to 2 is 1.

13. The method according to any one of claims 10 to 12, wherein
indexes of Y REG bundles in X REG bundles corresponding to the AL that is supported by the first terminal device and that is equal to X are {i,i+1,... ,i+(Y-1)}, indexes of remaining (X-Y) REG bundles in the X REG bundles are {j,j+1,... ,j+(X-Y-1)}, and i and j are positive integers; and
i and j meet at least one of the following cases:
when the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=16, B=32, and C=8, when X=8, A=20, B=32, and C=4, when X=8, A=16, B=36, and C=4, when X=4, A=16, B=34, and C=2, when X=4, A=20, B=34, and C=2, when X=4, A=20, B=32, and C=2, when X=4, A=22, B=34, and C=2, when X=20, A=16, B=28, and C=8, when X=22, A=16, B=32, and C=8, and/or when X=24, A=16, B=28, and C=8;
when the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=12, B=16, and C=4, when X=12, A=12, B=20, and C=4, when X=8, A=12, B=24, and C=4, when X=8, A=12, B=20, and C=4, when X=4, A=12, B=20, and C=2, when X=4, A=14, B=22, and C=2, and/or when X=8 and Y=8, indexes of eight REG bundles are i, i=0, 1, 2, ..., or 7, i=(n+A)mod W/2, and A={14,15,18,19,22,23,26,27};
when the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=8, A=6, B=8, and C=2, when X=6, A=6, B=10, and C=2, and/or when X=4, A=6, B=12, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=12, A=8, B=12, and C=4, when X=8, A=8, B=16, and C=4, when X=4, A=8 and C=4, and/or when X=4, A=8, B=18, and C=2;
when the quantity 1 of symbols in the first control resource set is equal to 2, N is equal to 48, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=8, A=6, B=8, and C=2, when X=6, A=6, B=10, and C=2, and/or when X=4, A=6, B=12, and C=2; and
when the quantity 1 of symbols in the first control resource set is equal to 1, N is equal to 48, and the bandwidth supported by the first terminal device is greater than or equal to the bandwidth corresponding to the N/2 resource blocks, i=(n+A)mod W/2, a quantity of candidate control channels corresponding to the AL that is supported by the first terminal device and that is equal to X is C, n indicates an identifier of a cell in which the first terminal device is located, mod indicates a modulo operation, and when X=2, A=2 and C=2.

14. The method according to any one of claims 10 to 12, wherein
indexes of Y CCE resources in X CCE resources corresponding to the AL that is supported by the first terminal device and that is equal to X are {i,i+1,... ,i+(Y-1)}, and indexes of (X-Y) CCE resources in the X CCE resources are {j,j+1,... ,j+(X-Y-1)}; and
i and j meet at least one of the following cases:
when the quantity 1 of symbols in the first control resource set is equal to 3, N is equal to 96, and the bandwidth supported by the first terminal device is greater than or equal to the bandwidth corresponding to the N/2 resource blocks, i=(32+T+A)mod W/2, j=(17-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=16, A=0, B=0, and C=8, when X=8, A=8, B=0, and C=4, when X=8, A=0, B=8, and C=4, when X=4, A=0, B=4, and C=2, when X=4, A=8, B=4, and C=2, when X=4, A=8, B=0, and C=2, when X=4, A=12, B=4, and C=2, when X=20, A=0, B=-8, and C=8, when X=22, A=0, B=0, and C=8, and/or when X=24, A=0, B=-8, and C=8;
when the quantity 1 of symbols in the first control resource set is equal to 2, N is equal to 96, and the bandwidth supported by the first terminal device is greater than or equal to the bandwidth corresponding to the N/2 resource blocks, i=(24+T+A)mod W/2, j=(17-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, n indicates an identifier of a cell in which the first terminal device is located, mod indicates a modulo operation, and when X=16, A=0, B=-16, and C=4, when X=12, A=0, B=-8, and C=4, when X=8, A=0, B=0, and C=4, when X=8, A=0, B=-8, and C=4, when X=4, A=0, B=-8, and C=2, when X=4, A=4, B=-4, and C=2, and/or when X=8 and Y=8, indexes of eight CCE resources are i, i=0, 1, 2, 3, 4, ..., or 7, when i=0 or 1, i=(A+T)mod W/2, and A={28,30}, when i=2, 3, 4, ..., or 7, i=(A-T)mod W/2, and A={5,7,13,15,21,23}, and when n mod W belongs to {2^(1-u) to (2^(1-u)+W/2-1)}, T=1, or when n mod W does not belong to {2^(1-u) to (2^(1-u)+W/2-1)}, T=0;
when the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, j=(9-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0, B=-8, and C=2, when X=6, A=0, B=-4, and C=2, and/or when X=4, A=0, B=0, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(16+T+A)mod W/2, j=(9-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=12, A=0, B=-8, and C=4, when X=8, A=0, B=0, and C=4, when X=4, A=0 and C=4, and/or when X=4, A=0, B=4, and C=2;
when the quantity 1 of symbols in the first control resource set is equal to 2, N is equal to 48, and the bandwidth supported by the first terminal device is greater than or equal to the bandwidth corresponding to the N/2 resource blocks, i=(12+T+A)mod W/2, j=(9-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0, B=-8, and C=2, when X=6, A=0, B=-4, and C=2, and/or when X=4, A=0, B=0, and C=2; and
when the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, j=(5-T+B)mod W/2, Y=C, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=2, A=0 and C=2.

15. The method according to any one of claims 10 to 12, wherein
resource indexes of Y REG bundles in X REG bundles corresponding to the AL that is supported by the first terminal device and that is equal to X are {i,i+1,...i+(Y-1)}, and indexes of remaining (X-Y) REG bundles in the X REG bundles are {j,j+1,...j+(X-Y-1)}; and
i and j meet at least one of the following cases:
when the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=8 and C=16, when X=8, A=16 and C=8, when X=8, A=8, B=20, and C=4, when X=4, A=8, B=20, and C=2, when X=4, A=10, B=22, and C=2, when X=4, A=8, B=22, and C=2, when X=4, A=10, B=20, and C=2, when X=20, A=4 and C=20, when X=22, A=2 and C=22, and/or when X=24, A=2, B=26, and C=22;
when the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=0 and C=16, when X=12, A=4 and C=12, when X=8, A=8 and C=8, when X=8, A=4, B=12, and C=4, when X=4, A=12, 4, or 8, and C=4, when X=4, A=10, B=14, and C=2, and/or when X=4, A=6, B=14, and C=2;
when the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n=nCelliD, nCelliD indicates an identifier of a cell in which the first terminal device is located, mod indicates a modulo operation, and when X=8, A=6, B=8, and C=2, when X=6, A=6, B=10, and C=2, and/or when X=4, A=6, B=12, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2, a quantity of candidate control channels corresponding to the AL that is supported by the first terminal device and that is equal to X is C, n indicates an identifier of a cell in which the first terminal device is located, mod indicates a modulo operation, and when X=12, A=0 and C=12, when X=8, A=4 and C=8, when X=4, A=8 and C=4, and/or when X=4, A=4 and C=4;
when the quantity 1 of symbols in the first control resource set is equal to 2, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n=nCelliD, nCelliD indicates an identifier of a cell in which the first terminal device is located, mod indicates a modulo operation, and when X=8, A=0 and C=8, when X=6, A=2 and C=6, and/or when X=4, A=4 and C=4; and
when the quantity 1 of symbols in the first control resource set is equal to 1, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n=nCelliD, nCelliD indicates an identifier of a cell in which the first terminal device is located, mod indicates a modulo operation, and when X=2, A=2 and C=2.

16. The method according to any one of claims 10 to 12, wherein
indexes of Y CCE resources in X CCE resources corresponding to the AL that is supported by the first terminal device and that is equal to X are {i,i+1,... ,i+(Y-1)}, and indexes of (X-Y) CCE resources in the X CCE resources are {j,j+1,...,j+(X-Y-1)}; and
when the quantity 1 of symbols in the first control resource set is equal to 3, N is equal to 96, and the bandwidth supported by the first terminal device is greater than or equal to the bandwidth corresponding to the N/2 resource blocks, i=(16+T+A)mod W/2, j=(32+T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=16, A=0 and C=16, when X=8, A=0, B=0, and C=0, when X=8, A=0, B=8, and C=4, when X=4, A=0, B=8, and C=2, when X=4, A=4, B=10, and C=2, when X=4, A=0, B=10, and C=2, when X=4, A=4, B=8, and C=2, when X=20, A=-8 and C=8, when X=22, A=-12 and C=10, and/or when X=24, A=-12, B=5, and C=22;
when the quantity 1 of symbols in the first control resource set is equal to 2, N is equal to 96, and the bandwidth supported by the first terminal device is greater than or equal to the bandwidth corresponding to the N/2 resource blocks, i=(8+T+A)mod W/2, j=(24+T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=16, A=-8 and C=16, when X=12, A=0 and C=12, when X=8, A=8 and C=8, when X=8, A=0, B=0, and C=4, when X=4, A=0, 8, or 16, and C=4, when X=4, A=12, B=4, and C=2, and/or when X=4, A=-4, B=4, and C=2;
when the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, j=(9-T+B)mod W/2, Y=C, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0, B=-8, and C=2, when X=6, A=0, B=-4, and C=2, and/or when X=4, A=0, B=0, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(8+T+A)mod W/2, j=(16+T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=12, A=0 and C=12, when X=8, A=8 and C=8, when X=4, A=16 and C=4, and/or when X=4, A=8 and C=4;
when the quantity 1 of symbols in the first control resource set is equal to 2, N is equal to 48, and the bandwidth supported by the first terminal device is greater than or equal to the bandwidth corresponding to the N/2 resource blocks, i=(0+T+A)mod W/2, Y=C, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0 and C=8, when X=6, A=4 and C=6, and/or when X=4, A=8 and C=4; and
when the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, Y=C, when a result obtained from n mod W is greater than or equal to 2^{1-u} and less than or equal to 2^{1-u}+W/2-1, T=1, or when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=2, A=4 and C=2.

17. The method according to claim 13 or 15, wherein
the resource indexes {i,i+1,... ,i+(Y-1)} of the Y REG bundles in the X REG bundles corresponding to the AL that is supported by the first terminal device and that is equal to X are d1i+e and d1i+f+E after offset, the resource indexes {j,j+1,... ,j+(X-Y-1)} of the (X-Y) REG bundles are d2i+p and d2i+q+P after offset, e=0, 1, ..., or E, f=0, 1, ..., or F, E+F=Y, p=0, 1, ... , or P, q=0, 1, ..., or Q, and P+Q=X-Y;
when j+(X-Y-1)<W/2, dli+e=i+e, dli+f+E=i+f+E, d2i+p=j+p, and d2i+q+P=j+q+P, or dli+e=i+e+W/2, d1i+f+E=i+f+E+W/2, d2i+p=j+p+W/2, and d2i+q+P=j+q+P+W/2;
when j<W/2≤j+(X-Y-1), d1i+e=i+e, d1i+f+E=i+f+E, d2i+p=j+p, d2i+q+P=j+q+P-W/2, d1i+e=i+e+W/2, dli+f+E=i+f+E+W/2, d2i+p=j+p+W/2, d2i+q+P=j+q+P, and P=W/2-1-j;
when i+(Y-1)<W/2≤j, d1i+e=i+e, d1i+f+E=i+f+E, d2i+p=j+p-W/2, d2i+q+P=j+q+P-W/2, d1i+e=i+e+W/2, dli+f+E=i+f+E+W/2, d2i+p=j+p, and d2i+q+P=j+q+P;
when i<W/2<i+(Y-1), dli+e=i+e, dli+f+E=i+f+E-W/2, d2i+p=j+p-W/2, d2i+q+P=j+q+P-W/2, dli+e=i+e+W/2, dli+f+E=i+f+E, d2i+p=j+p, d2i+q+P=j+q+P, and E=W/2-1-j; and
when i ≥ W/2, dli+e=i+e-W/2, dli+f+E=i+f+E-W/2, d2i+p=j+p-W/2, d2i+q+P=j+q+P-W/2, dli+e=i+e, dli+f+E=i+f+E, d2i+p=j+p, and d2i+q+P=j+q+P.

18. The method according to any one of claims 10 to 17, wherein the method further comprises:
sending, by the network device, control information to the first terminal device on R REG bundles, and the control information to the second terminal device on S REG bundles, wherein the R REG bundles do not overlap with the S REG bundles.

19. A communication apparatus, wherein the communication apparatus comprises a first terminal device, and the first terminal device comprises:
a transceiver module, configured to receive first information from a network device, wherein the first information indicates a first control resource set, a quantity of resource blocks in the first control resource set is N, a quantity of resource element group bundles REG bundles in the first control resource set is W, a bandwidth supported by the first terminal device is less than a bandwidth corresponding to the N resource blocks, the bandwidth supported by the first terminal device is less than a bandwidth supported by a second terminal device, N and W are positive integers; and an aggregation level AL supported by the first terminal device comprises X, and an AL supported by the second terminal device does not comprise X, and/or a quantity of candidate control channels supported by the first terminal device in a first search space SS set is Y1, a quantity of candidate control channels supported by the second terminal device in the first search space set is Z, and Y1 is less than or equal to Z; and
a processing module, configured to monitor a first control channel on M REG bundles in the W REG bundles or on M control channel element CCE resources corresponding to the M REG bundles, wherein M is less than W.

20. The apparatus according to claim 19, wherein X comprises at least one of the following values: 6, 12, 20, and 22.

21. The apparatus according to any one of claims 19 and 20, wherein
when a quantity 1 of symbols in the first control resource set is equal to 3, N is equal to 96, and the bandwidth supported by the first terminal device is greater than or equal to a bandwidth corresponding to N/2 resource blocks, a quantity of candidate control channels whose AL supported by the first terminal device is equal to 20 is 1, a quantity of candidate control channels whose AL supported by the first terminal device is equal to 16 is 1, a quantity of candidate control channels whose AL supported by the first terminal device is equal to 8 is 1 or 2, a quantity of candidate control channels whose AL supported by the first terminal device is equal to 4 is 2 or 3, and/or a quantity of candidate control channels whose AL supported by the first terminal device is equal to 22 is 1;
when a quantity 1 of symbols in the first control resource set is equal to 2, N is equal to 96, and the bandwidth supported by the first terminal device is greater than or equal to a bandwidth corresponding to N/2 resource blocks, a quantity of candidate control channels whose AL supported by the first terminal device is equal to 16 is 1, a quantity of candidate control channels whose AL supported by the first terminal device is equal to 12 is 1, a quantity of candidate control channels whose AL supported by the first terminal device is equal to 8 is 1 or 2, and/or a quantity of candidate control channels whose AL supported by the first terminal device is equal to 4 is 2 or 3;
when a quantity 1 of symbols in the first control resource set is equal to 1, N is equal to 96, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1;
when a quantity 1 of symbols in the first control resource set is equal to 3, N is equal to 48, and the bandwidth supported by the first terminal device is greater than or equal to a bandwidth corresponding to N/2 resource blocks, a quantity of candidate control channels whose AL supported by the first terminal device is equal to 8 is 1, and/or a quantity of candidate control channels whose AL supported by the first terminal device is equal to 4 is 1;
when a quantity 1 of symbols in the first control resource set is equal to 2, N is equal to 48, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1;
when a quantity 1 of symbols in the first control resource set is equal to 1, N is equal to 48, and the bandwidth supported by the first terminal device is greater than or equal to a bandwidth corresponding to N/2 resource blocks, a quantity of candidate control channels whose AL supported by the first terminal device is equal to 2 is 1;
when a quantity 1 of symbols in the first control resource set is equal to 3, N is equal to 96, and the bandwidth supported by the first terminal device is greater than or equal to a bandwidth corresponding to N/4 resource blocks, a quantity of candidate control channels whose AL supported by the first terminal device is equal to 12 is 1, a quantity of candidate control channels whose AL supported by the first terminal device is equal to 8 is 1, and/or a quantity of candidate control channels whose AL supported by the first terminal device is equal to 4 is 1 or 2;
when a quantity 1 of symbols in the first control resource set is equal to 2, N is equal to 96, and the bandwidth supported by the first terminal device is greater than or equal to a bandwidth corresponding to N/4 resource blocks, a quantity of candidate control channels whose AL supported by the first terminal device is equal to 8 is 1, and/or a quantity of candidate control channels whose AL supported by the first terminal device is equal to 4 is 1;
when a quantity 1 of symbols in the first control resource set is equal to 1, N is equal to 96, and the bandwidth supported by the first terminal device is greater than or equal to a bandwidth corresponding to N/4 resource blocks, a quantity of candidate control channels whose AL supported by the first terminal device is equal to 4 is 1;
when a quantity 1 of symbols in the first control resource set is equal to 3, N is equal to 48, and the bandwidth supported by the first terminal device is greater than or equal to a bandwidth corresponding to N/4 resource blocks, a quantity of candidate control channels whose AL supported by the first terminal device is equal to 6 is 1, and/or a quantity of candidate control channels whose AL supported by the first terminal device is equal to 4 is 1;
when a quantity 1 of symbols in the first control resource set is equal to 2, N is equal to 48, and the bandwidth supported by the first terminal device is greater than or equal to a bandwidth corresponding to N/4 resource blocks, a quantity of candidate control channels whose AL supported by the first terminal device is equal to 4 is 1; or
when a quantity 1 of symbols in the first control resource set is equal to 1, N is equal to 48, and the bandwidth supported by the first terminal device is greater than or equal to a bandwidth corresponding to N/4 resource blocks, a quantity of candidate control channels whose AL supported by the first terminal device is equal to 2 is 1.

22. The apparatus according to any one of claims 19 to 21, wherein
indexes of Y REG bundles in X REG bundles corresponding to the AL that is supported by the first terminal device and that is equal to X are {i,i+1,... ,i+(Y-1)}, indexes of remaining (X-Y) REG bundles in the X REG bundles are {j,j+1,... ,j+(X-Y-1)}, and i and j are positive integers; and
i and j meet at least one of the following cases:
when the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=16, B=32, and C=8, when X=8, A=20, B=32, and C=4, when X=8, A=16, B=36, and C=4, when X=4, A=16, B=34, and C=2, when X=4, A=20, B=34, and C=2, when X=4, A=20, B=32, and C=2, when X=4, A=22, B=34, and C=2, when X=20, A=16, B=28, and C=8, when X=22, A=16, B=32, and C=8, and/or when X=24, A=16, B=28, and C=8;
when the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=12, B=16, and C=4, when X=12, A=12, B=20, and C=4, when X=8, A=12, B=24, and C=4, when X=8, A=12, B=20, and C=4, when X=4, A=12, B=20, and C=2, when X=4, A=14, B=22, and C=2, and/or when X=8 and Y=8, indexes of eight REG bundles are i, i=0, 1, 2, ..., or 7, i=(n+A)mod W/2, and A={14,15,18,19,22,23,26,27};
when the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=8, A=6, B=8, and C=2, when X=6, A=6, B=10, and C=2, and/or when X=4, A=6, B=12, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=12, A=8, B=12, and C=4, when X=8, A=8, B=16, and C=4, when X=4, A=8 and C=4, and/or when X=4, A=8, B=18, and C=2;
when the quantity 1 of symbols in the first control resource set is equal to 2, N is equal to 48, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=8, A=6, B=8, and C=2, when X=6, A=6, B=10, and C=2, and/or when X=4, A=6, B=12, and C=2; and
when the quantity 1 of symbols in the first control resource set is equal to 1, N is equal to 48, and the bandwidth supported by the first terminal device is greater than or equal to the bandwidth corresponding to the N/2 resource blocks, i=(n+A)mod W/2, a quantity of candidate control channels corresponding to the AL that is supported by the first terminal device and that is equal to X is C, n indicates an identifier of a cell in which the first terminal device is located, mod indicates a modulo operation, and when X=2, A=2 and C=2.

23. The apparatus according to any one of claims 19 to 21, wherein
indexes of Y CCE resources in X CCE resources corresponding to the AL that is supported by the first terminal device and that is equal to X are {i,i+1,... ,i+(Y-1)}, and indexes of (X-Y) CCE resources in the X CCE resources are {j,j+1,... ,j+(X-Y-1)}; and
i and j meet at least one of the following cases:
when the quantity 1 of symbols in the first control resource set is equal to 3, N is equal to 96, and the bandwidth supported by the first terminal device is greater than or equal to the bandwidth corresponding to the N/2 resource blocks, i=(32+T+A)mod W/2, j=(17-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=16, A=0, B=0, and C=8, when X=8, A=8, B=0, and C=4, when X=8, A=0, B=8, and C=4, when X=4, A=0, B=4, and C=2, when X=4, A=8, B=4, and C=2, when X=4, A=8, B=0, and C=2, when X=4, A=12, B=4, and C=2, when X=20, A=0, B=-8, and C=8, when X=22, A=0, B=0, and C=8, and/or when X=24, A=0, B=-8, and C=8;
when the quantity 1 of symbols in the first control resource set is equal to 2, N is equal to 96, and the bandwidth supported by the first terminal device is greater than or equal to the bandwidth corresponding to the N/2 resource blocks, i=(24+T+A)mod W/2, j=(17-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, n indicates an identifier of a cell in which the first terminal device is located, mod indicates a modulo operation, and when X=16, A=0, B=-16, and C=4, when X=12, A=0, B=-8, and C=4, when X=8, A=0, B=0, and C=4, when X=8, A=0, B=-8, and C=4, when X=4, A=0, B=-8, and C=2, when X=4, A=4, B=-4, and C=2, and/or when X=8 and Y=8, indexes of eight CCE resources are i, i=0, 1, 2, 3, 4, ..., or 7, when i=0 or 1, i=(A+T)mod W/2, and A={28,30}, when i=2, 3, 4, ..., or 7, i=(A-T)mod W/2, and A={5,7,13,15,21,23}, and when n mod W belongs to {2^(1-u) to (2^(1-u)+W/2-1)}, T=1, or when n mod W does not belong to {2^(1-u) to (2^(1-u)+W/2-1)}, T=0;
when the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, j=(9-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0, B=-8, and C=2, when X=6, A=0, B=-4, and C=2, and/or when X=4, A=0, B=0, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(16+T+A)mod W/2, j=(9-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=12, A=0, B=-8, and C=4, when X=8, A=0, B=0, and C=4, when X=4, A=0 and C=4, and/or when X=4, A=0, B=4, and C=2;
when the quantity 1 of symbols in the first control resource set is equal to 2, N is equal to 48, and the bandwidth supported by the first terminal device is greater than or equal to the bandwidth corresponding to the N/2 resource blocks, i=(12+T+A)mod W/2, j=(9-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0, B=-8, and C=2, when X=6, A=0, B=-4, and C=2, and/or when X=4, A=0, B=0, and C=2; and
when the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, j=(5-T+B)mod W/2, Y=C, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=2, A=0 and C=2.

24. The apparatus according to any one of claims 19 to 21, wherein
resource indexes of Y REG bundles in X REG bundles corresponding to the AL that is supported by the first terminal device and that is equal to X are {i,i+1,... i+(Y-1)}, and indexes of remaining (X-Y) REG bundles in the X REG bundles are {j,j+1,...j+(X-Y-1)}; and
i and j meet at least one of the following cases:
when the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=8 and C=16, when X=8, A=16 and C=8, when X=8, A=8, B=20, and C=4, when X=4, A=8, B=20, and C=2, when X=4, A=10, B=22, and C=2, when X=4, A=8, B=22, and C=2, when X=4, A=10, B=20, and C=2, when X=20, A=4 and C=20, when X=22, A=2 and C=22, and/or when X=24, A=2, B=26, and C=22;
when the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=0 and C=16, when X=12, A=4 and C=12, when X=8, A=8 and C=8, when X=8, A=4, B=12, and C=4, when X=4, A=12, 4, or 8, and C=4, when X=4, A=10, B=14, and C=2, and/or when X=4, A=6, B=14, and C=2;
when the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n=nCelliD, nCelliD indicates an identifier of a cell in which the first terminal device is located, mod indicates a modulo operation, and when X=8, A=6, B=8, and C=2, when X=6, A=6, B=10, and C=2, and/or when X=4, A=6, B=12, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2, a quantity of candidate control channels corresponding to the AL that is supported by the first terminal device and that is equal to X is C, n indicates an identifier of a cell in which the first terminal device is located, mod indicates a modulo operation, and when X=12, A=0 and C=12, when X=8, A=4 and C=8, when X=4, A=8 and C=4, and/or when X=4, A=4 and C=4;
when the quantity 1 of symbols in the first control resource set is equal to 2, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n=nCelliD, nCelliD indicates an identifier of a cell in which the first terminal device is located, mod indicates a modulo operation, and when X=8, A=0 and C=8, when X=6, A=2 and C=6, and/or when X=4, A=4 and C=4; and
when the quantity 1 of symbols in the first control resource set is equal to 1, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n=nCelliD, nCelliD indicates an identifier of a cell in which the first terminal device is located, mod indicates a modulo operation, and when X=2, A=2 and C=2.

25. The apparatus according to any one of claims 19 to 21, wherein
indexes of Y CCE resources in X CCE resources corresponding to the AL that is supported by the first terminal device and that is equal to X are {i,i+1,... ,i+(Y-1)}, and indexes of (X-Y) CCE resources in the X CCE resources are {j,j+1,... ,j+(X-Y-1)}; and
when the quantity 1 of symbols in the first control resource set is equal to 3, N is equal to 96, and the bandwidth supported by the first terminal device is greater than or equal to the bandwidth corresponding to the N/2 resource blocks, i=(16+T+A)mod W/2, j=(32+T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=16, A=0 and C=16, when X=8, A=0, B=0, and C=0, when X=8, A=0, B=8, and C=4, when X=4, A=0, B=8, and C=2, when X=4, A=4, B=10, and C=2, when X=4, A=0, B=10, and C=2, when X=4, A=4, B=8, and C=2, when X=20, A=-8 and C=8, when X=22, A=-12 and C=10, and/or when X=24, A=-12, B=5, and C=22;
when the quantity 1 of symbols in the first control resource set is equal to 2, N is equal to 96, and the bandwidth supported by the first terminal device is greater than or equal to the bandwidth corresponding to the N/2 resource blocks, i=(8+T+A)mod W/2, j=(24+T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=16, A=-8 and C=16, when X=12, A=0 and C=12, when X=8, A=8 and C=8, when X=8, A=0, B=0, and C=4, when X=4, A=0, 8, or 16, and C=4, when X=4, A=12, B=4, and C=2, and/or when X=4, A=-4, B=4, and C=2;
when the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, j=(9-T+B)mod W/2, Y=C, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0, B=-8, and C=2, when X=6, A=0, B=-4, and C=2, and/or when X=4, A=0, B=0, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(8+T+A)mod W/2, j=(16+T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=12, A=0 and C=12, when X=8, A=8 and C=8, when X=4, A=16 and C=4, and/or when X=4, A=8 and C=4;
when the quantity 1 of symbols in the first control resource set is equal to 2, N is equal to 48, and the bandwidth supported by the first terminal device is greater than or equal to the bandwidth corresponding to the N/2 resource blocks, i=(0+T+A)mod W/2, Y=C, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0 and C=8, when X=6, A=4 and C=6, and/or when X=4, A=8 and C=4; and
when the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, Y=C, when a result obtained from n mod W is greater than or equal to 2^{1-u} and less than or equal to 2^{1-u}+W/2-1, T=1, or when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=2, A=4 and C=2.

26. The apparatus according to claim 22 or 24, wherein
the resource indexes {i,i+1,... ,i+(Y-1)} of the Y REG bundles in the X REG bundles corresponding to the AL that is supported by the first terminal device and that is equal to X are dli+e and dli+f+E after offset, the resource indexes {j,j+1,... ,j+(X-Y-1)} of the (X-Y) REG bundles are d2i+p and d2i+q+P after offset, e=0, 1, ..., or E, f=0, 1, ..., or F, E+F=Y, p=0, 1, ..., or P, q=0, 1, ..., or Q, and P+Q=X-Y;
when j+(X-Y-1)<W/2, dli+e=i+e, dli+f+E=i+f+E, d2i+p=j+p, and d2i+q+P=j+q+P, or dli+e=i+e+W/2, dli+f+E=i+f+E+W/2, d2i+p=j+p+W/2, and d2i+q+P=j+q+P+W/2;
when j<W/2≤j+(X-Y-1), d1i+e=i+e, d1i+f+E=i+f+E, d2i+p=j+p, d2i+q+P=j+q+P-W/2, d1i+e=i+e+W/2, dli+f+E=i+f+E+W/2, d2i+p=j+p+W/2, d2i+q+P=j+q+P, and P=W/2-1-j;
when i+(Y-1)<W/2≤j, d1i+e=i+e, d1i+f+E=i+f+E, d2i+p=j+p-W/2, d2i+q+P=j+q+P-W/2, d1i+e=i+e+W/2, dli+f+E=i+f+E+W/2, d2i+p=j+p, and d2i+q+P=j+q+P;
when i<W/2<i+(Y-1), dli+e=i+e, dli+f+E=i+f+E-W/2, d2i+p=j+p-W/2, d2i+q+P=j+q+P-W/2, dli+e=i+e+W/2, dli+f+E=i+f+E, d2i+p=j+p, d2i+q+P=j+q+P, and E=W/2-1-j; and
when i ≥ W/2, dli+e=i+e-W/2, dli+f+E=i+f+E-W/2, d2i+p=j+p-W/2, d2i+q+P=j+q+P-W/2, dli+e=i+e, dli+f+E=i+f+E, d2i+p=j+p, and d2i+q+P=j+q+P.

27. The apparatus according to any one of claims 19 to 26, wherein the transceiver module is further configured to receive control information on R REG bundles, wherein the R REG bundles do not overlap with S REG bundles, and the S REG bundles are used by the second terminal device to receive the control information.

28. A communication apparatus, wherein the communication apparatus comprises a network device, and the network device comprises:
a processing module, configured to determine a first control resource set for a first terminal device, wherein a quantity of resource blocks in the first control resource set is N, a quantity of resource element group bundles REG bundles in the first control resource set is W, a bandwidth supported by the first terminal device is less than a bandwidth corresponding to the N resource blocks, the bandwidth supported by the first terminal device is less than a bandwidth supported by a second terminal device, N and W are positive integers; and an aggregation level AL supported by the first terminal device comprises X, and an AL supported by the second terminal device does not comprise X, and/or a quantity of candidate control channels supported by the first terminal device in a first search space SS set is Y, a quantity of candidate control channels supported by the second terminal device in the first search space set is Z, and Y is less than or equal to Z;
a transceiver module, configured to send first information to the first terminal device, wherein the first information indicates the first control resource set, and
the transceiver module is further configured to send a first control channel on M REG bundles in the W REG bundles or on M control channel element CCE resources corresponding to the M REG bundles, wherein M is less than W.

29. The apparatus according to claim 28, wherein X comprises at least one of the following values: 6, 12, 20, and 22.

30. The apparatus according to any one of claims 28 and 29, wherein
when a quantity 1 of symbols in the first control resource set is equal to 3, N is equal to 96, and the bandwidth supported by the first terminal device is greater than or equal to a bandwidth corresponding to N/2 resource blocks, a quantity of candidate control channels whose AL supported by the first terminal device is equal to 20 is 1, a quantity of candidate control channels whose AL supported by the first terminal device is equal to 16 is 1, a quantity of candidate control channels whose AL supported by the first terminal device is equal to 8 is 1 or 2, a quantity of candidate control channels whose AL supported by the first terminal device is equal to 4 is 2 or 3, and/or a quantity of candidate control channels whose AL supported by the first terminal device is equal to 22 is 1;
when a quantity 1 of symbols in the first control resource set is equal to 2, N is equal to 96, and the bandwidth supported by the first terminal device is greater than or equal to a bandwidth corresponding to N/2 resource blocks, a quantity of candidate control channels whose AL supported by the first terminal device is equal to 16 is 1, a quantity of candidate control channels whose AL supported by the first terminal device is equal to 12 is 1, a quantity of candidate control channels whose AL supported by the first terminal device is equal to 8 is 1 or 2, and/or a quantity of candidate control channels whose AL supported by the first terminal device is equal to 4 is 2 or 3;
when a quantity 1 of symbols in the first control resource set is equal to 1, N is equal to 96, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1;
when a quantity 1 of symbols in the first control resource set is equal to 3, N is equal to 48, and the bandwidth supported by the first terminal device is greater than or equal to a bandwidth corresponding to N/2 resource blocks, a quantity of candidate control channels whose AL supported by the first terminal device is equal to 8 is 1, and/or a quantity of candidate control channels whose AL supported by the first terminal device is equal to 4 is 1;
when a quantity 1 of symbols in the first control resource set is equal to 2, N is equal to 48, and the bandwidth supported by the first terminal device is greater than or equal to a bandwidth corresponding to N/2 resource blocks, a quantity of candidate control channels whose AL supported by the first terminal device is equal to 6 is 1, and/or a quantity of candidate control channels whose AL supported by the first terminal device is equal to 4 is 1;
when a quantity 1 of symbols in the first control resource set is equal to 1, N is equal to 48, and the bandwidth supported by the first terminal device is greater than or equal to a bandwidth corresponding to N/2 resource blocks, a quantity of candidate control channels whose AL supported by the first terminal device is equal to 2 is 1;
when a quantity 1 of symbols in the first control resource set is equal to 3, N is equal to 96, and the bandwidth supported by the first terminal device is greater than or equal to a bandwidth corresponding to N/4 resource blocks, a quantity of candidate control channels whose AL supported by the first terminal device is equal to 12 is 1, a quantity of candidate control channels whose AL supported by the first terminal device is equal to 8 is 1, and/or a quantity of candidate control channels whose AL supported by the first terminal device is equal to 4 is 1 or 2;
when a quantity 1 of symbols in the first control resource set is equal to 2, N is equal to 96, and the bandwidth supported by the first terminal device is greater than or equal to a bandwidth corresponding to N/4 resource blocks, a quantity of candidate control channels whose AL supported by the first terminal device is equal to 8 is 1, and/or a quantity of candidate control channels whose AL supported by the first terminal device is equal to 4 is 1;
when a quantity 1 of symbols in the first control resource set is equal to 1, N is equal to 96, and the bandwidth supported by the first terminal device is greater than or equal to a bandwidth corresponding to N/4 resource blocks, a quantity of candidate control channels whose AL supported by the first terminal device is equal to 4 is 1;
when a quantity 1 of symbols in the first control resource set is equal to 3, N is equal to 48, and the bandwidth supported by the first terminal device is greater than or equal to a bandwidth corresponding to N/4 resource blocks, a quantity of candidate control channels whose AL supported by the first terminal device is equal to 6 is 1, and/or a quantity of candidate control channels whose AL supported by the first terminal device is equal to 4 is 1;
when a quantity 1 of symbols in the first control resource set is equal to 2, N is equal to 48, and the bandwidth supported by the first terminal device is greater than or equal to a bandwidth corresponding to N/4 resource blocks, a quantity of candidate control channels whose AL supported by the first terminal device is equal to 4 is 1; or
when a quantity 1 of symbols in the first control resource set is equal to 1, N is equal to 48, and the bandwidth supported by the first terminal device is greater than or equal to a bandwidth corresponding to N/4 resource blocks, a quantity of candidate control channels whose AL supported by the first terminal device is equal to 2 is 1.

31. The apparatus according to any one of claims 28 to 30, wherein
indexes of Y REG bundles in X REG bundles corresponding to the AL that is supported by the first terminal device and that is equal to X are {i,i+1,... ,i+(Y-1)}, indexes of remaining (X-Y) REG bundles in the X REG bundles are {j,j+1,... ,j+(X-Y-1)}, and i and j are positive integers; and
i and j meet at least one of the following cases:
when the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=16, B=32, and C=8, when X=8, A=20, B=32, and C=4, when X=8, A=16, B=36, and C=4, when X=4, A=16, B=34, and C=2, when X=4, A=20, B=34, and C=2, when X=4, A=20, B=32, and C=2, when X=4, A=22, B=34, and C=2, when X=20, A=16, B=28, and C=8, when X=22, A=16, B=32, and C=8, and/or when X=24, A=16, B=28, and C=8;
when the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=12, B=16, and C=4, when X=12, A=12, B=20, and C=4, when X=8, A=12, B=24, and C=4, when X=8, A=12, B=20, and C=4, when X=4, A=12, B=20, and C=2, when X=4, A=14, B=22, and C=2, and/or when X=8 and Y=8, indexes of eight REG bundles are i, i=0, 1, 2, ..., or 7, i=(n+A)mod W/2, and A={14,15,18,19,22,23,26,27};
when the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=8, A=6, B=8, and C=2, when X=6, A=6, B=10, and C=2, and/or when X=4, A=6, B=12, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=12, A=8, B=12, and C=4, when X=8, A=8, B=16, and C=4, when X=4, A=8 and C=4, and/or when X=4, A=8, B=18, and C=2;
when the quantity 1 of symbols in the first control resource set is equal to 2, N is equal to 48, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=8, A=6, B=8, and C=2, when X=6, A=6, B=10, and C=2, and/or when X=4, A=6, B=12, and C=2; and
when the quantity 1 of symbols in the first control resource set is equal to 1, N is equal to 48, and the bandwidth supported by the first terminal device is greater than or equal to the bandwidth corresponding to the N/2 resource blocks, i=(n+A)mod W/2, a quantity of candidate control channels corresponding to the AL that is supported by the first terminal device and that is equal to X is C, n indicates an identifier of a cell in which the first terminal device is located, mod indicates a modulo operation, and when X=2, A=2 and C=2.

32. The apparatus according to any one of claims 28 to 30, wherein
indexes of Y CCE resources in X CCE resources corresponding to the AL that is supported by the first terminal device and that is equal to X are {i,i+1,... ,i+(Y-1)}, and indexes of (X-Y) CCE resources in the X CCE resources are {j,j+1,... ,j+(X-Y-1)}; and
i and j meet at least one of the following cases:
when the quantity 1 of symbols in the first control resource set is equal to 3, N is equal to 96, and the bandwidth supported by the first terminal device is greater than or equal to the bandwidth corresponding to the N/2 resource blocks, i=(32+T+A)mod W/2, j=(17-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=16, A=0, B=0, and C=8, when X=8, A=8, B=0, and C=4, when X=8, A=0, B=8, and C=4, when X=4, A=0, B=4, and C=2, when X=4, A=8, B=4, and C=2, when X=4, A=8, B=0, and C=2, when X=4, A=12, B=4, and C=2, when X=20, A=0, B=-8, and C=8, when X=22, A=0, B=0, and C=8, and/or when X=24, A=0, B=-8, and C=8;
when the quantity 1 of symbols in the first control resource set is equal to 2, N is equal to 96, and the bandwidth supported by the first terminal device is greater than or equal to the bandwidth corresponding to the N/2 resource blocks, i=(24+T+A)mod W/2, j=(17-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, n indicates an identifier of a cell in which the first terminal device is located, mod indicates a modulo operation, and when X=16, A=0, B=-16, and C=4, when X=12, A=0, B=-8, and C=4, when X=8, A=0, B=0, and C=4, when X=8, A=0, B=-8, and C=4, when X=4, A=0, B=-8, and C=2, when X=4, A=4, B=-4, and C=2, and/or when X=8 and Y=8, indexes of eight CCE resources are i, i=0, 1, 2, 3, 4, ..., or 7, when i=0 or 1, i=(A+T)mod W/2, and A={28,30}, when i=2, 3, 4, ..., or 7, i=(A-T)mod W/2, and A={5,7,13,15,21,23}, and when n mod W belongs to {2^(1-u) to (2^(1-u)+W/2-1)}, T=1, or when n mod W does not belong to {2^(1-u) to (2^(1-u)+W/2-1)}, T=0;
when the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, j=(9-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0, B=-8, and C=2, when X=6, A=0, B=-4, and C=2, and/or when X=4, A=0, B=0, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(16+T+A)mod W/2, j=(9-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=12, A=0, B=-8, and C=4, when X=8, A=0, B=0, and C=4, when X=4, A=0 and C=4, and/or when X=4, A=0, B=4, and C=2;
when the quantity 1 of symbols in the first control resource set is equal to 2, N is equal to 48, and the bandwidth supported by the first terminal device is greater than or equal to the bandwidth corresponding to the N/2 resource blocks, i=(12+T+A)mod W/2, j=(9-T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0, B=-8, and C=2, when X=6, A=0, B=-4, and C=2, and/or when X=4, A=0, B=0, and C=2; and
when the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, j=(5-T+B)mod W/2, Y=C, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=2, A=0 and C=2.

33. The apparatus according to any one of claims 28 to 30, wherein
resource indexes of Y REG bundles in X REG bundles corresponding to the AL that is supported by the first terminal device and that is equal to X are {i,i+1,... i+(Y-1)}, and indexes of remaining (X-Y) REG bundles in the X REG bundles are {j,j+1,...j+(X-Y-1)}; and
i and j meet at least one of the following cases:
when the quantity 1 of symbols in the first control resource set is equal to 3, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=8 and C=16, when X=8, A=16 and C=8, when X=8, A=8, B=20, and C=4, when X=4, A=8, B=20, and C=2, when X=4, A=10, B=22, and C=2, when X=4, A=8, B=22, and C=2, when X=4, A=10, B=20, and C=2, when X=20, A=4 and C=20, when X=22, A=2 and C=22, and/or when X=24, A=2, B=26, and C=22;
when the quantity 1 of symbols in the first control resource set is equal to 2, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n indicates an identifier of a cell in which the first terminal device is located, mod indicates a modulo operation, and when X=16, A=0 and C=16, when X=12, A=4 and C=12, when X=8, A=8 and C=8, when X=8, A=4, B=12, and C=4, when X=4, A=12, 4, or 8, and C=4, when X=4, A=10, B=14, and C=2, and/or when X=4, A=6, B=14, and C=2;
when the quantity 1 of symbols in the first control resource set is equal to 1, N is equal to 96, and the bandwidth supported by the first terminal device is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n=nCelliD, nCelliD indicates an identifier of a cell in which the first terminal device is located, mod indicates a modulo operation, and when X=8, A=6, B=8, and C=2, when X=6, A=6, B=10, and C=2, and/or when X=4, A=6, B=12, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(n+A)mod W/2, a quantity of candidate control channels corresponding to the AL that is supported by the first terminal device and that is equal to X is C, n indicates an identifier of a cell in which the first terminal device is located, mod indicates a modulo operation, and when X=12, A=0 and C=12, when X=8, A=4 and C=8, when X=4, A=8 and C=4, and/or when X=4, A=4 and C=4;
when the quantity 1 of symbols in the first control resource set is equal to 2, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n=nCelliD, nCelliD indicates an identifier of a cell in which the first terminal device is located, mod indicates a modulo operation, and when X=8, A=0 and C=8, when X=6, A=2 and C=6, and/or when X=4, A=4 and C=4; and
when the quantity 1 of symbols in the first control resource set is equal to 1, N is equal to 48, and the bandwidth supported by the first terminal device is less than the bandwidth corresponding to the N resource blocks and is greater than or equal to the bandwidth corresponding to the N/2 resource blocks, i=(n+A)mod W/2, j=(n+B)mod W/2, a quantity of candidate control channels corresponding to the AL that is supported by the first terminal device and that is equal to X is C, n=nCelliD, nCelliD indicates an identifier of a cell in which the first terminal device is located, mod indicates a modulo operation, and when X=2, A=2 and C=2.

34. The apparatus according to any one of claims 28 to 30, wherein
indexes of Y CCE resources in X CCE resources corresponding to the AL that is supported by the first terminal device and that is equal to X are {i,i+1,... ,i+(Y-1)}, and indexes of (X-Y) CCE resources in the X CCE resources are {j,j+1,... ,j+(X-Y-1)}; and
when the quantity 1 of symbols in the first control resource set is equal to 3, N is equal to 96, and the bandwidth supported by the first terminal device is greater than or equal to the bandwidth corresponding to the N/2 resource blocks, i=(16+T+A)mod W/2, j=(32+T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=16, A=0 and C=16, when X=8, A=0, B=0, and C=0, when X=8, A=0, B=8, and C=4, when X=4, A=0, B=8, and C=2, when X=4, A=4, B=10, and C=2, when X=4, A=0, B=10, and C=2, when X=4, A=4, B=8, and C=2, when X=20, A=-8 and C=8, when X=22, A=-12 and C=10, and/or when X=24, A=-12, B=5, and C=22;
when the quantity 1 of symbols in the first control resource set is equal to 2, N is equal to 96, and the bandwidth supported by the first terminal device is greater than or equal to the bandwidth corresponding to the N/2 resource blocks, i=(8+T+A)mod W/2, j=(24+T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=16, A=-8 and C=16, when X=12, A=0 and C=12, when X=8, A=8 and C=8, when X=8, A=0, B=0, and C=4, when X=4, A=0, 8, or 16, and C=4, when X=4, A=12, B=4, and C=2, and/or when X=4, A=-4, B=4, and C=2;
when the quantity 1 of symbols in the first control resource set is equal to 1, N is equal to 96, and the bandwidth supported by the first terminal device is greater than or equal to the bandwidth corresponding to the N/2 resource blocks, i=(12+T+A)mod W/2, j=(9-T+B)mod W/2, Y=C, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0, B=-8, and C=2, when X=6, A=0, B=-4, and C=2, and/or when X=4, A=0, B=0, and C=2;
when the quantity 1 of symbols in the first control resource set is equal to 3, N is equal to 48, and the bandwidth supported by the first terminal device is greater than or equal to the bandwidth corresponding to the N/2 resource blocks, i=(8+T+A)mod W/2, j=(16+T+B)mod W/2, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=12, A=0 and C=12, when X=8, A=8 and C=8, when X=4, A=16 and C=4, and/or when X=4, A=8 and C=4;
when the quantity 1 of symbols in the first control resource set is equal to 2, N is equal to 48, and the bandwidth supported by the first terminal device is greater than or equal to the bandwidth corresponding to the N/2 resource blocks, i=(0+T+A)mod W/2, Y=C, when a result obtained from n mod W is greater than or equal to 2^{1-u} and less than or equal to 2^{1-u}+W/2-1, T=1, when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=8, A=0 and C=8, when X=6, A=4 and C=6, and/or when X=4, A=8 and C=4; and
when the quantity 1 of symbols in the first control resource set is equal to 1, N is equal to 48, and the bandwidth supported by the first terminal device is greater than or equal to the bandwidth corresponding to the N/2 resource blocks, i=(4+T+A)mod W/2, Y=C, when a result obtained from n mod W is greater than or equal to 2^{1-u} and less than or equal to 2^{1-u}+W/2-1, T=1, or when a result obtained from n mod W is less than 2^{1-u} or greater than 2^{1-u}+W/2-1, T=0, a quantity of candidate control channels corresponding to the AL that is supported by the first terminal device and that is equal to X is C, n indicates an identifier of a cell in which the first terminal device is located, mod indicates a modulo operation, and when X=2, A=4 and C=2.

35. The apparatus according to claim 31 or 33, wherein
the resource indexes {i,i+1,... ,i+(Y-1)} of the Y REG bundles in the X REG bundles corresponding to the AL that is supported by the first terminal device and that is equal to X are d1i+e and d1i+f+E after offset, the resource indexes {j,j+1,... ,j+(X-Y-1)} of the (X-Y) REG bundles are d2i+p and d2i+q+P after offset, e=0, 1, ... , or E, f=0, 1, ..., or F, E+F=Y, p=0, 1, ..., or P, q=0, 1, ..., or Q, and P+Q=X-Y;
when j+(X-Y-1)<W/2, dli+e=i+e, dli+f+E=i+f+E, d2i+p=j+p, and d2i+q+P=j+q+P, or dli+e=i+e+W/2, dli+f+E=i+f+E+W/2, d2i+p=j+p+W/2, and d2i+q+P=j+q+P+W/2;
when j<W/2≤j+(X-Y-1), d1i+e=i+e, d1i+f+E=i+f+E, d2i+p=j+p, d2i+q+P=j+q+P-W/2, d1i+e=i+e+W/2, dli+f+E=i+f+E+W/2, d2i+p=j+p+W/2, d2i+q+P=j+q+P, and P=W/2-1-j;
when i+(Y-1)<W/2≤j, d1i+e=i+e, d1i+f+E=i+f+E, d2i+p=j+p-W/2, d2i+q+P=j+q+P-W/2, d1i+e=i+e+W/2, dli+f+E=i+f+E+W/2, d2i+p=j+p, and d2i+q+P=j+q+P;
when i<W/2<i+(Y-1), dli+e=i+e, dli+f+E=i+f+E-W/2, d2i+p=j+p-W/2, d2i+q+P=j+q+P-W/2, dli+e=i+e+W/2, dli+f+E=i+f+E, d2i+p=j+p, d2i+q+P=j+q+P, and E=W/2-1-j; and
when i ≥ W/2, dli+e=i+e-W/2, dli+f+E=i+f+E-W/2, d2i+p=j+p-W/2, d2i+q+P=j+q+P-W/2, dli+e=i+e, dli+f+E=i+f+E, d2i+p=j+p, and d2i+q+P=j+q+P.

36. The apparatus according to any one of claims 28 to 35, wherein
the transceiver module is further configured to send control information to the first terminal device on R REG bundles, and the control information to the second terminal device on S REG bundles, wherein the R REG bundles do not overlap with the S REG bundles.

37. A communication apparatus, comprising a transceiver module and a processing module, wherein the processing module is configured to implement the method according to any one of claims 1 to 9.

38. A communication apparatus, comprising a transceiver module and a processing module, wherein the processing module is configured to implement the method according to any one of claims 10 to 18.

39. A communication apparatus, comprising a processor and a communication interface, wherein the communication interface is coupled to the processor, and the processor is configured to perform the method according to any one of claims 1 to 9.

40. A communication apparatus, comprising a processor and a communication interface, wherein the communication interface is coupled to the processor, and the processor is configured to perform the method according to any one of claims 10 to 18.

41. A computer-readable storage medium, comprising instructions, wherein when the instructions are run on a computer, the computer is enabled to perform the method according to any one of claims 1 to 9.

42. A computer-readable storage medium, comprising instructions, wherein when the instructions are run on a computer, the computer is enabled to perform the method according to any one of claims 10 to 18.
